(19) **Europäisches Patentamt**

**European Patent Office**

**Office européen des brevets**

(11) **EP 0 936 516 B1**

(12) **EUROPEAN PATENT SPECIFICATION**

(45) Date of publication and mention
of the grant of the patent:
**23.01.2002 Bulletin 2002/04**

(51) Int Cl.⁷: **G05D 1/00**

(21) Application number: **99106189.6**

(22) Date of filing: **10.12.1990**

(54) **Integrated vehicle positioning and navigation system, apparatus and method**

Integriertes Fahrzeugpositionier- und -navigationssystem, dessen Vorrichtung und Verfahren

Procédé, appareil et système de navigation et de positionnement intégrés pour véhicules

(84) Designated Contracting States:
**DE FR GB SE**

(30) Priority: **11.12.1989 WOPCT/US89/05580**

(43) Date of publication of application:
**18.08.1999 Bulletin 1999/33**

(62) Document number(s) of the earlier application(s) in accordance with Art. 76 EPC:
**95110796.0 / 0 679 973**
**91902277.2 / 0 507 845**

(73) Proprietor: **CATERPILLAR INC.**
**Peoria Illinois 61629-6490 (US)**

(72) Inventors:
• **Kyrtsos, Christos T.**
  **Peoria, Illinois 61615 (US)**
• **Gudat, Adam J.**
  **Edelstein, Illinois 61516 (US)**
• **Christensen, Dana A.**
  **Derby, DE12 7DB (GB)**
• **Friedrich, Douglas W.**
  **Pekin, Illinois 61554 (US)**
• **Stafford, Darrell E.**
  **Oregon 97527 (US)**
• **Sennott, James W.**
  **Bloomington, Illinois 61701 (US)**
• **Bradbury, Walter J.**
  **Dunlap, Illinois 61525 (US)**
• **Clow, Richard G.**
  **Phoenix, Arizona 85027 (US)**
• **Devier, Lonnie J.**
  **Kobe (JP)**
• **Kemner, Carl A.**
  **Peria Heights, Illinois 61614 (US)**

• **Kleimenhagen, Karl W.**
  **Peoria, Illinois 61614 (US)**
• **Koehrsen, Craig L.**
  **Queensland 4035 (AU)**
• **Lay, Norman K.**
  **Peoria, Illinois 61615 (US)**
• **Peterson, Joel L.**
  **East Peoria, Illinois 61611 5418 (US)**
• **Rao, Prithvi N.**
  **Pittsburgh, Pennsylvania 15206 (US)**
• **Schmidt, Larry E.**
  **Illinois 61523 (US)**
• **Shaffer, Gary K.**
  **Butler, Pennsylvania 16001 (US)**
• **Shi, WenFan**
  **Pittsburgh, Pennsylvania 15213 (US)**
• **Shin, Dong Hun**
  **Guro-gu, Guro 1, Don S, Seoul (KR)**
• **Singh, Sanjiv J.**
  **Pittsburgh, Pennsylvania 15217 (US)**
• **Weinbeck, Louis J.**
  **Livingston, Texas 77399-1036 (US)**
• **West, Jay H.**
  **Junction City, Kansas 66441 (US)**
• **Whittaker, William L.**
  **Pittsburgh, Pennsylvania 15207 (US)**
• **Wu, BaoXin (NMI)**
  **Pittsburgh, Pennsylvania 15213 (US)**

(74) Representative: **Haley, Stephen et al**
**Gill Jennings & Every, Broadgate House, 7 Eldon Street**
**London EC2M 7LH (GB)**

(56) References cited:
**EP-A- 0 221 643**

- **C. ISIK ET AL.: "Pilot level of a hierarchical controller for an unmanned mobile robot" IEEE JOURNAL OF ROBOTICS AND AUTOMATION, vol. 4, no. 3, pages 241-255, XP002106462 NEW YORK US**

**Description**

Background of the Invention

1. Field of the Invention

The present invention relates to positioning systems, and more particularly, to a positioning system and method for determining the terrestrial position of an autonomous vehicle on or near the planet Earth's surface.

2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates or vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift.

Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

EP-A-221643 discloses a vision navigation system for free-roaming mobile robot, in which the robot has a plurality of light beacons mounted to identify its location to fixed overhead viewing cameras. The system incorporates a hierarchal control system. IEEE General of Robotics and Automation, volume 4, number 3, June 1988 discloses a hierarchal controller for an unmanned robot with a task related control.

According to the present invention, there is provided a multi-tasked navigation system (406) for an autonomous land based vehicle (102) comprising:

(1) a main task means (5316) for coordinating inter-task communications including means for performing high-level decision making;

(2) a monitor vehicle status task means (5308) for reading a communications port (5326) to the vehicle (102) including means for reporting vehicle mode changes and means for reporting system to vehicle communication state, to the main task means (5316) and further including means for writing a vehicle status message to a global memory structure (5400);

(3) a scanner task means (5310) for providing data from an obstacle detection system (40) to the main task means (5316);

(4) a get directives task means (5320) for interfacing the system (406) to a host (4020, including means for receiving and means for decoding messages from the host (402), and means for communicating a received and decoded message to another task means;

(5) a message to host task means (5318) for interfacing the system (406) to the host (402), including means for forming and means for communicating messages from the system to the host;

(6) a V.S. position task means (5322) for interfacing a vehicle positioning system (1000) to the system (406), including means for reading output from the vehicle positioning system (1000), checksum means for checking the output for correctness, writing means for putting checked output into the global memory structure (5400), and fault indicating means for sending a message to the main task means (5316) whenever a position fault occurs;

(7) a V.S. posture task means (5324) for monitoring the vehicle's position while the vehicle (102) is tracking, including means for maintaining a plurality of postures in a posture buffer (5410) of the global memory structure (5400); and

(8) a tracker task means (5306) for calculating steer and speed corrections for the vehicle (102), including means for reading position information from the position buffer (5412) of the global memory structure (5400), means for reading posture information from the posture buffer (5410) of the global memory structure (5400), and means for sending the steer and speed corrections to the vehicle (102) to control the vehicle's course.

The present invention also provides a method of operating a multi-tasked navigation system (406) for an autonomous land based vehicle (102), comprising the steps of:

(9) coordinating (5316) inter-task communications;
(10) performing (5316) high-level decision making;
(11) reading (5308) a communications port (5326) to the vehicle (102);
(12) reporting (5308) vehicle mode changes to a main task (5316);
(13) reporting (5308) system-to-vehicle communication state to a main task (5316);
(14) writing (5308) a vehicle status message to a global memory structure (5400);
(15) providing (5310) data from an obstacle detection system (40) to the main task (5316);
(16) interfacing (5320) the system (406) to a host (402) by receiving and decoding messages from the host (402), and communicating a received and decoded message to another task;
(17) interfacing (5318) the system (406) to the host (402) by forming and communicating messages from the system (406) to the host (402) ;
(18) interfacing (5322) a vehicle positioning system (1000) to the system (406) by reading output from the vehicle positioning system (1000), checksum checking the output for correctness, writing checked output into a position buffer (5412) in a global memory structure (5400), and fault indicating by sending a message to the main task (5316) whenever a position fault occurs;
(19) monitoring (5324) the vehicle's position while the vehicle is tracking by maintaining a plurality of postures in a posture buffer (5410) of the global memory structure (5400); and
(20) calculating (5306) steer and speed corrections for the vehicle (102) by reading position information from the position buffer (5412) of the global memory structure (5400), reading posture information from the posture buffer (5410) of the global memory structure (5400), and calculating and sending the steer and speed corrections to the vehicle (102) to control the vehicle's course.

The autonomous vehicles can be stationary or moving. Moreover, the autonomous vehicles can be at or near the Earth's surface. In other words, the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated herein.

Brief Description of the Drawings

The present invention as defined in the claims can be better understood with reference to the text and to the following drawings.

Figure 1 illustrates a block diagram of the preferred embodiment of the present invention;
Figure 1A is a block diagram 100A of the operational GPS satellites in the NAVSTAR GPS;
Figure 2 illustrates four, simultaneous, navigation equations regarding four GPS satellites of the NAVSTAR GPS;
Figure 3 is a block diagram of a typical autonomous work site;
Figure 4 is a block diagram of the interrelationships between a navigator, a vehicle VPS architecture, and vehicle controls of the present invention;
Figure 5 is a block diagram illustrating elements in an autonomous control system;
Figure 6 is a block diagram of the operation of a GPS; Figure 7 is a block diagram of a GPS processing system of the preferred embodiment;
Figure 8 is a flow diagram of the GPS processing system of Figure 7;
Figure 9 is a block diagram of an MPS, including an odometer 902 and an inertial reference unit (IRU) 904;
Figure 10 is a block diagram of the VPS;
Figure 11 is a diagram of an embodiment of the posture ring buffer;
Figure 12 is a block diagram of a path tracking control architecture/hardware;

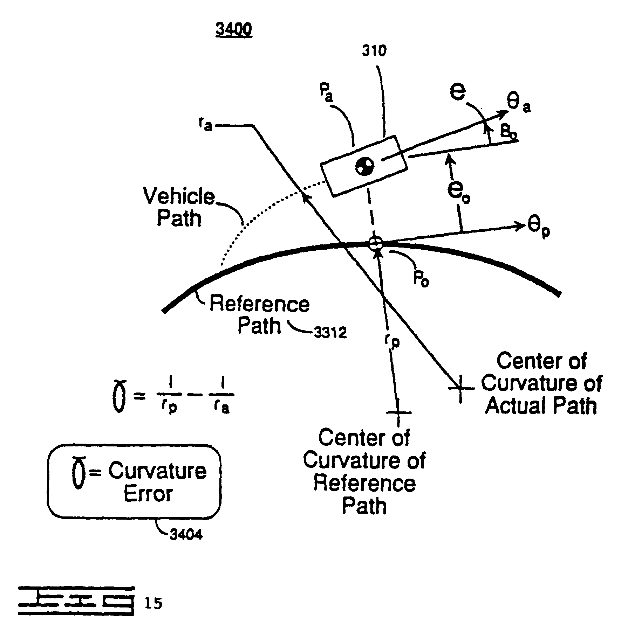

Figure 13 is a diagram showing relevant postures in steering planning cycle;
Figure 14 is a diagram showing how an error vector including curvature is computed;

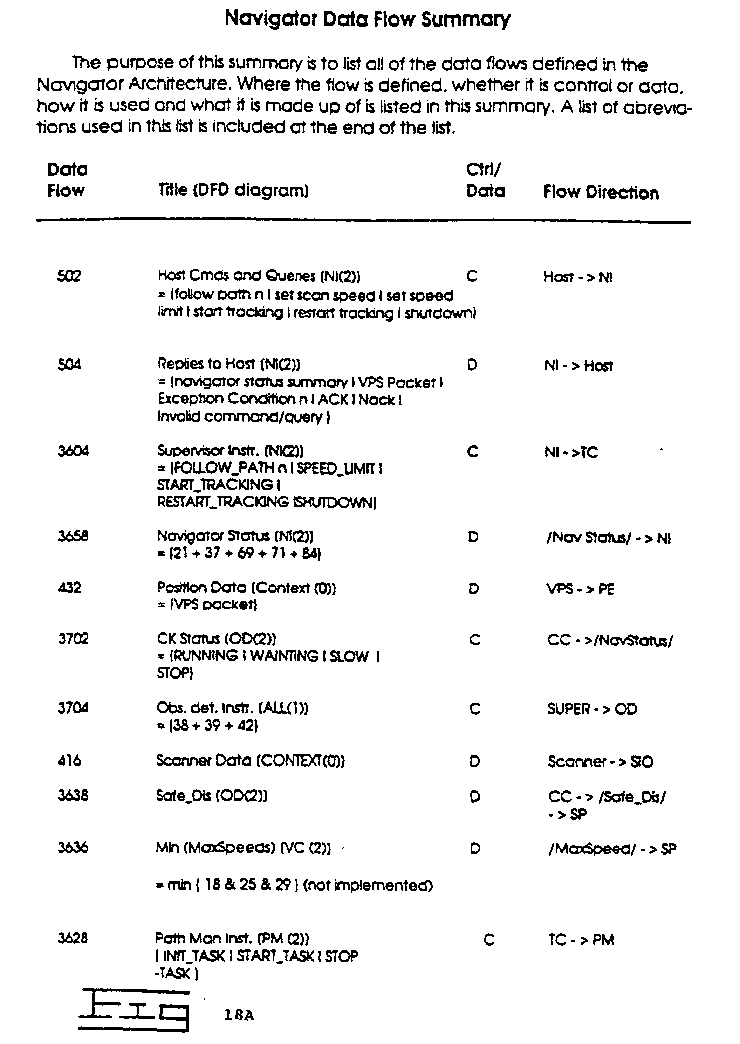

Figure 15 is a diagram showing how an error vector including curvature is computed with the vehicle path included;
Figure 16 is a context diagram of the navigator of the present invention;
Figure 17 is a context diagram of a path tracking structure;

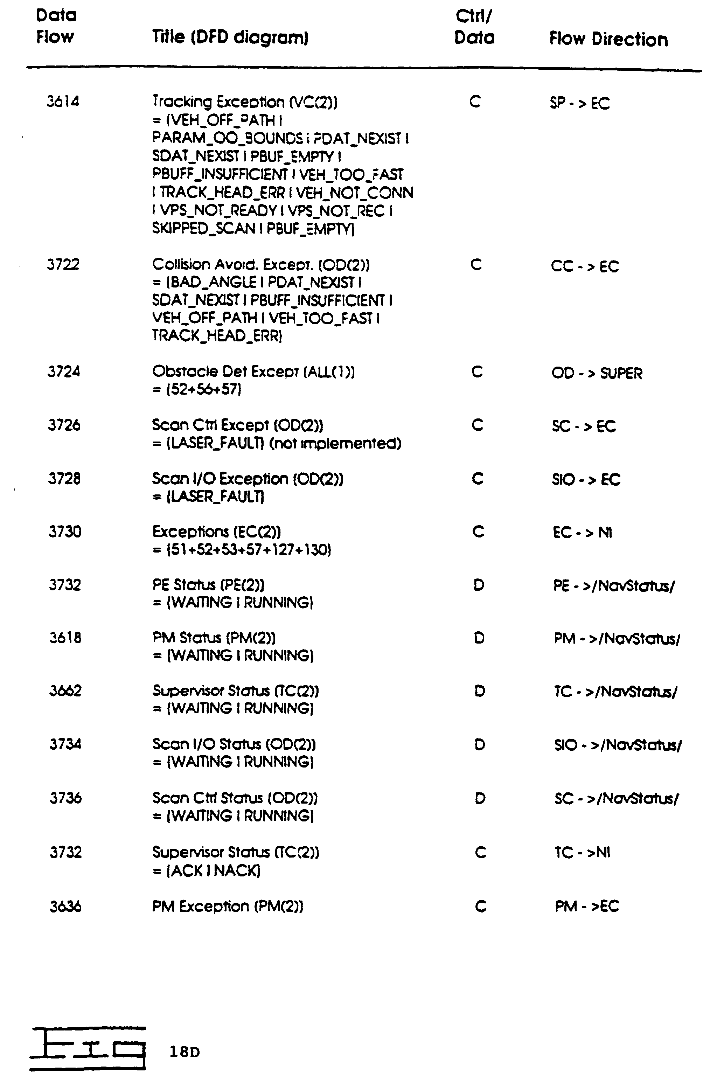

Figure 18A-18d are data flow summaries of the navigator 406;
Figure 19 is an illustration of a vehicle mounted scanner 404;
Figure 20 is a block diagram 4300 of a control system for an autonomous mining vehicle;
Figure 21 is a state diagram showing the transitions between modes of operation of the control system of Figure 20;
Figure 22 is a high level block diagram of speed control;
Figure 23 is a high level block diagram of a service brakes control circuit of the speed control;
Figure 24 is a block diagram of a governor control circuit of the speed control of the preferred embodiment;
Figure 25 is a block diagram of a steering control circuit;
Figure 26 is a communications diagram showing tasks of a navigator;
Figure 27 is a communications diagram showing navigator shared memory of a navigator;
Figure 28 is a flowchart pertaining to executive decisions;
Figure 29 is a flowchart of the relationship/connection of executive flowcharts 5600A-5600D of respective Figures 26A-30D.

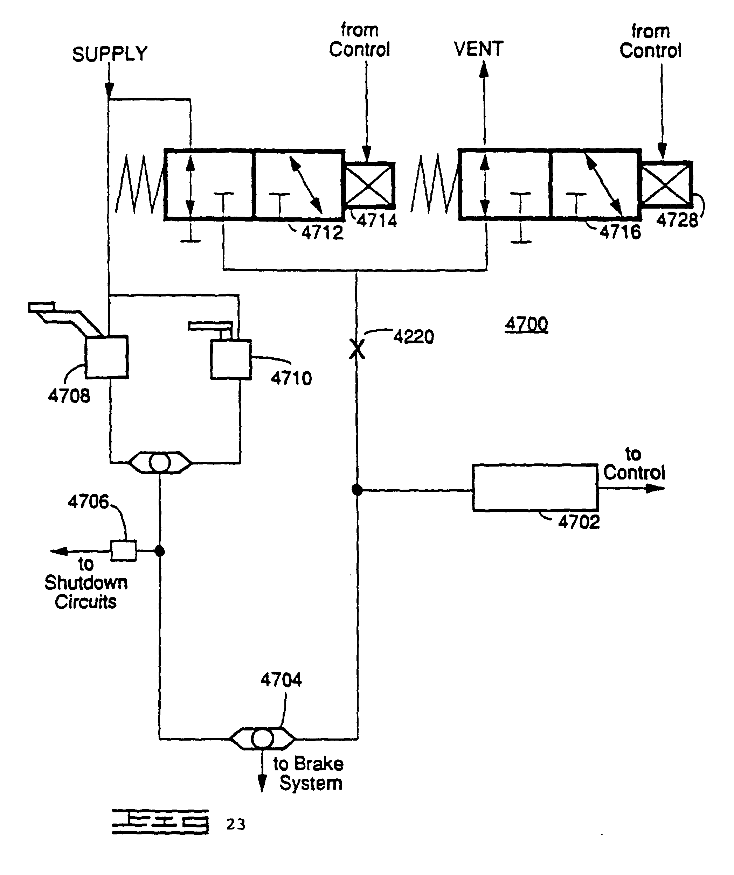

Figures 23A-29D are executive flowcharts 5600A-5600D, respectively, of the high level executive flowchart;

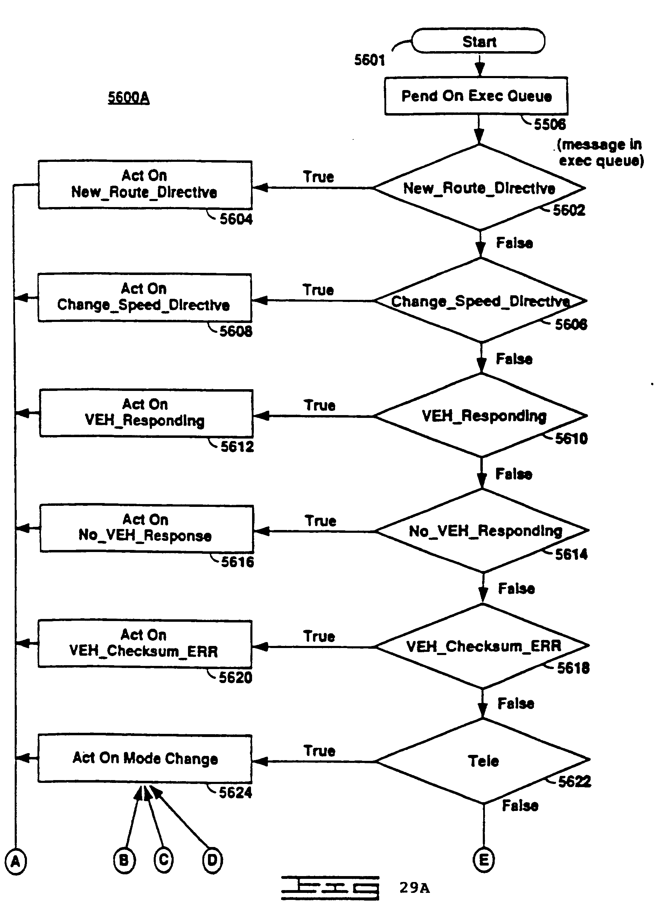

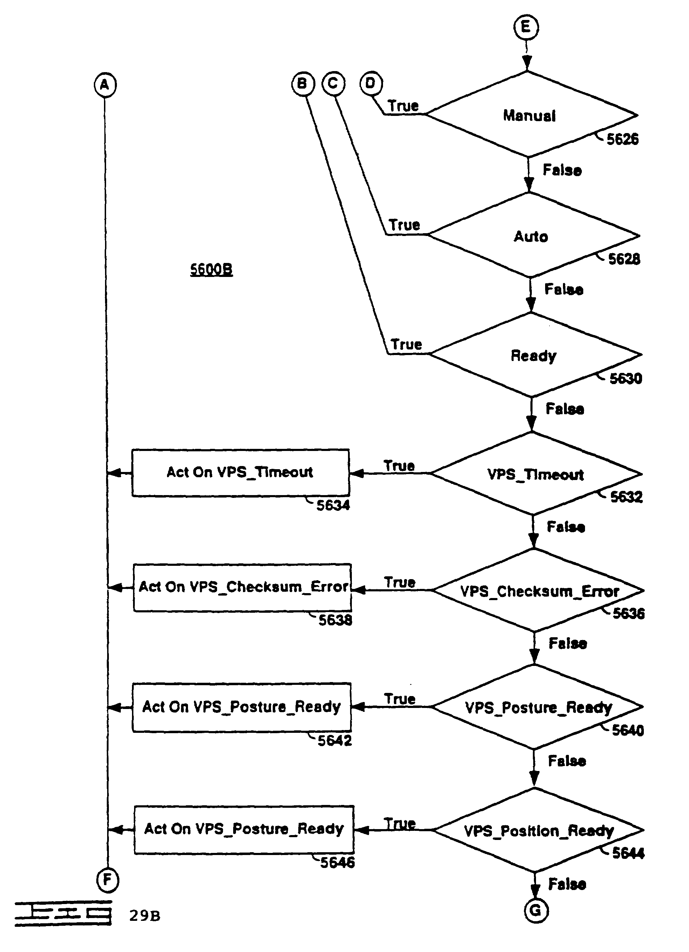

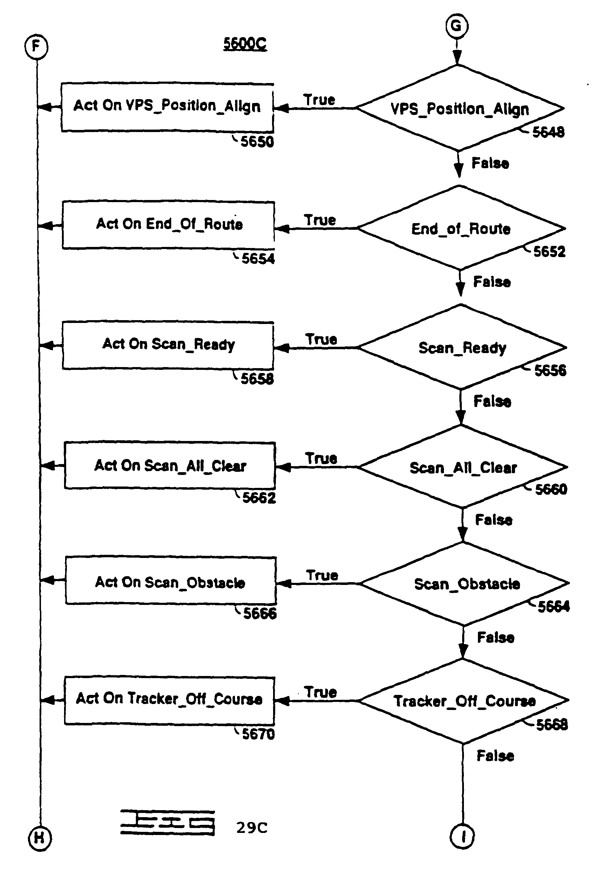

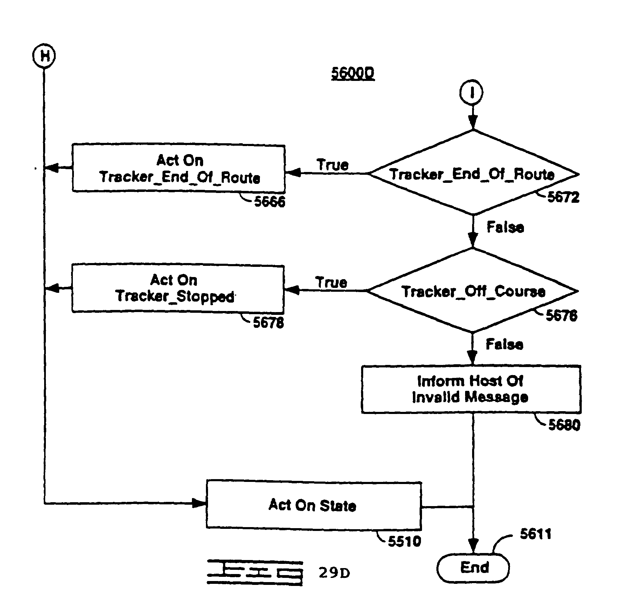

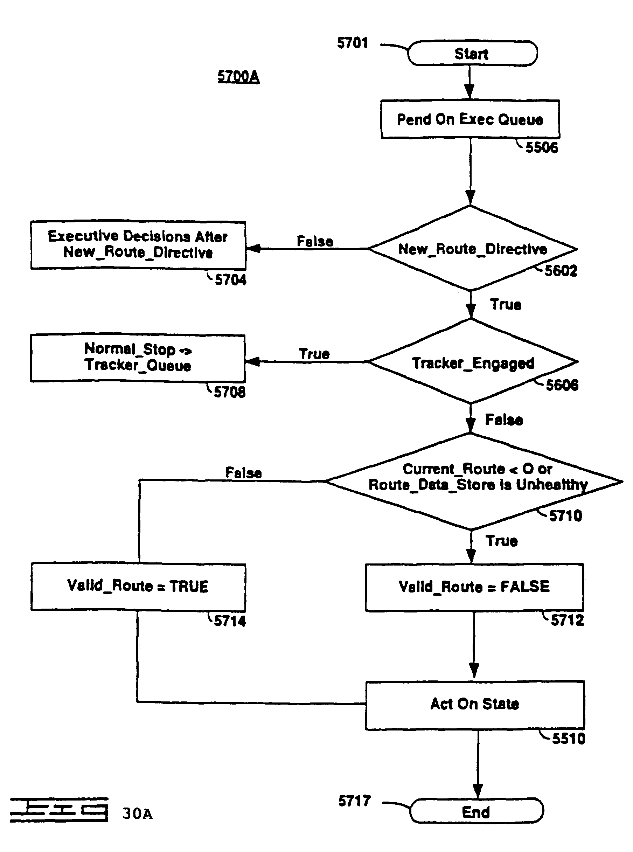

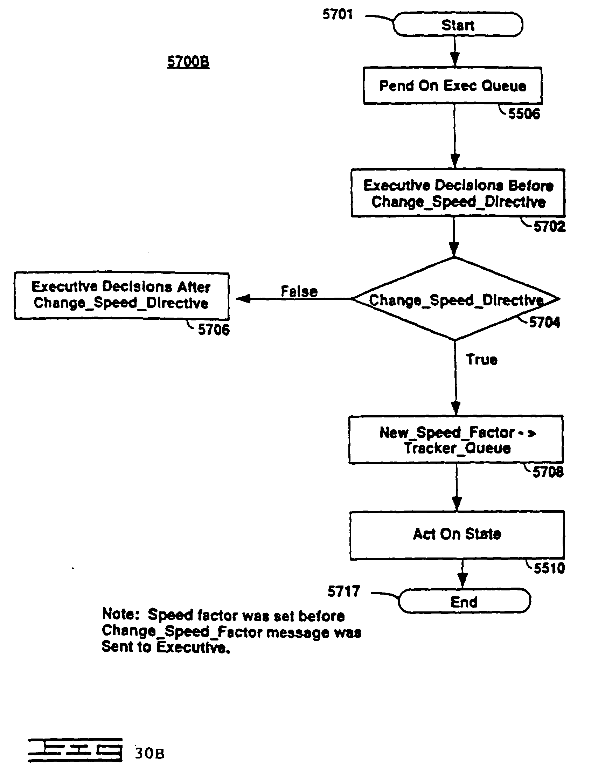

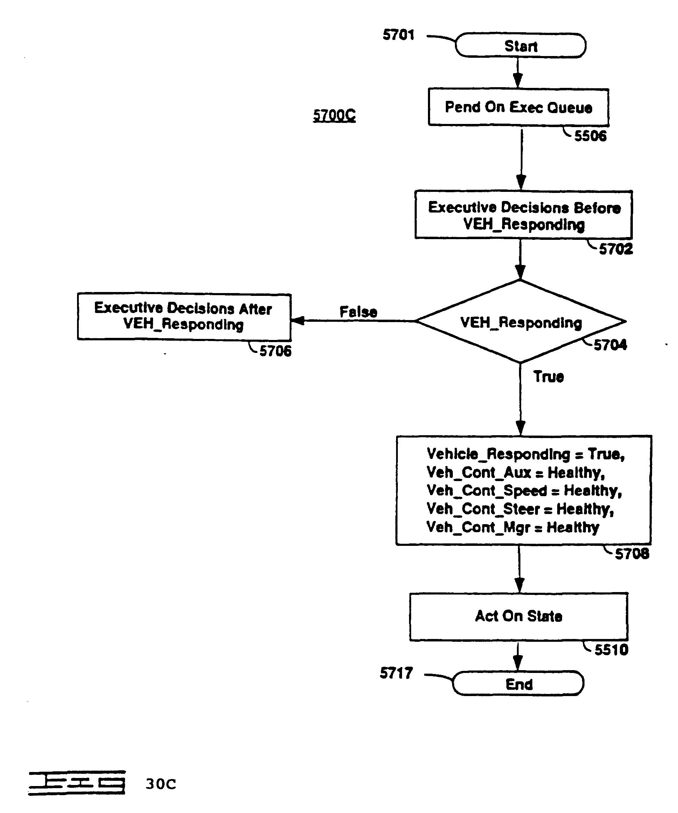

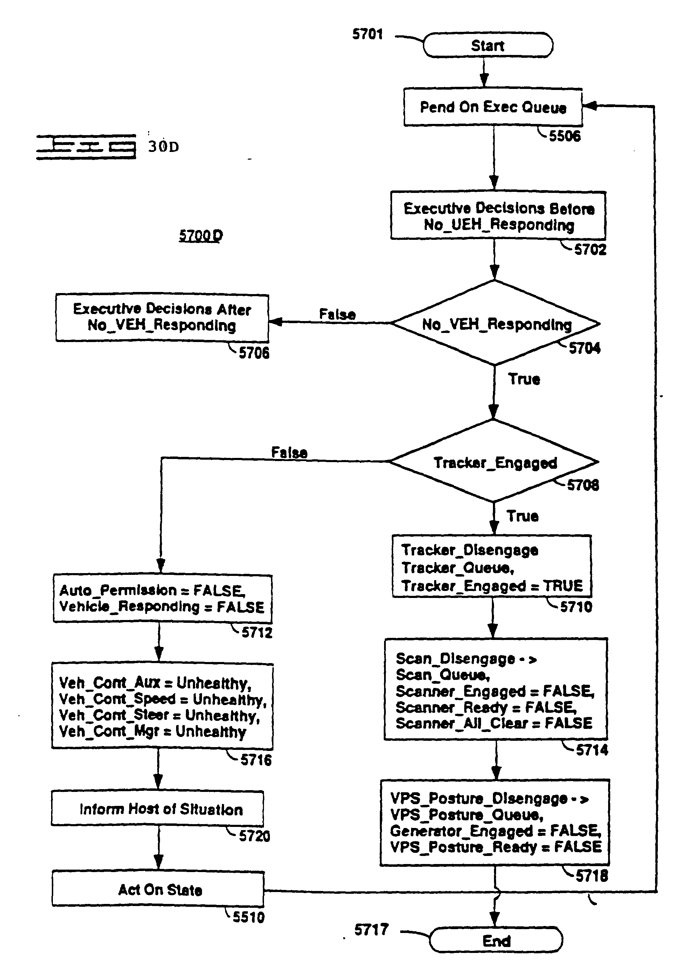

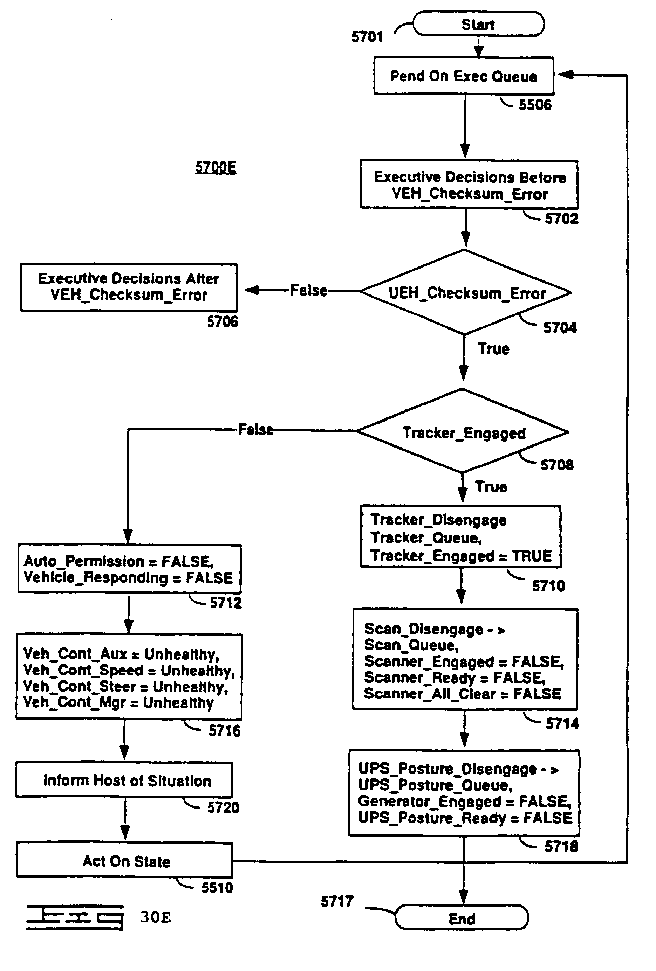

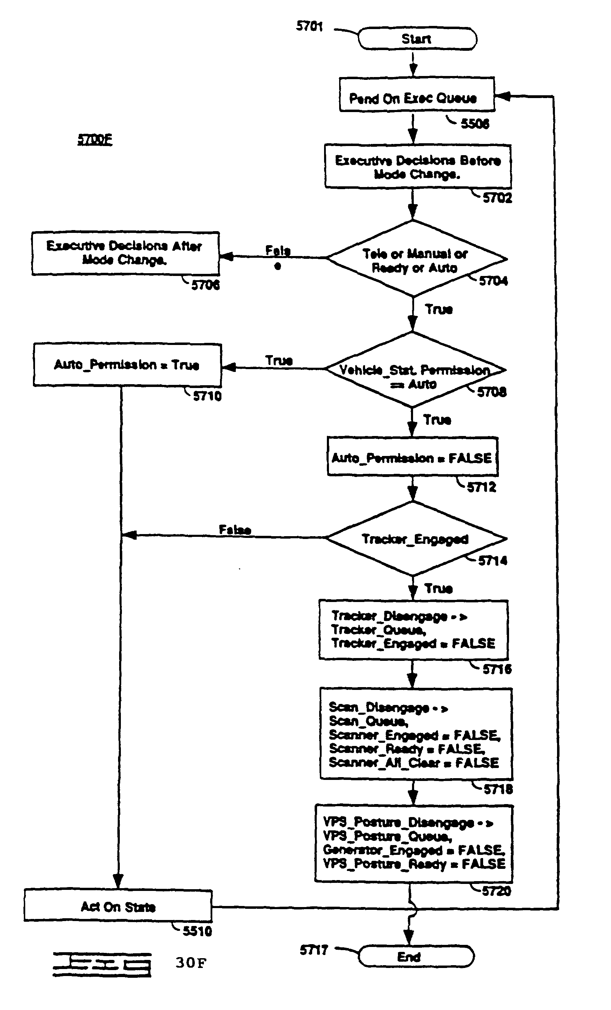

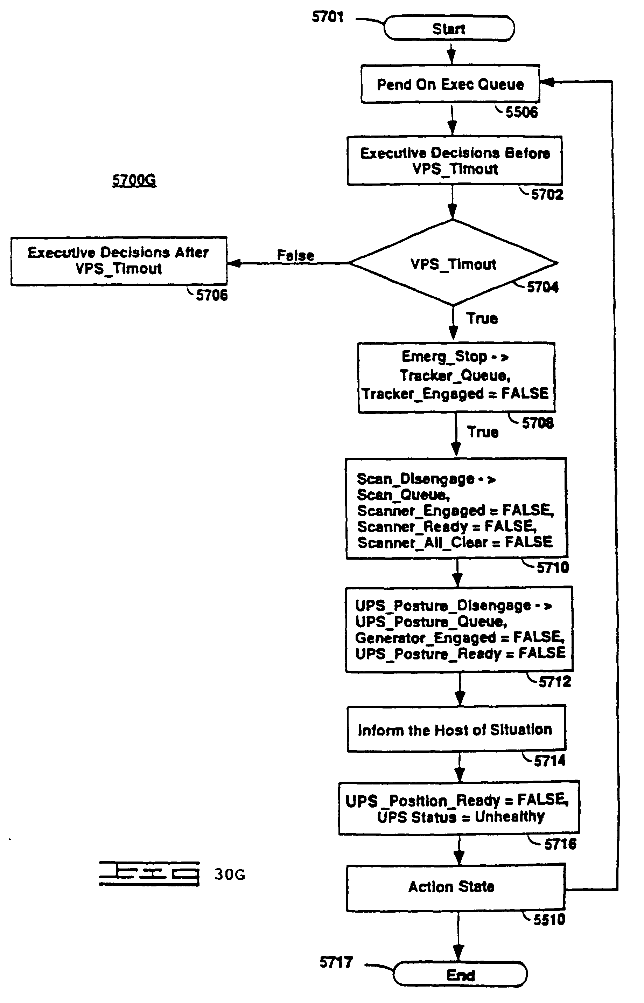

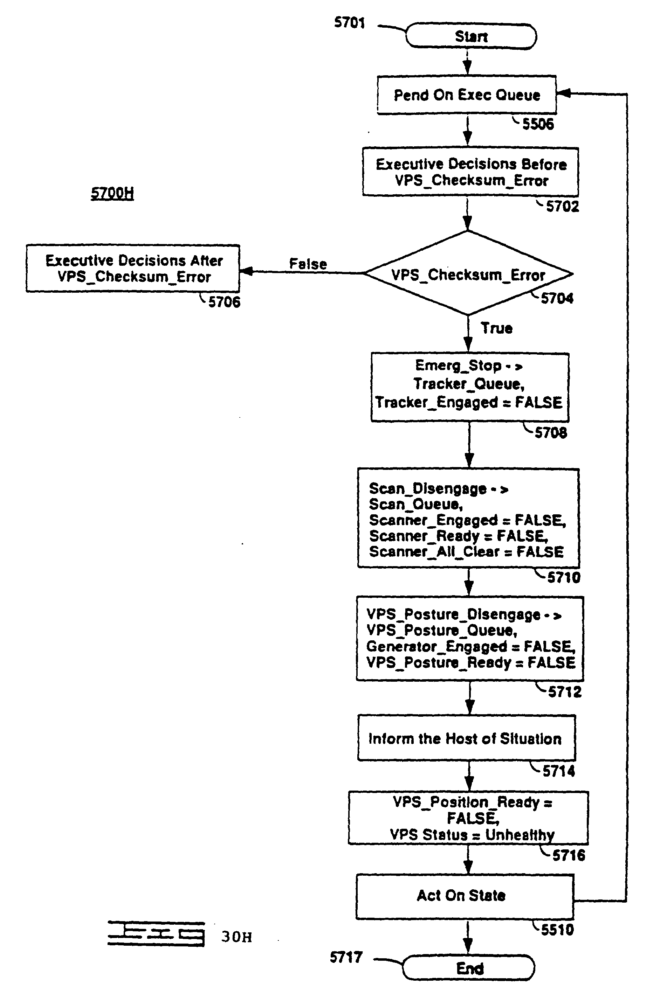

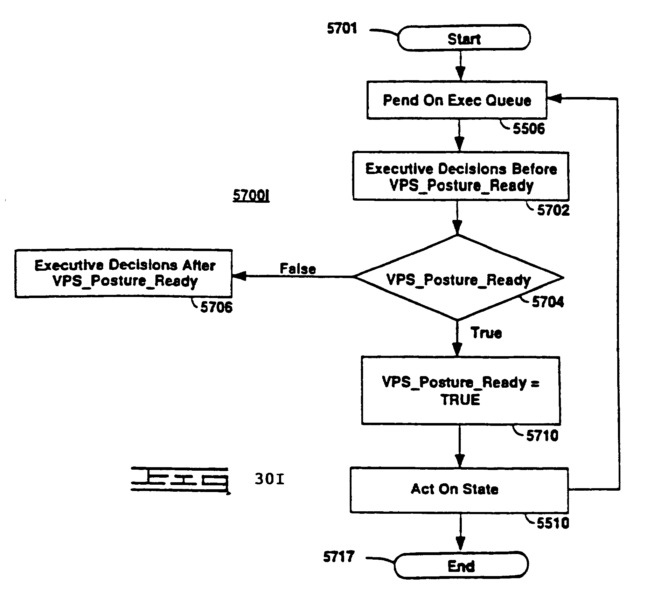

Figures 30A-30R are respective flowcharts 5700a-5700R, each showing "act-on" blocks of the executive flowcharts;

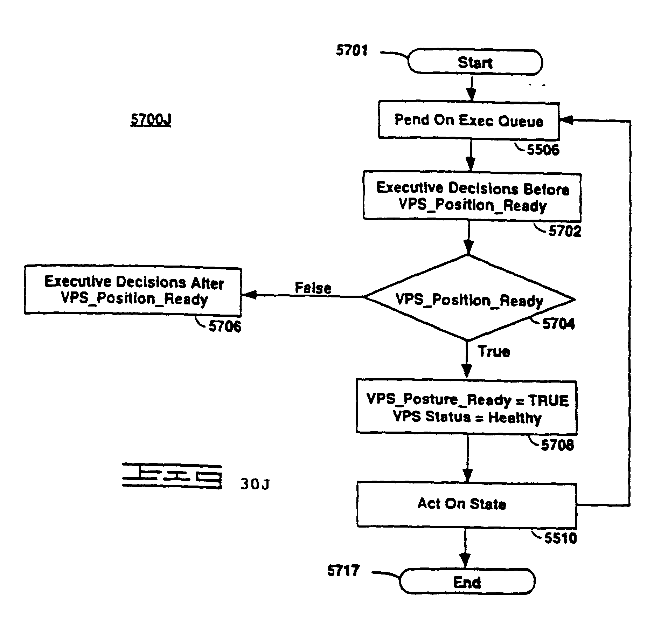

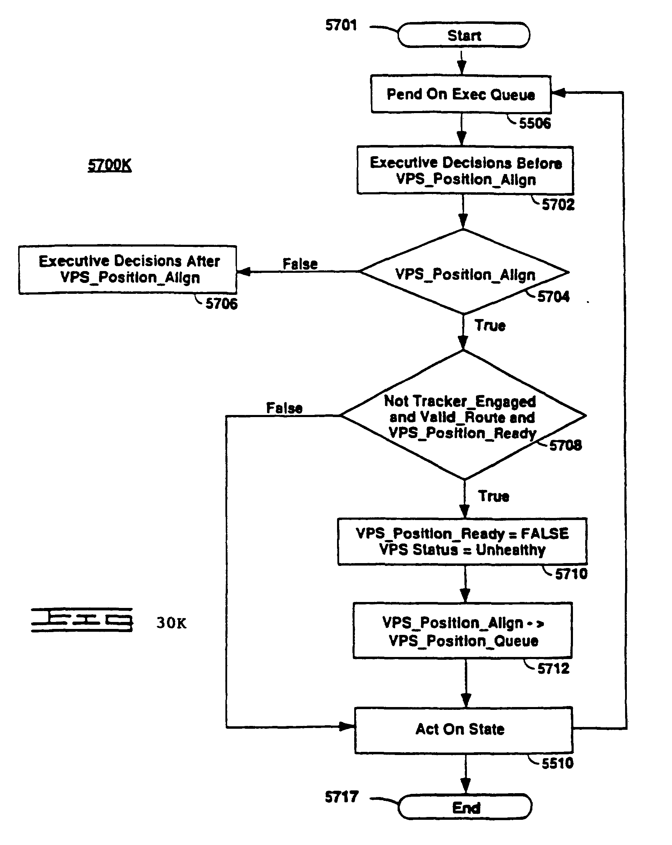

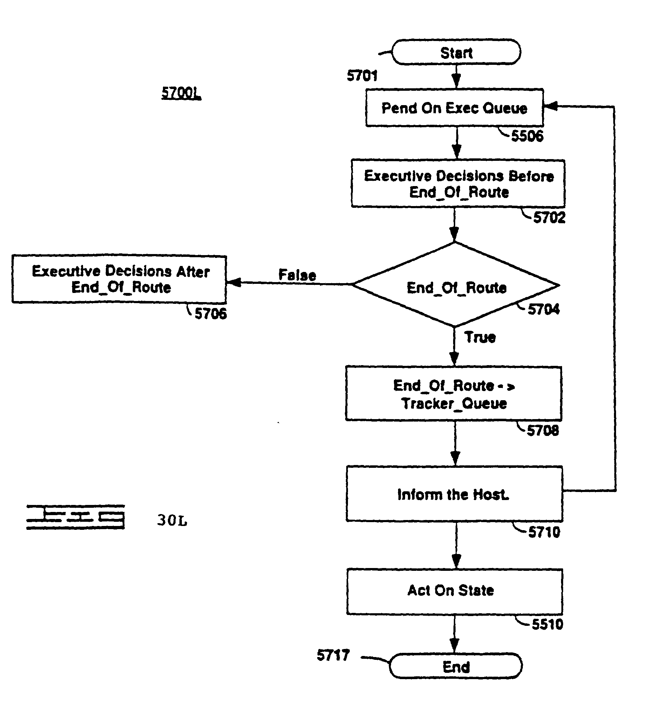

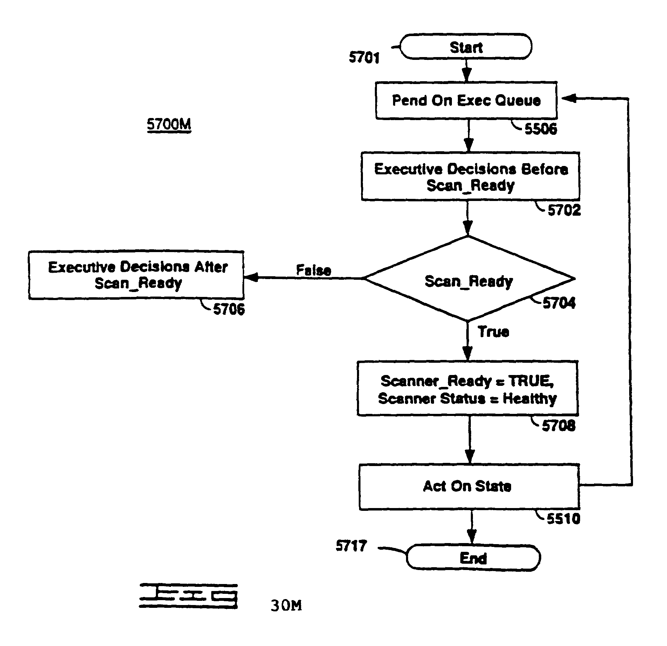

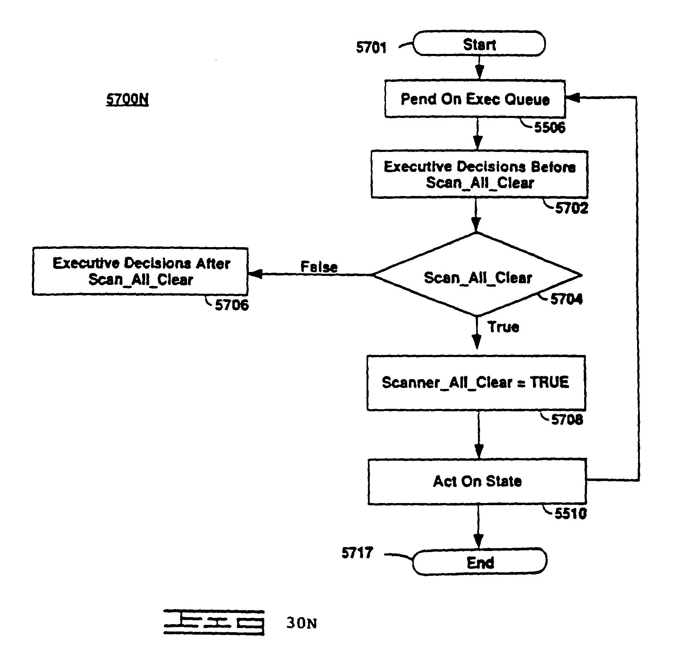

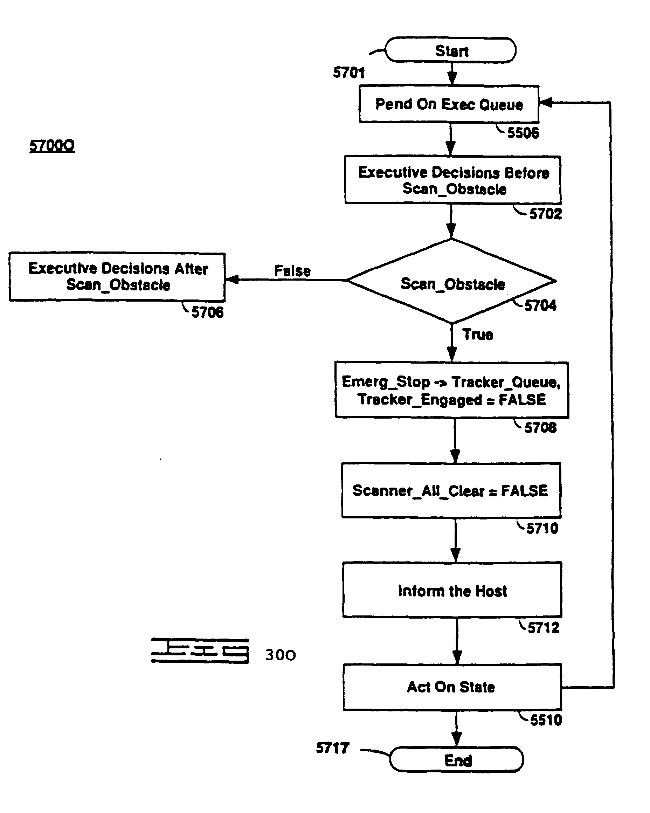

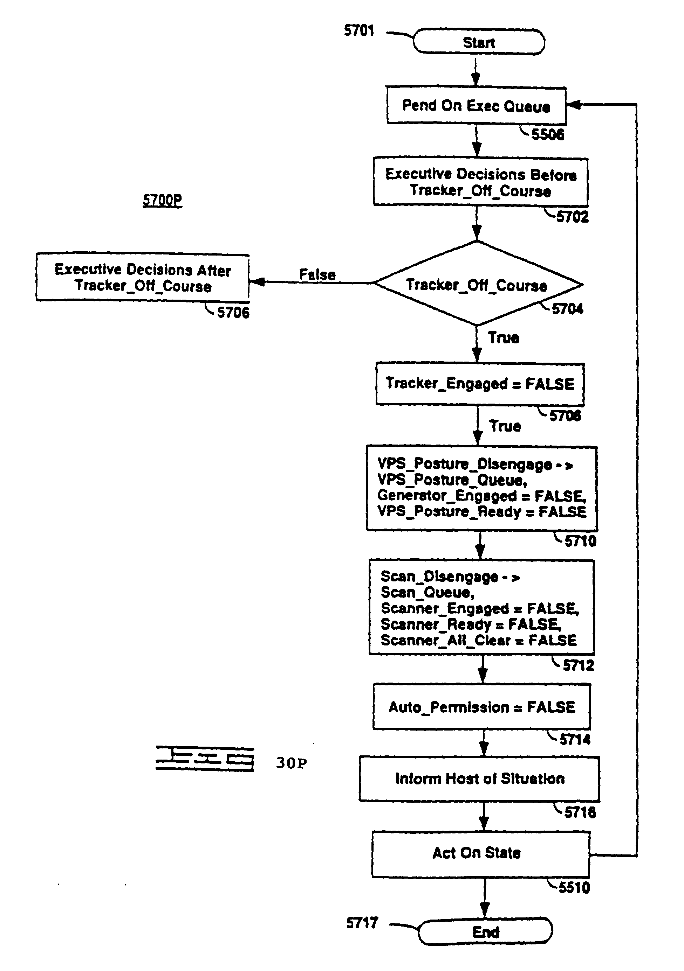

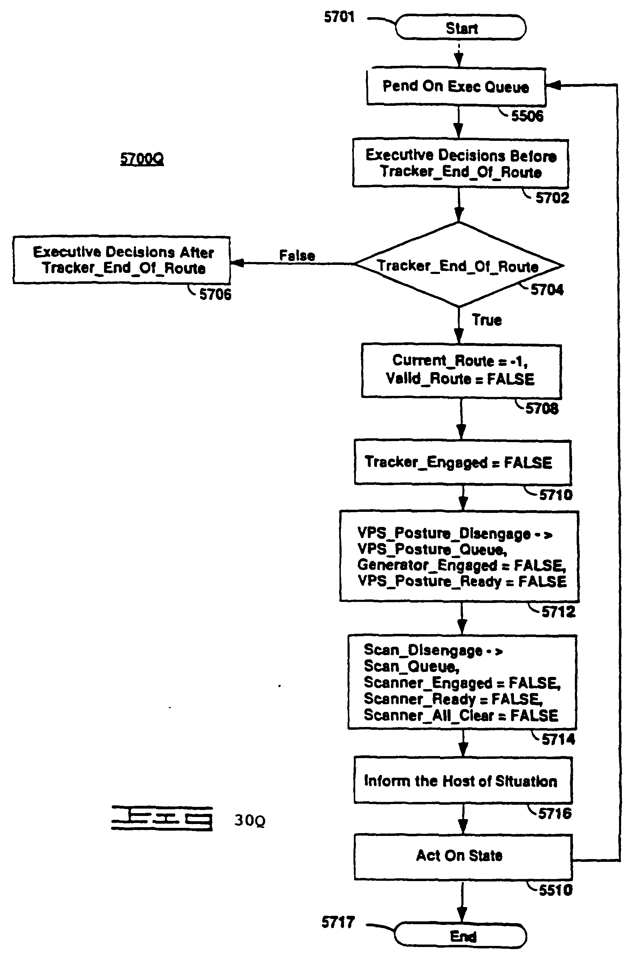

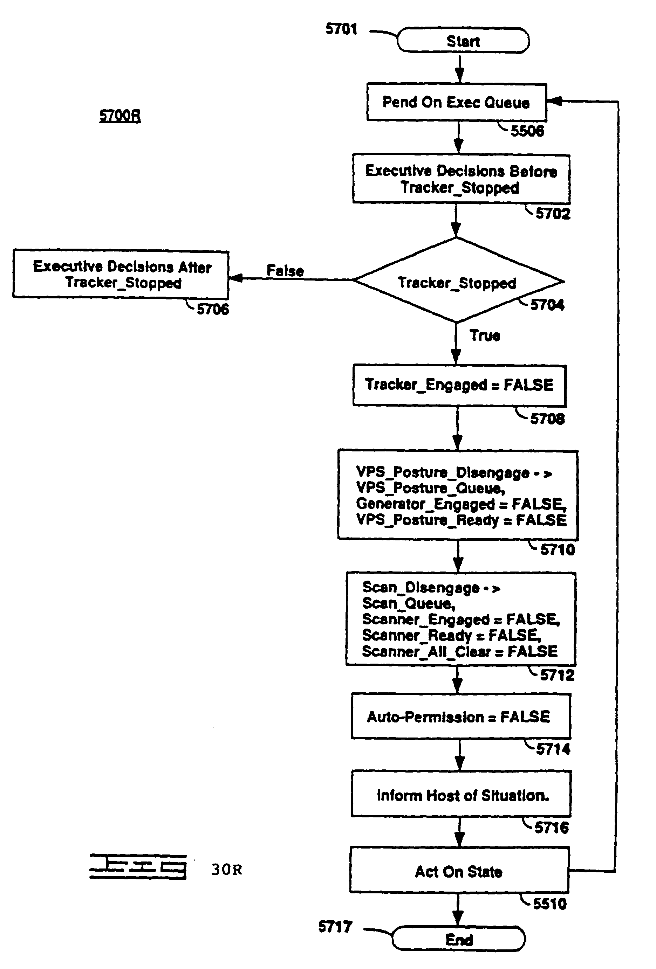

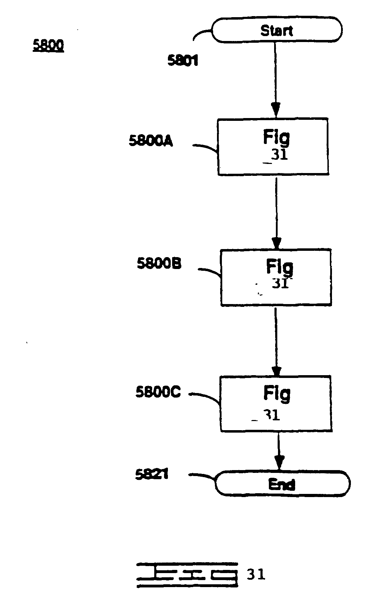

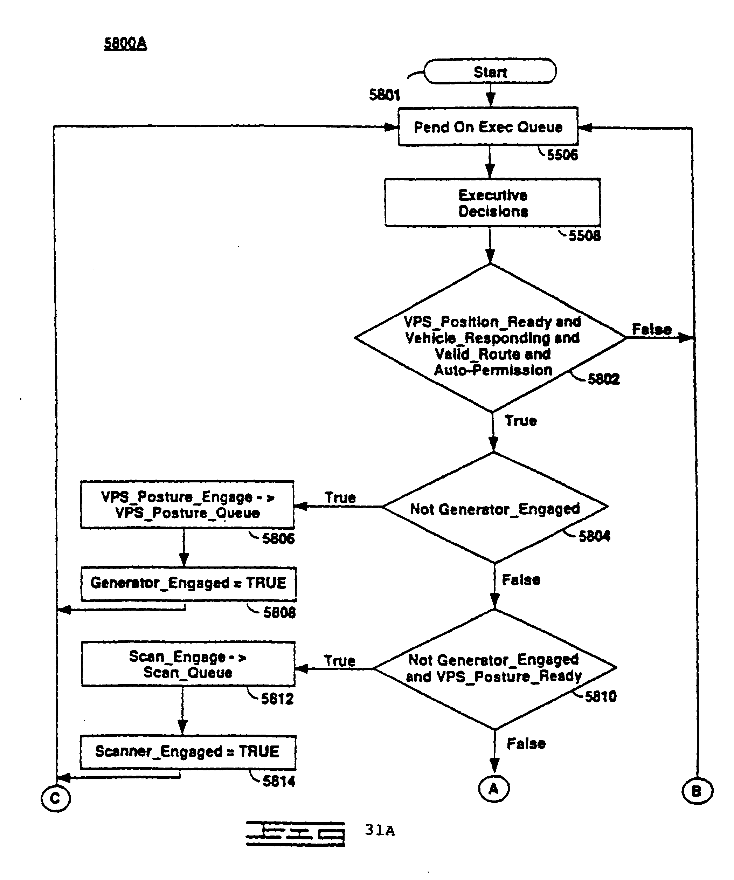

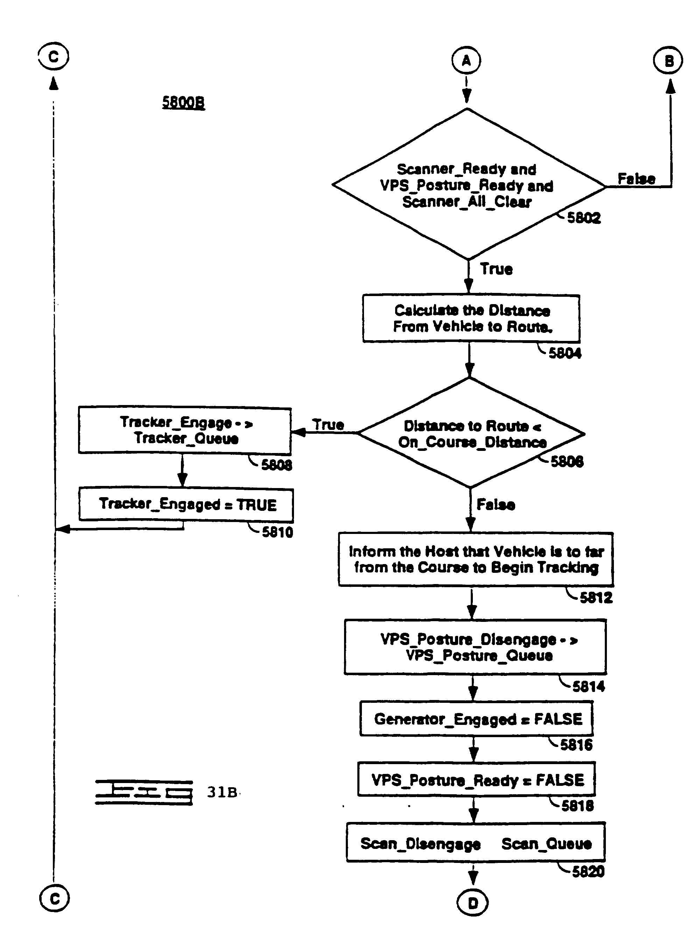

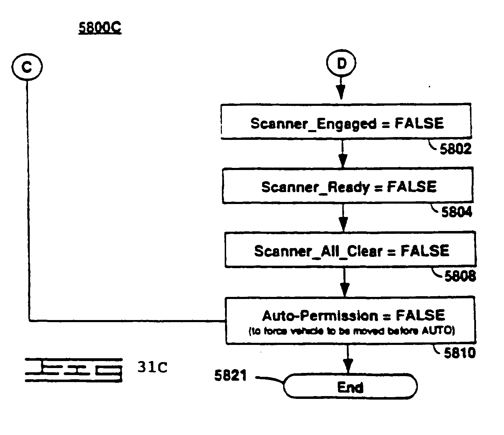

Figure 31 is a high level flowchart of the interrelation of respective Figures 31A-31C; and
Figures 31A-31C are respective flowcharts 5800A-5800C showing the "act on state" block in each of the executive flowcharts 5700A-5700Q.

## I. Definitions

**(1)** "Absolute position" in the context of this document refers to a position relative to the center of the Earth. Generally, an absolute position will be in reference to a vehicle or the base station, both on or near the Earth's surface. First, second, and third position estimates are all absolute positions in the preferred embodiment of the present invention.

**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or $2.9979245898 * 10^8$ m/s.

**(3)** "Anti-selective availability" refers to a method/technique/process for detecting and compensating for corrupted GPS data in the coarse/acquisition (C/A) mode of modulation.

**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.

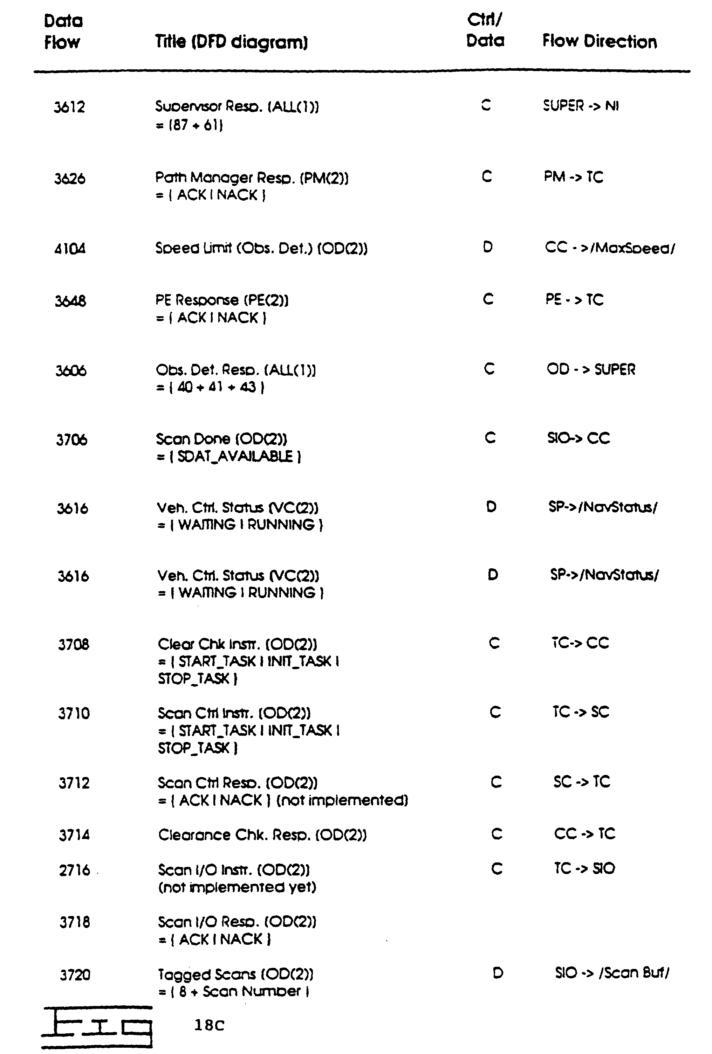

**(5)** "Base correlator bias" means a spatial bias derived in accord with the flowchart 1700A of Figure 17A.

**(6)** "Base correlator bias technique" means a method/process for computing base correlator biases.

**(7)** "Base estimated position" or "BEP" refers to the relative position of the base station with respect to a vehicle. The BEP is used in the base correlator bias technique of Part II.F.2.d. of this document.

**(8)** "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.

**(9)** "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique at Part II.F.2.c. of this document.

**(10)** "Base residuals bias" means a spatial bias which is the effective difference in the base known position (BKP) of the base station and the position estimate of the base station which is computed by the host processing system.

**(11)** "Base residuals bias technique" refers to a method for deriving base residuals biases.

**(12)** "Bias" refers to a differential between two measurements, usually position estimates (spatial bias) or clock rates (clock bias). Because one measurement is usually known to be more accurate than another, the bias is often times referred to as an "error."

**(13)** "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or $2.998 * 10^8$ meters per second. Consequently, the clock bias is transformed into units of length.

**(14)** "Constellation" refers to a group comprised of GPS satellites and/or pseudolites whose signals are utilized to derive an absolute position estimate of a point on or near the Earth's surface. See "optimal constellation" below.

**(15)** "Constellation effects method" means a technique or process by which an optimal constellation of GPS satellites is selected from a larger group of GPS satellites in view of a vehicle.

**(16)** "Data radio" refers to a transmitter, receiver, transceiver, or any combination thereof, for communicating data at radio frequencies (RF).

**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.

**(18)** "Estimated pseudorange" refers to an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.

**(19)** "First position estimate" or "FPE" or "FPE(i)" refers to an estimated absolute position of any vehicle which is outputted, in any form, from the GPS. The first position estimate and a second position estimate are independently derived in the present invention. Subsequently, these estimates are combined and filtered to derive a third position estimate. Consequently, the accuracy of the first position estimate affects the accuracy of the third position estimate.

**(20)** "GLONASS GPS" refers to the GPS which has been designed and which is currently being deployed by the U.S.S.R.

**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."

**(22)** "GPS data" means all data encoded on signals transmitted from GPS satellites of a GPS. GPS data includes, for example, ephemeris data and time data.

**(23)** "GPS processing system" refers to the system of the present invention for receiving signals from a terrestrial position determination system and for deriving first position estimates of vehicles from the received signals. In the preferred embodiment, the GPS processing system receives electromagnetic signals from GPS satellites of a GPS and/or from pseudolites.

**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates. In the preferred embodiment, the architecture/hardware of the host processing system is substantially similar to the architecture/hardware of the VPS.

**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. In the preferred embodiment, the IRU is part of the MPS.

**(26)** "Kalman filter" is used in its conventional sense. It refers to a software program for filtering out noise or errors in data. In the preferred embodiment, a GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.

**(27)** "Motion positioning system" or "MPS" means a system comprising at least an IRU and a vehicle odometer. In the preferred embodiment, the MPS derives the second position estimate of any vehicle on or near the Earth's surface. Moreover, an MPS need not be present at the base station due to its stationary nature.

**(28)** "Optimal constellation" means a satellite constellation in which the relative positions of the GPS satellites in space affords superior triangulation capabilities in order to derive the most accurate estimate of a point on or near the Earth's surface.

**(29)** "Original bias" means a spatial bias calculated by subtracting both estimated pseudoranges and clock biases (in units of length) from actual pseudoranges. Clock biases are transformed into units of length by multiplying them by the speed of light, or $2.9979245898 * 10^8$ meters per second.

**(30)** "Original bias technique" is a method for computing original biases.

**(31)** "NAVSTAR GPS" means the GPS which has been designed and which is currently being deployed by the U. S. government.

**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.

**(33)** "Parabolic bias" is a spatial bias computed by constructing parabolic models for the actual pseudoranges of each observed GPS satellite and extrapolating values from the parabolic models. In the preferred embodiment, the parabolic biases are the actual pseudoranges minus the value extrapolated from the constructed parabolic models and minus the clock biases (in units of length, via multiplying by the speed of light).

**(34)** "Parabolic bias technique" is a method for computing parabolic biases for each of the GPS satellites that are utilized.

**(35)** "Preferred embodiment" refers to the best mode of implementing the present invention. The preferred embodiment is merely exemplary. The present invention should not be interpreted as being limited by the preferred embodiment.

**(36)** "Pseudolite" refers to a radiating system on or near the Earth's surface for emulating a GPS satellite. In the preferred embodiment, electromagnetic signals, similar to those from GPS satellites, are transmitted from land-based pseudolites. One or more pseudolites can 92 be used to emulate GPS satellites to enhance the computation of first position estimates.

**(37)** "Pseudolite data" means all data encoded on signals received from pseudolites. Pseudolite data resembles GPS data in many respects and includes similar information.

**(38)** "Pseudorange" means the distance between a source of a terrestrial position determination system and a point on or near the Earth's surface. In the preferred embodiment, sources can be GPS satellites and/or pseudolites. The terrestrial position determination system can be a GPS used with pseudolites, if any. Further, the point on or near the Earth's surface can be the base station and/or vehicles.

**(39)** "Satellite position predictor" is a method for determining the future positions of GPS satellites. The method allows for the selection of optimal constellations ahead of time.

**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.

**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias technique 1500 (Part II.F.2.a.), a parabolic bias technique 1600 (Part II.F.2.b.), a base residuals bias technique 1700 (Part II.F.2.c.), and a base correlator bias technique 1700A (Part II.F.2.d.).

**(42)** "System" is used for shorthand purposes to mean apparatus, method, or a combination of both apparatus and method. Moreover, it could include software, hardware, or a combination of hardware and software.

**(43)** "Position determination system" means any system having sources which emanate signals which can be used by a receiver of the signals to estimate the relative distance between the sources and the receiver. The signals may be in the form of, for example, electromagnetic waves, percussion waves, and/or sound waves.

**(44)** "Terrestrial position determination system" means any position determination system which can be used to ultimately estimate the terrestrial position of an Earth receiver. The signals may be in the form of, for example, electromagnetic waves, percussion waves, and/or sound waves. In the preferred embodiment, the terrestrial position determination system is the NAVSTAR GPS.

**(45)** "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.

**(46)** "Vehicle" means any carrier for the transportation of physical things. Vehicles may take the form of mining trucks, construction trucks, farm tractors, automobiles, ships, boats, trains, balloons, missiles, or aircraft. In the preferred embodiment, a Caterpillar Inc. 785 off-highway truck is utilized.

**(47)** "Vehicle positioning system" or "VPS" refers to the system of the present invention for deriving position estimates of any vehicle. The position estimates from the VPS are extremely accurate and can be used by a navigation system on any vehicle to accurately guide the vehicle. In the preferred embodiment, position estimates from the VPS are referred to as third position estimates.

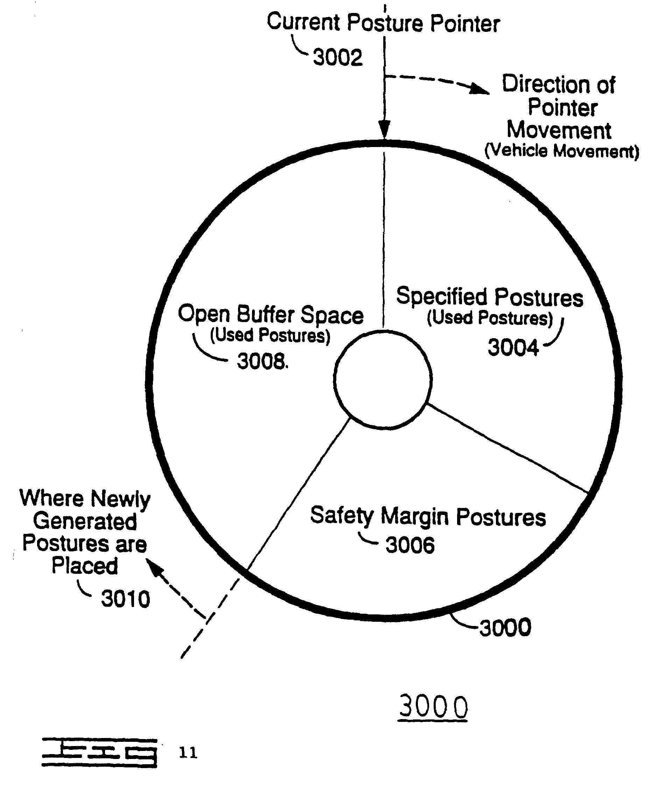

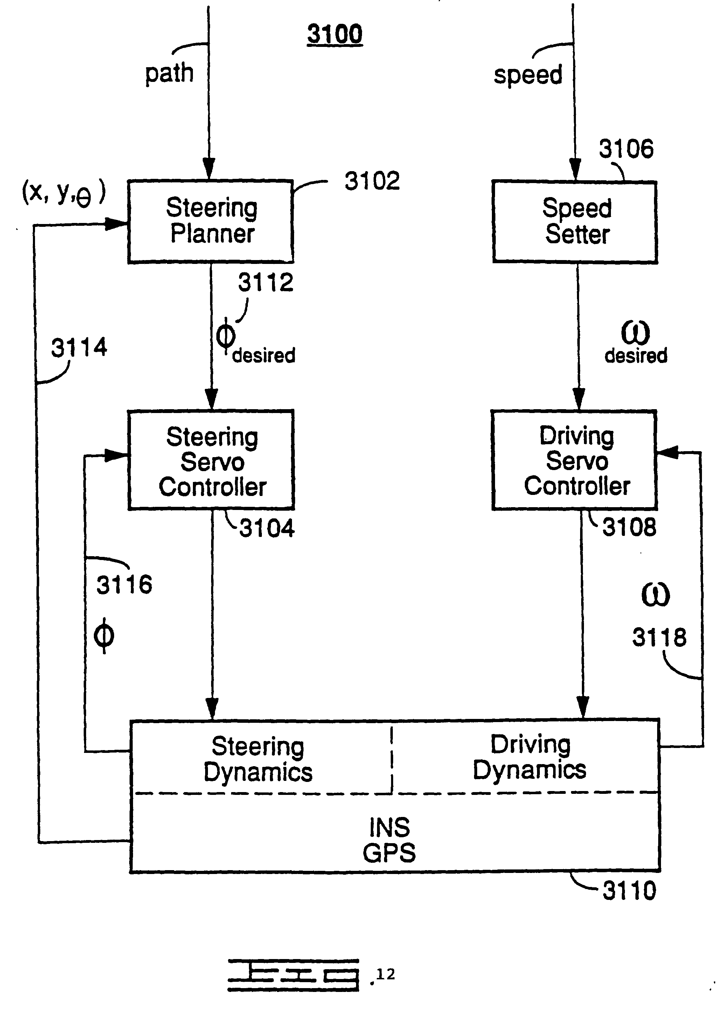

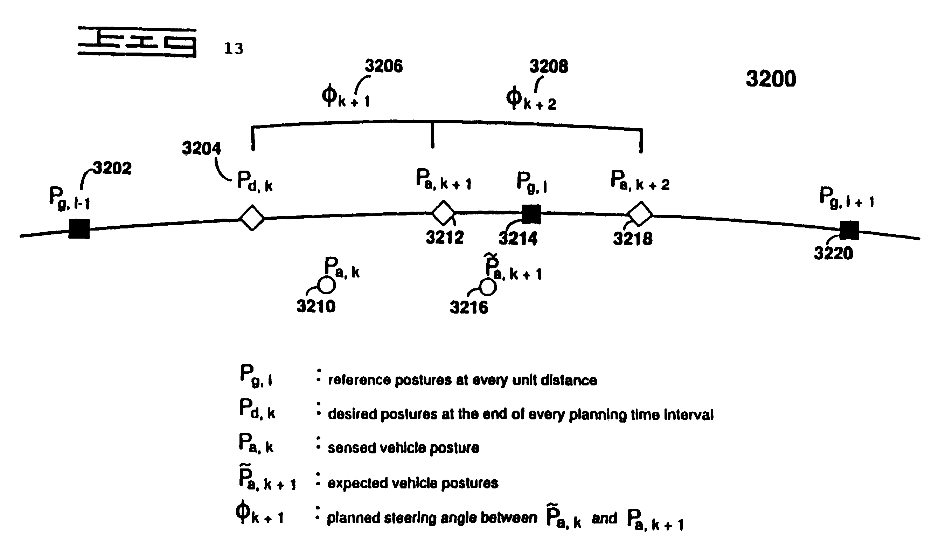

**(48)** "VPS processing system" means the processing system of the VPS. The VPS processing system derives third position estimates from the first and second position estimates. The architecture is depicted in Figures 10 and 11.

**(49)** "Weighted combiner" refers to a particular software program which processes data. Inputted data is assigned a predetermined weighing factor based on the estimated accuracy of the data and the technique used to gather the data. For example, in the preferred embodiment, the first position estimate of the GPS signal 716 is weighted heavier than the second position estimate of the IRU signal 910 because the former is inherently more accurate.

Furthermore, the velocity measured by the IRU can be weighted heavier than the velocity measured by the GPS processing system because the former is more accurate. In the preferred embodiment, the velocity measured by the GPS processing system is not used at all, but could be used in other implementations.

**(50)** "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

II. General Overview

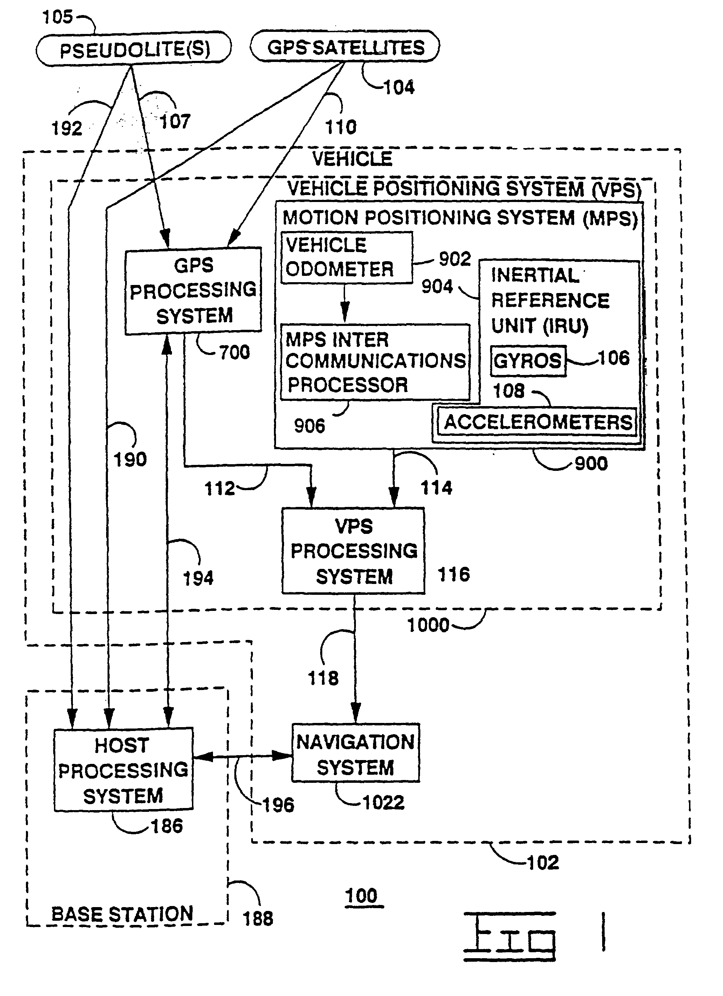

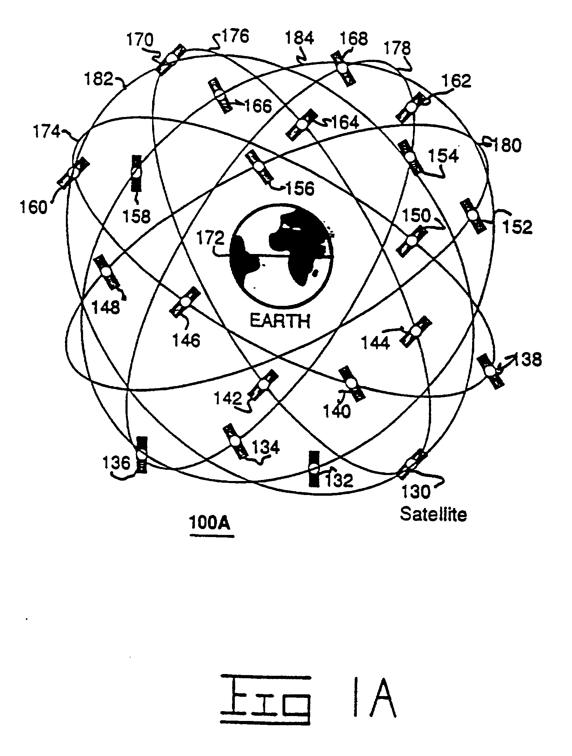

Figure 1 illustrates a high level block diagram 100 of the preferred embodiment of the present invention. To provide for the accurate autonomous operation of a vehicle 102 on or near the Earth's surface, the present invention includes both a vehicle positioning system (VPS) 1000 and a navigation system 1022. Both of these systems include apparatus, methods, and techniques which, when integrated together, provide for highly accurate control of unmanned vehicles.

A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.

Using the VPS 1000 of the present invention, position estimates of the vehicle 102 can be determined with extreme preciseness. The VPS 1000 receives GPS data from GPS satellites 104 of a GPS, such as the NAVSTAR GPS or the GLONASS GPS.

In the preferred embodiment, the NAVSTAR GPS is utilized. Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the present invention to enhance the accuracy of vehicle position estimates.

More specifically, the VPS 1000 of the preferred embodiment is a positioning system based on the incorporation of GPS data from the NAVSTAR GPS 104 and from a motion positioning system 900. In the preferred embodiment, the motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the present invention implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

B. Navigation System

The navigation system 1022 receives the third position estimate from the VPS 1000. The navigation system 1022 uses the precise, third position estimate to accurately navigate the vehicle 102. A primary purpose of the navigation system 1022 is to guide the vehicle 102 between points along pre-established or dynamically-generated paths.

In the preferred embodiment, the navigation system 1022 is situated on the vehicle 102 itself. In other words, it is essentially an "on-board" system. Moreover, the navigation system 1022 may be designed to be retro-fitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate. These mathematical curves will be discussed in detail later in this document.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

C. <u>Base Station</u>

The present invention can comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 (Part II.G.) discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias technique 1500 (Part II.F.2.a.), a parabolic bias technique 1600 (Part II.F.2.b.), a base residuals bias technique 1700 (Part II.F.2.c.), and a base correlator bias technique 1700A (Part II.F.2.d.).

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022 of the present invention. The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

II Vehicle Positioning System

A. Overview

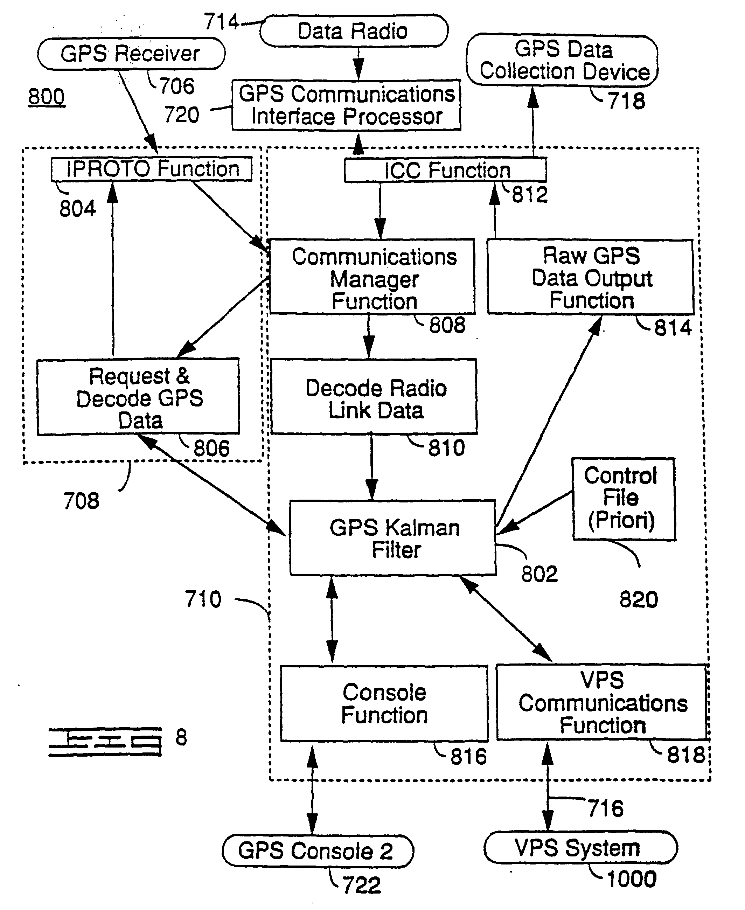

The following discussion relative to the VPS 1000 will make specific reference to Figures 7 through 10. Figure 10 shows the architecture/hardware of the VPS 1000. The VPS 1000 is a highly accurate position determination system for a moving or stationary vehicle 102 on or near the Earth's surface.

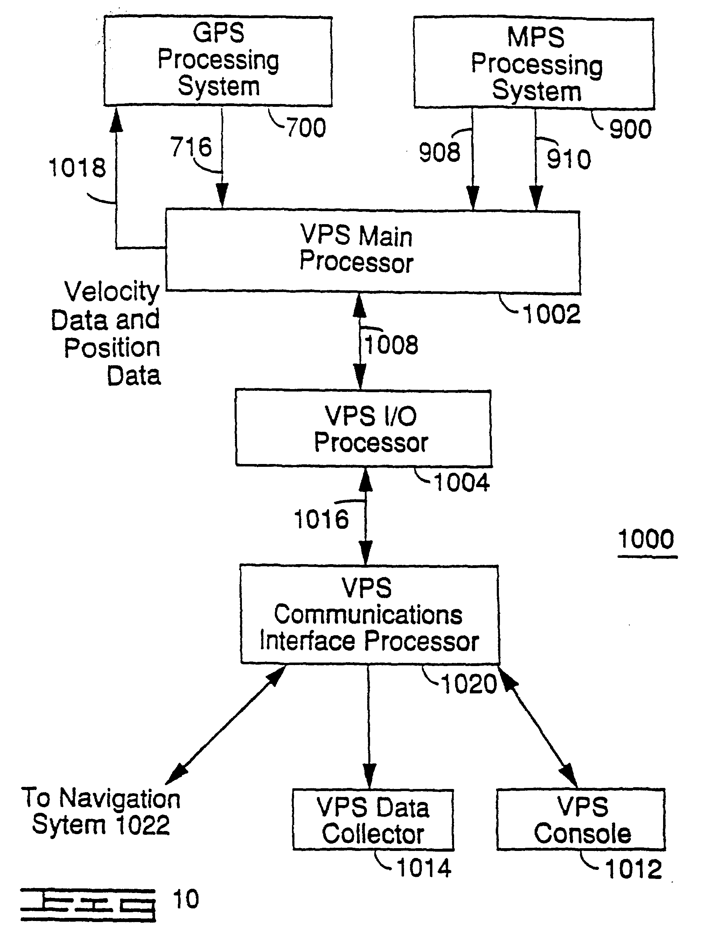

Recall that the VPS 1000 includes the GPS processing system 700 and the MPS 900, which are shown in respective Figures 7 and 9. Further recall that the MPS 900 includes the IRU 904 and the vehicle odometer 902, which are both shown in Figure 9. In effect, these systems have been enhanced and integrated by the present invention to produce a highly effective position determining system.

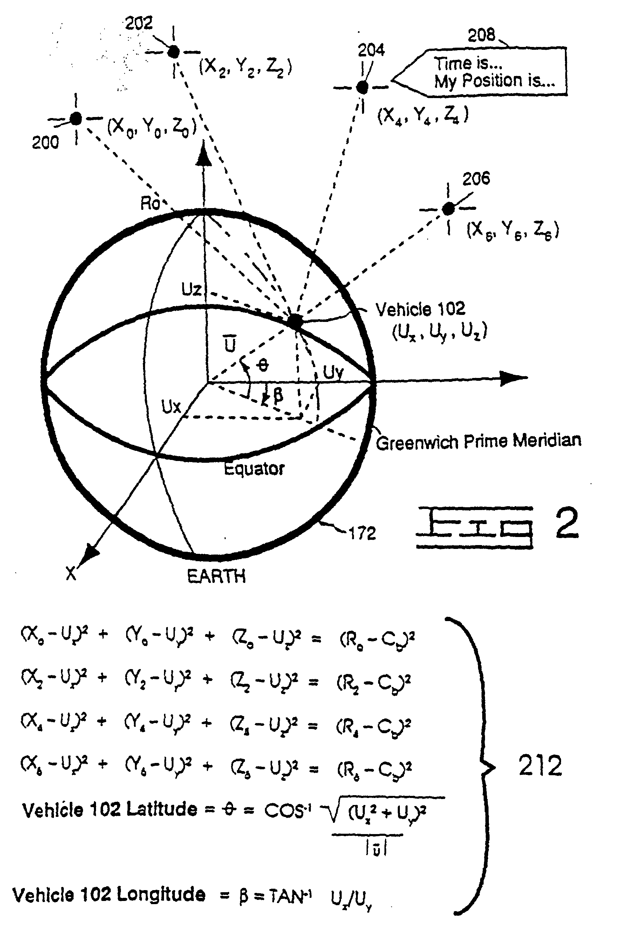

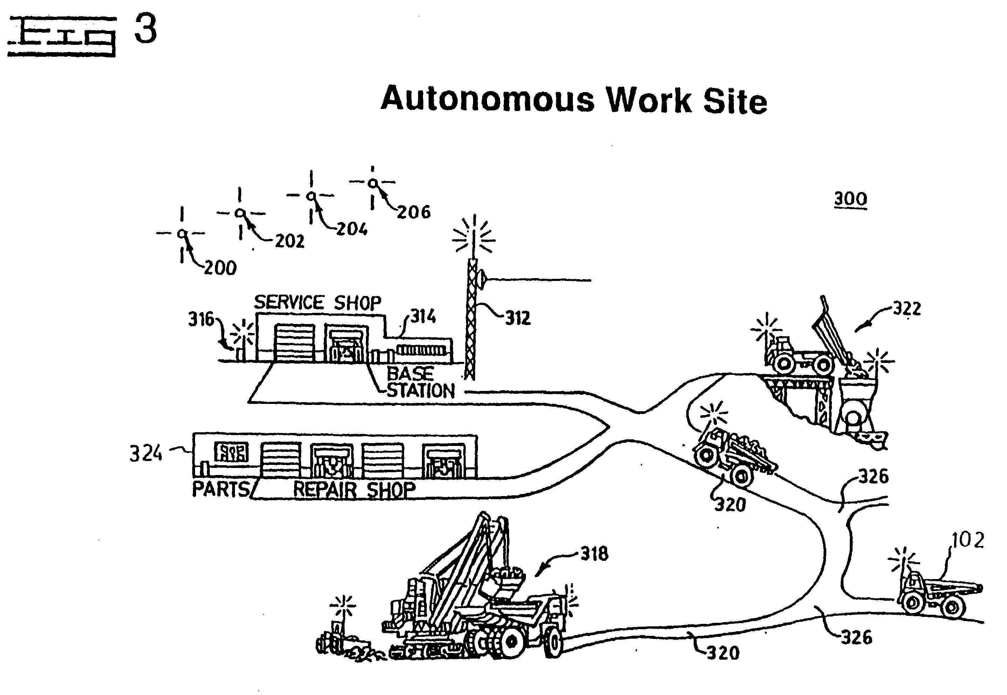

Referring to Figure 7, the GPS processing system 700 includes an antenna 702 connected to a GPS receiver 706. When the GPS satellites 104 in view of antenna 702 comprise multiple GPS satellites 200-206 as shown in Figures 2 and 3, the GPS receiver 706 reads each of their GPS data along with any pseudolite data from any pseudolite(s) 105 in view of antenna 702. In the preferred embodiment, the GPS receiver 706 is responsible for computing the first position estimate of the vehicle 102 from the GPS data and/or the pseudolite data.

To increase the accuracy of the first position method, a satellite position predictor method 1800 is implemented by a GPS processor 710 of the GPS processing system 700. The satellite position predictor method 1800 predicts the position of any GPS satellite at the current time or any future time.

Using the satellite position information, the GPS processing system 700 can determine the optimum GPS satellite constellation to recognize by using a constellation effects method 1300 The constellation effects method 1300 is also implemented by the GPS processor 710 in the preferred embodiment. Pursuant to the constellation effects method 1300, a best constellation is selected from the data sources comprising the GPS satellites 200-206 and pseudolite(s) 105.

The GPS processor 706 computes a first position estimate of the vehicle 102 based on the best constellation and geometry/triangulation methods. The accuracy of the first position estimate is, in part, dependent on the number of GPS satellites used in the computation. Each additional GPS satellite used can increase the accuracy of the first position estimate. After the computation, the first position estimate of the vehicle 102 is transmitted to a VPS main processor 1002 of Figure 10.

Referring to Figure 9, the IRU 904 comprises laser gyroscopes and accelerometers which produce position, velocity, roll, pitch, and yaw data. The IRU 904 combines this information into a second position estimate of the vehicle 102. The odometer 902 can be implemented to measure the distance travelled by the vehicle 102. The data from the IRU 904 and the odometer 902 is also transmitted via the MPS intercommunications processor 906 to the VPS main processor 1002, as shown in Figure 10.

The VPS main processor 1002 combines the second position estimate from the MPS 900 (the IRU 904 and perhaps the odometer 902) with the first position estimate from the GPS processing system 700 to produce a more accurate third position estimate.

The VPS 1000 further implements a method of eliminating erratic or spurious, third position estimates which can cause vehicle "wandering." This method is called the weighted path history method Essentially, the path history of the vehicle 102 is used to statistically determine the accuracy of future estimates of the vehicle 102's position.

Referring now to Figures 1 and 3, a base station 188 provides a geographic proximate reference point for the VPS 1000. The base station 188 includes a host processing system 186. In the preferred embodiment, the host processing system 186 comprises similar a similar architecture and performs the same functions as the GPS processing system 700. However, the host processing system 700 performs additional functions for increasing the accuracy of first position estimates.

The satellite position predictor method 1800 is implemented by the host processing system 186, in addition to the GPS processing system 700 as discussed above. Accordingly, the host processing system 186 will recognize the same GPS satellite constellation that is observed by the vehicle 102 or include the same GPS satellite in a larger constellation.

Calculations are performed on the GPS data and/or pseudolite data to derive biases, including spatial biases and clock biases. To compute spatial biases, the host processing system 186 implements a number of methods.

As shown by an arrow 194, the spatial and clock biases are transmitted to the GPS processing system 700 of the vehicle 102. The GPS processing system 700 uses these biases to eliminate errors in vehicle position estimates.

B. GPS Processing System

The GPS processing system 700 utilizes vehicle position data from a terrestrial position determination system to derive the first position estimate of the vehicle 102. In the preferred embodiment, the terrestrial position determination system comprises the NAVSTAR GPS, which is currently being developed by the U.S. government, and/or Earth-based pseudolites.

1. NAVSTAR GPS

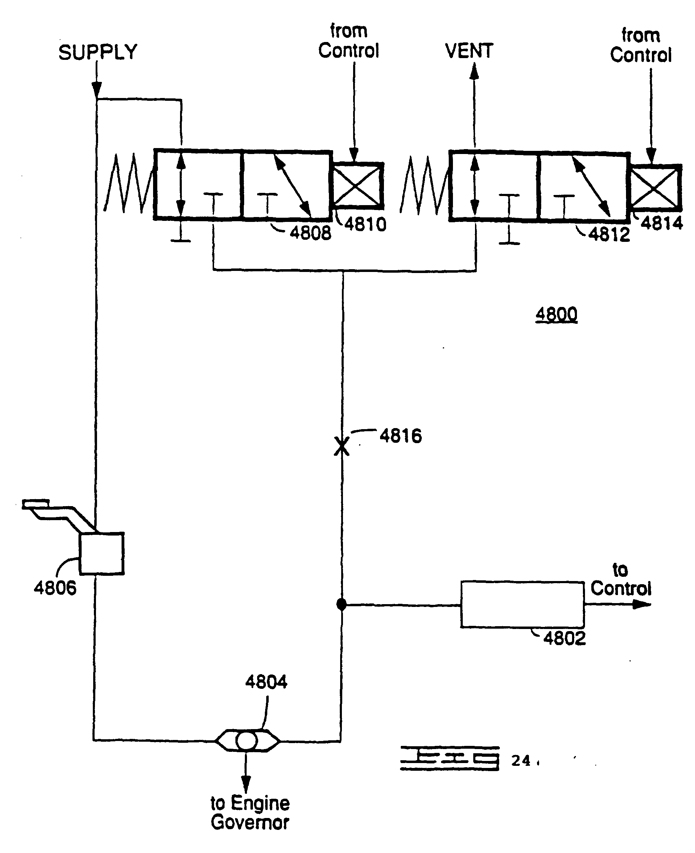

As shown in Figure 1A, 24 man-made electronic GPS satellites 132-170 in six orbits 174-184 are currently envisioned for the NAVSTAR GPS. They are planned for deployment by 1993. As currently envisioned, the GPS satellites 132-170 will orbit the Earth 172 at an altitude of approximately 14,000 miles and encircle the globe twice a day. Using the C mode of the NAVSTAR GPS, as will be discussed below, it will be possible to determine terrestrial positions within 15 meters in any weather, any time, and most areas of the Earth 172.

As of the date of the filing of this document, there are known to be six experimental and seven operational GPS satellites in orbit around the Earth 172. Further, several manufacturers are known to be designing and building GPS receivers, such as the GPS receiver 706 of Figure 7. As more and more GPS satellites are deployed and operational, the time periods increase when three or more of the experimental GPS satellites are available each day for position tracking.

Moreover, the location of the experimental GPS satellites (and all others once deployed) is very predictable. The relative position, or "pseudorange," of these GPS satellites with respect to the GPS receiver 706 on the vehicle 102 can be determined from the electromagnetic signals by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting GPS satellites. Almanac data relating to the GPS satellite position data of the NAVSTAR GPS is publicly available. Reference to this almanac data in regard to data encoded in the electromagnetic signals allows for an accurate derivation of pseudoranges if the receiver location is known. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Reference is again made to Figure 1A of the drawings wherein the configuration of the fully- operational NAVSTAR GPS is schematically illustrated. Each of the 24 GPS satellites 132-170 transmits electromagnetic signals which can be used to determine the absolute terrestrial position (that is, longitude, latitude, and altitude with respect to the Earth 172's center) of the vehicle 102.

Specifically, by knowing the relative position of at least three of the orbiting GPS satellites 132-170, the absolute terrestrial position of the vehicle 102 can be computed via simple geometric theory involving triangulation methods. The accuracy of the terrestrial position estimate depends in part on the number of orbiting GPS satellites 132-170 that are sampled by the vehicle 102. The sampling of more GPS satellites 132-170 in the computation increases the accuracy of the terrestrial position estimate. Conventionally, four GPS satellites, instead of three, are sampled to determine each terrestrial position estimate because of errors contributed by circuit clock differentials among the circuitry of the vehicle 102 and the various GPS satellites 132-170.

In the NAVSTAR GPS, electromagnetic signals are continuously transmitted from all of the GPS satellites 132-170 at a single carrier frequency. However, each of the GPS satellites 132-170 has a different modulation scheme, thereby allowing for differentiation of the electromagnetic signals. In the NAVSTAR GPS, the carrier frequency is modulated using a pseudorandom binary code signal (data bit stream) which is unique to each GPS satellite. The pseudorandom binary code signal is used to biphase modulate the carrier frequency. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of the vehicle 102 to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences that are extremely long, so that the sequences repeat no more than once per 276 days. As a result, the terrestrial position of the vehicle 102 can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

With reference to Figure 7, the GPS processing system 700 processes the GPS data from the GPS satellites 132-170 and the pseudolite data from any pseudolite(s) 105. Furthermore, the GPS receiver 706 decodes the C/A signals from the various GPS satellites 132-170.

Figure 2 illustrates navigation equations 212 regarding four GPS satellites 200-206 of the NAVSTAR GPS. The four GPS satellites 200, 202, 204, and 206 have respective pseudoranges R0, R2, R4, and R6 and comprise the current constellation of GPS satellites 132-170 recognized by the vehicle 102.

The navigation equations 212 include the clock bias $C_b$ between the GPS satellites 200-206 and the vehicle 102. The navigation equations 212 are used to compute the longitude and latitude of the vehicle 102 using the pseudoranges R0, R2, R4, and R6.

As is shown in the description block 208, each of the GPS satellites 200, 202, 204, and 206 transmits GPS data that includes timing data (GPS time) and ephemeris data. Using the navigation equations 212, which are well-known in the conventional art and the foregoing timing data, the pseudoranges R0, R2, R4, and R6 can be estimated (called actual pseudoranges) by the GPS processing system 700. Furthermore, using the foregoing ephemeris data and almanac data on the Earth 172, the pseudoranges R0, R2, R4, and R6 can be estimated (called estimated pseudoranges) by the GPS processing system.

2. Operation

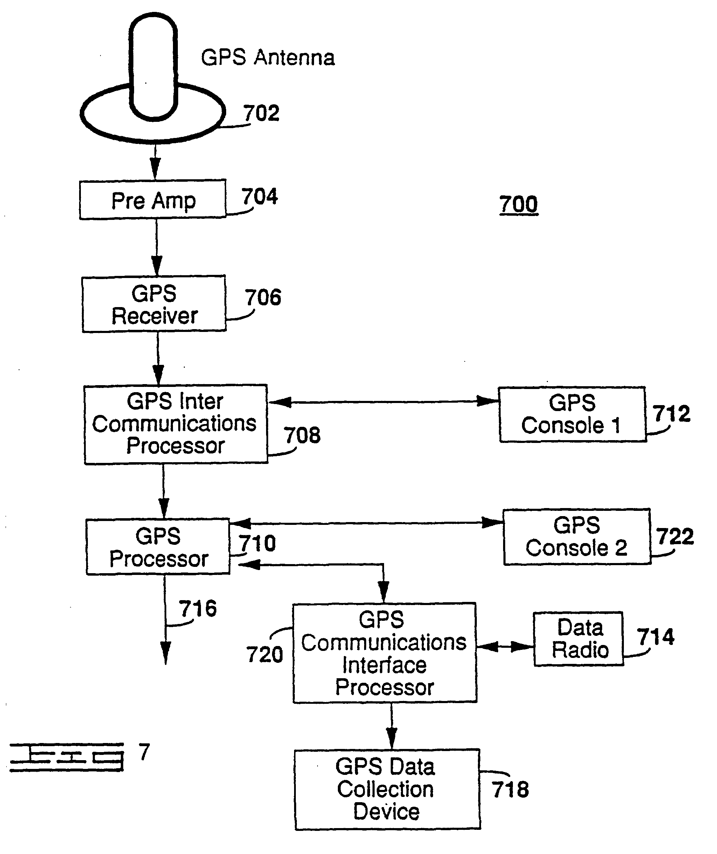

Turning now to Figure 6, a representative GPS constellation is shown in operation. Four GPS satellites 200, 202, 204 and 206 are transmitting GPS data. Both the vehicle 102 and the base station 188 are receiving these signals from each of these GPS satellites 200, 202, 204, and 206 on their respective GPS antennas 312 and 316. In the preferred embodiment, both the C/A code and the carrier frequency are received at GPS antennas 312 and 316 for processing.

In addition to the four GPS satellites shown in the Figure 6 is the pseudolite 105. The pseudolite(s) 105 can be strategically placed around the perimeter of any mine pit and can emulate the GPS satellites 200, 202, 204, and 206 as shown in Figure 6. This arrangement can be extremely useful in situations such as a mine pit, cavity, or the like, in which mining vehicles may be out of view of one or more of the GPS satellites 200, 202, 204, and 206, because of topographic features such as high mine pit walls. The ground-based pseudolite(s) 105 provides additional ranging signals and can thus improve availability and accuracy of the positioning capability in the present invention.

The pseudolite(s) 105 is synchronized with the GPS satellites 200, 202, 204, and 206 and has a signal structure that, while different, is compatible with the GPS satellites 200, 202, 204, and 206. Moreover, the distance (range) between the vehicle 102 and the pseudolite(s) 105 is calculated similarly as the distance between the vehicle 102 and one of GPS satellites 200, 202, 204, and 206. With pseudolite(s) 105, the ranging error does not include selective availability nor ionospheric errors. However, other errors must be accounted for such as tropospheric, pseudolite clock error and multipath errors.

In a deep pit surface mining operation, the view of the sky from a vehicle 102 in the mine can be limited by the walls of the mine. Consequently, an adequate number of GPS satellites may not be in view for the GPS processing system 700 to properly derive a first position estimate. In such a case in the present invention, one or more pseudolites 105 can serve as secondary sources. The pseudolite(s) can be placed on the rim of the mine or elsewhere. The pseudolite(s) 105 can be used by the vehicle 102 in conjunction with any visible GPS satellites to obtain accurate first position estimates.

It is also envisioned that other forms of secondary sources could be implemented to aid GPS satellites or to completely eliminate the need to receive GPS data from the GPS satellites. Moreover, a laser scanning technique may utilized to give localized ranging data to the vehicle 102 from a secondary reference source.

Communication channel 618 represents the communications link between the base station 188 and the vehicle 102. In the preferred embodiment, the communication channel 618 comprises an electromagnetic link established by data-radios 620 and 622 which are transceivers. The communication channel 618 is used to transfer data between the base station 188 and the vehicle 102. It is envisioned that other forms of communication media may be utilized. For example, a laser scanning technique may utilized to convey information from the base station 108 to the vehicle 102.

The data radios 620 and 622 are located at the base station 188 and vehicle 102 respectively. The radios 620 and 622 are responsible for exchanging data between the base station 188 and the vehicle 102. The type of data exchanged will be discussed further below.

A radio transceiver which functions appropriately in the preferred embodiment as the data radios 620 and 622 is commercially available from Dataradio Ltd. of Montreal, Canada, Model Number DR-4800BZ.

Turning now to Figure 7, the preferred embodiment of a GPS processing system 700 is shown. The GPS processing system 700 on the vehicle 102 includes a GPS antenna 702. In the preferred embodiment, the GPS antenna 702 is receptive to the radio spectrum of electromagnetic radiation. However, the present invention contemplates reception of any signal by which GPS satellites 132-170 might encode data. In the preferred embodiment, the GPS antenna 702 is the commercially available antenna having Model No. CA3224 from Chu Associates Inc. of Littleton, Massachusetts.

The GPS antenna 702 is coupled to a preamplifier 704 so that the signals received at the GPS antenna 702 can be transmitted to the preamplifier 704. The term "couple" in the context of this document means any system and method for establishing communication. Coupling systems and methods may include, for example, electronics, optics, and/or sound techniques as well as any others not expressly described herein. In the preferred embodiment, coupling is commonly electronic and adheres to any one of numerous industry standard electronic interfaces.

The preamplifier 704 amplifies and down converts the GPS data received from the GPS antenna 702 so that the GPS data can be processed, or decoded. The present invention contemplates any method by which the received signals can be amplified. In the preferred embodiment, the preamplifier 704 is the commercially available preamplifier having Model No. 5300, Series GPS RF/IF from Stanford Telecommunications Inc. (STel) of Santa Clara, California. The preamplifier 704 is coupled to a GPS receiver 706. The GPS receiver 706 processes the GPS data sent from the GPS satellites 200, 202, 204, and 206 in view of the GPS antenna 702. The GPS receiver 706 computes actual pseudoranges for each of the GPS satellites 200, 202, 204, and 206. Actual pseudoranges are defined in this document as an estimate of the pseudoranges R0, R2, R4, and R6 which is derived from the time delay between the transmission of electromagnetic signals from the GPS satellites and the reception of the electromagnetic signals by the GPS processing system 700. Moreover, in the preferred embodiment, the GPS receiver 706 can process in parallel all of the actual pseudoranges for the GPS satellites 200, 202, 204, and 206.

In the preferred embodiment of the present invention, the GPS receiver 706 produces this data when four or more GPS satellites are visible.

The GPS processing system 700 can compute (at GPS processor 710) the first position estimate with an accuracy of approximately 25 meters when an optimal constellation of four GPS satellites 200, 202, 204, and 206 is in view. When an optimal constellation of five GPS satellites (not shown) is in view, the GPS processing system 700 of the preferred embodiment can compute the first position estimate with an accuracy of approximately 15 meters. An "optimal" constellation is one in which the relative positions of the GPS satellites in space affords superior triangulation capability, triangulation technology being well known in the art.

In the preferred embodiment, the GPS receiver 706 outputs actual pseudoranges and the number of GPS satellites 132-170 currently being sampled. In cases in which the number of GPS satellites 132-170 viewed for a series of first position estimates is less than four, the VPS weighted combiner 1204 in the preferred embodiment does not use the first position estimates received from the GPS processing system 700 (specifically, the GPS processor 710) in the computation of the third position estimate.

In the preferred embodiment, the GPS receiver 706 comprises a Model Number 5305-NSI receiver, which is commercially available from Stanford Telecommunications Inc. However, any receiver which is capable of providing actual pseudoranges and the number of sampled GPS satellites may be utilized.

Because of the type of receiver used in the preferred embodiment, the GPS receiver 706 is coupled to a GPS intercommunication processor 708. In the preferred embodiment, the intercommunication processor 708 is the commercially available 68000 microprocessor from Motorola Inc., of Schaumburg, Illinois, U.S.A. Any processor alone or in combination with the GPS receiver 706 for accomplishing the same purpose as described below may be utilized.

The GPS intercommunication processor 708 is further coupled to a GPS processor 710 and a GPS Console 1 712. The GPS intercommunication processor 708 coordinates data exchange between these three devices. Specifically, the GPS intercommunication processor 708 receives pseudorange data from the GPS receiver 706 which it passes on to the GPS processor 710. The pseudorange data includes, for example, the actual pseudoranges computed by the GPS receiver 706, the number of GPS satellites 200, 202. 204, and 206 currently being viewed by the GPS receiver 706, and other GPS data needed by the GPS processor 710 to compute the estimated pseudoranges for each of the GPS satellites 200, 202, 204, and 206. The GPS intercommunication processor 708 also relays status information regarding the GPS receiver 706 and the GPS processor 710 to the GPS Console 1 712.

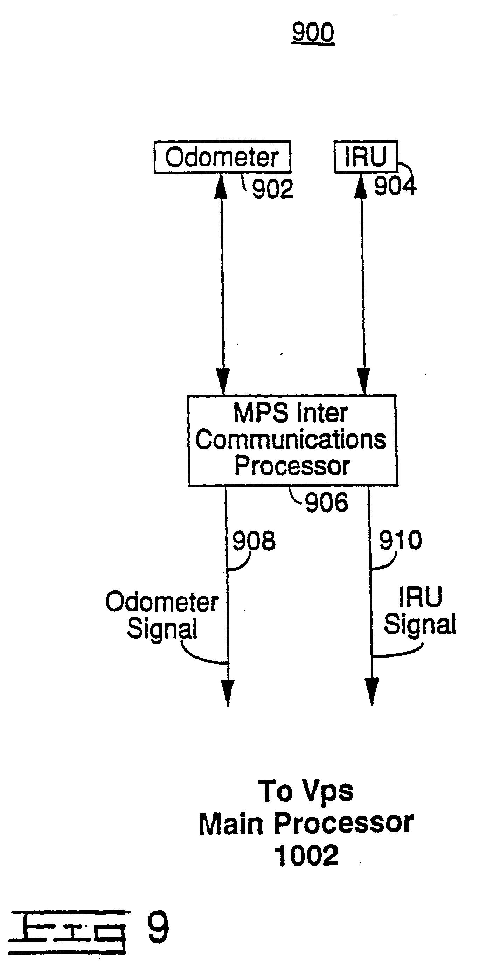

The GPS intercommunication processor 708 transmits the above information to the GPS processor 710. In the preferred embodiment, the GPS processor 710 comprises the 68020 microprocessor, which is commercially available from Motorola Inc. Figure 8 is a low level flow diagram 800 illustrating the functioning of the software in the GPS processor 710.

The GPS processor 710 uses a number of algorithms and methods to process the data it receives including, for example, a GPS Kalman filter 802, which is shown in Figure 8. The Kalman filter 802 is well known in the conventional art. In the preferred embodiment, the GPS Kalman filter 802 is a module in the software of the GPS processor 710.

In the best mode of the present invention, the threshold of the GPS Kalman filter 802 does not vary continuously or in very minute discreet intervals. Rather, the intervals are larger discreet intervals and, therefore, less accurate than a continuously varying filter. However, the Kalman filter 802 of the present invention is easy to implement, less costly, and requires less computation time than with a continuously varying filter. However, it should be noted that using a continuously varying filter is possible and is intended to be included herein.

For operation, the GPS Kalman filter 802 must be given an initial value at system start-up. From the initial value and GPS data collected by the GPS receiver 706, the GPS Kalman filter 802 extrapolates a current state (which includes the first position estimate and the vehicle velocity for northing, easting and altitude). The GPS Kalman filter 802 operates in a cyclical manner. In other words, the extrapolated current state is assumed to be the initial value for the next iteration. It is combined/filtered with new GPS data (an update) to derive a new current state.

The way that the GPS data is utilized is dependent on a priori saved file called a control file 820. The control file 820 will determine the following: (1) the noise threshold, (2) the speed of response, (3) the initial states of vehicle position and velocity, (4) the extent of deviation before a reset of the GPS Kalman filter 802 occurs, (5) the number of bad measurements allowed, and/or (6) the time allotted between measurements.

The GPS processor 710 then computes the estimated pseudoranges, the first position estimate, and the vehicle velocity (from Doppler shift) using the above current state and any biases, including the clock biases and the spatial biases. However, the GPS processor 710 discards the computed velocity data when the C/A code, rather than the carrier frequency, is utilized by the GPS receiver 706 to derive the vehicle velocity. The rationale for discarding the vehicle velocity is that experimentation has shown that it is not adequately accurate when derived from the C/A code.

Vehicle velocities derived from the carrier frequency (Doppler shift) are much more accurate than the velocities derived from the C/A code. In the preferred embodiment, the first estimated position (and vehicle velocity if derived from the carrier frequency) are encoded on GPS Signal 716 and sent on to the VPS main processor 1002 shown on Figure 10.

As previously discussed, the GPS processor 710 analyzes both the carrier frequency and the C/A code. Unlike data demodulated from the C/A code, data may be retrieved from the carrier frequency by the GPS receiver 706 at approximately 50 Hz (not approximately 2 Hz, as is the case for demodulating C/A code). This increased speed allows the present invention to produce more precise position and velocity determinations with less error.

Figure 8 illustrates other functions of the GPS processor 710 in the preferred embodiment. However, the present invention contemplates any method by which GPS data can be processed to determine pseudoranges. As shown at a flowchart block 816, a console function controls the operation of the GPS console 2. This console function regulates the operation of the GPS Kalman filter 802 by providing a user interface into the filter.

The VPS communications function 818 controls the outputs of the GPS Kalman filter 802 which are directed to the VPS 1000. At a flowchart block 806, it is shown that the GPS Kalman filter 802 requests and decodes data from the GPS receiver 706, which data is routed through an IPROTO function 804 shown at a flowchart block 804.

As shown, the IPROTO function 804 resides in the GPS intercommunications processor 708 and executes tasks associated with the GPS intercommunications processor 708. In the preferred embodiment, the IPROTO function 804 is the model number XVME-081, which is commercially available from Xycom Inc.

As shown at a flowchart block 810 the data transmitted over the communication channel 618 enters the IPRO-TO function 804. Much of this data is ultimately destined for the GPS Kalman filter 802. The communications manager function shown at a flowchart block 808, coordinates the incoming data from the IPROTO function. The communications manager function 808 also coordinates data received from an ICC function which is shown in a flowchart block 812. The ICC function 812 exchanges data with the data- radio 714 (via GPS intercommunications processors 720) and the GPS data collection device 718 as shown.

The GPS console 712 is well known in the art. Many types of devices are commercially available which provide the desired function. One such device is commercially available from Digital Equipment Corporation of Maynard, Massachusetts Model Number VT220. The GPS console 712 displays processor activity data regarding the GPS intercommunications processor 708 and the GPS processor 710.

The GPS processor 710 is coupled to a GPS console 722 and a GPS communications interface processor 720. The GPS console 722 is well known in the art. Many types of devices are commercially available which provide the desired console function. One such device is commercially available from Digital Equipment Corporation of Maynard, Massachusetts Model Number VT220. The GPS console 722 provides the user interface from which the GPS processor 710 can be activated and monitored.

The GPS communications interface processor 720 is essentially an I/O board. It is coupled to a data-radio 714 and a GPS data collection device 718. The GPS communications interface processor 720 coordinates data exchange between the GPS processor 710 and both the data-radio 714 and the GPS data collection device 718. The communications interface processor 720 in the preferred embodiment is the model no. MVME331, which is commercially available from Motorola Inc., U.S.A.

The data-radio 714 establishes a communication link between the GPS processor 710 (through the GPS communications interface processor 720) at the vehicle 102 to a similar data-radio 714 located at the base station 188 (see Figure 6). In the preferred embodiment, the data-radio 714 communicates synchronously at 9600 baud using RF frequencies. The data-radio 714 at the base station 188 provides periodic updates on the amount of spatial bias and clock bias for each satellite to the data-radio 714 at the vehicle 102 at a rate of 2 Hz (twice per second). Spatial and clock biases computed by the base station 188 will be discussed further below.

The GPS data collection device 718 can be any of numerous common electronic processing and storage devices such as a desktop computer. Any personal computer (PC) manufactured by the International Business Machines Corporation (IBM) of Boca Raton, Florida, U.S.A., can be implemented.

C. Motion Positioning System (MPS)

The MPS 900 of the preferred embodiment is illustrated in Figure 9. The MPS 900 derives the second position estimate of the vehicle 102. Usually, this second position estimate is combined and filtered with the first position estimate to thereby derive a more accurate third position estimate. However, it is envisioned that in some instances the second position estimate may be utilized exclusively as the third position estimate, when the first position estimate is deemed to be drastically inaccurate.

For the MPS 900, the preferred embodiment envisions the combination of the odometer 902 and the IRU 904. However, the IRU 904 could be utilized without the odometer 902. The odometer and the IRU 904 are coupled to an MPS intercommunications processor 906 to thereby comprise the MPS 900. IRUs and odometers are well known in the art and are commercially available, respectively, from Honeywell Inc. of Minneapolis, Minnesota, Model Number HG1050-SR01 and from Caterpillar Inc. of Peoria, Illinois, Part Number 7T6337.

The IRU 904 comprises ring-laser gyroscopes and accelerometers of known design. The IRU 904 used in the preferred embodiment is a replica of the system used by Boeing 767 aircrafts to determine aircraft position, except that the IRU 904 has been modified to account for the lesser dynamics (for example, velocity) that the vehicle 102 exhibits relative to that of a 767 aircraft.

The IRU 904 can output vehicle position at 5 Hz, velocity at 10 Hz, roll at 50 Hz, pitch at 50 Hz, and yaw data at 50 Hz. Furthermore, in the preferred embodiment, the vehicle odometer 902 can output the distance travelled by the vehicle 102 at 20 Hz.

The laser gyroscopes of the IRU 904, in order to function properly, must at first be given an estimate of the vehicle 102's latitude, longitude and altitude. Using this data as a baseline position estimate, the gyroscopes then use a predefined calibration in conjunction with forces associated with the rotation of the Earth 172 to determine an estimate of the vehicle 102's current position.

This information is then combined by the IRU 904 with data acquired by the IRU 904 accelerometers to produce a more accurate, second position estimate of the vehicle's current position. The second position estimate from the IRU 904 and the data from the vehicle odometer 902 are transmitted to the MPS intercommunications processor 906 as shown by respective arrows 910 and 908 of Figure 9. Arrow 114 of Figure 1 includes arrows 908 and 910.

Upon experimentation, it has been determined that the IRU 904 may provide erroneous second position estimates of the vehicle 102 due to imprecise constituent parts. More specifically, in the preferred embodiment, it has been observed that the directional output of the IRU 904 has drifted counterclockwise from the direction north during operation. The drift is dependent upon the direction in which the vehicle 102, and consequently the IRU 904, is travelling.

Moreover, the drift can be defined by an IRU drift equation. The IRU drift equation can be derived similar to the construction of path equations described in regard to the weighted path history technique or similar to the construction of parabolic equations described in regard to the parabolic bias technique

After derived, the IRU drift equation can be utilized to extrapolate more accurate second position estimates.

In the preferred embodiment, the intercommunications processor 1002 comprises the commercially available 68000 microprocessor from Motorola Inc. The intercommunications processor 1002 coordinates exchange of data between the MPS 900 and the VPS 1000. Any processor with similar function as described herein may be utilized.

D. Vehicle Positioning System (VPS)

Turning now to Figure 10, the preferred embodiment of the architecture of the VPS 1000 is depicted.

GPS processing system 700 and MPS 900 are independently coupled to the VPS main processor 1002. The independent coupling is an important novel feature of the present invention. Because they are independent, the failure of one of the systems will not cause the other to become inoperative. Thus, if the GPS processing system 700 is not operative, data can still be collected and processed by the MPS 900 and, consequently, the VPS 1000. The GPS processing system 700 and the MPS 900 transmit signals 716, 908, 910 to the VPS main processor 1002, as shown. These signals contain position, velocity, time, pitch, roll, yaw, and distance data (see Figures 7 and 9 and associated discussions).

The VPS main processor 1002 is coupled to the VPS I/O processor 1004. The VPS main processor 1002 transmits a signal 1008 to a VPS I/O processor 1004, as shown. The signal 1008 comprises the third position estimate. The third position estimate is derived from the GPS, IRU, and odometer data noted above, and more specifically, the first and second position estimates of the vehicle 102.

The present invention contemplates any system and method by which the signals indicated by arrows 716, 908 and 910 can be received by the VPS main processor 1002 from the GPS processing system 700 and MPS system 900 and forwarded to the VPS main processor 1002. The VPS main processor 1002 is the 68020 microprocessor, which is commercially available from Motorola Inc., U.S.A.

The VPS I/O processor 1004 is coupled to a VPS communications interface processor 1020. The communications interface processor 1020 is the MVME331 processor, which is commercially available from Motorola Inc., U. S.A. Any processor accomplishing the same purpose as described below may be utilized.

In the preferred embodiment, the VPS communications interface processor 1020 is coupled to three different devices: (1) a VPS console 1012, (2) a data collection device 1014, and (3) the navigation system 1022. The VPS communications interface processor 1020 routes the data, including the third position estimate, contained in output 1016 to the above three devices at a rate of 20 Hz.

The VPS console 1012 is well known in the art, and is commercially available from Digital Equipment Corporation, of Minneapolis, Minnesota, Model Number VT220. This VPS console 1012 is used to display the current status of the VPS I/O processor 1004.

The VPS data collection device 1014 can be any of numerous commercially available electronic processing and storage devices, for example, a desktop PC. Any MacIntosh PC available from Apple Computer of Cupertino, California, can be used successfully to achieve this purpose.

The navigation system 1022 comprises the features associated with the navigation of the vehicle 102. The VPS 1000 transmits the third position estimate to the navigation system 1022, so that the navigation system 1022 can accurately and safely guide the autonomous vehicle 102.

E. Base Station

With reference to Figure 7, the host processing system 186 at the base station 188 comprises the GPS processing system 700 of Figure 7. The purposes of the host processing system 186 at the base station 188 are to (1) monitor the operation of the vehicle 102, (2) provide a known terrestrial reference point from which spatial biases

can be produced, and (3) provide any other information to the vehicle 102 when necessary over the high-speed data communication channel 618.

In the preferred embodiment, the base station 188 will be located close to the vehicle 102, preferably within 20 miles. The close geographical relationship will provide for effective radio communication between the base station 188 and the vehicle 102 over the communication channel 618. It will also provide an accurate reference point for comparing satellite transmissions received by the vehicle 102 with those received by the base station 188.

A geographically proximate reference point is needed in order to compute accurate spatial biases. Spatial and clock biases are, in effect, the common mode noise that exists inherently in the NAVSTAR GPS and the GPS processing system 700. Once computed at the base station 188, the spatial and clock biases are then sent to the vehicle 102 using the data-radio 714, as shown in Figure 7. The spatial biases are computed using various methods which are discussed further below.

In the preferred embodiment of the present invention, the host processing system 186 at the base station 188 further coordinates the autonomous activities of the vehicle 102 and interfaces the VPS 1000 with human supervisors.

F. Satellite Based Accuracy Improvements

The present invention improves the accuracy of the position estimates of the vehicle 102 via a number of differential correction techniques. These differential bias techniques are used to enhance the first, second, and third position estimates.

Several of these differential correction techniques are designed to directly remove errors (noise or interference) in the calculation of pseudoranges R0, R2, R4, and R6 (both actual and estimated pseudoranges). The removal of these errors results in a more precise first position estimate, which is outputted by the GPS processing system 700 to the VPS 1000, and ultimately, in a more precise third position estimate, which is outputted by the VPS 1000 to the navigation system 1022.

In the preferred embodiment, the host processing system 186 at the base station 188 is responsible for executing these differential techniques and for forwarding the results to the vehicle 102. Recall that the host processing system 186 comprises the GPS processing system 700, just as the vehicle 102. The term "differential" is used because the base station 188 and the vehicle 102 use independent but virtually an identical GPS processing system 700. Furthermore, because the base station 188 is stationary and its absolute position is known, it serves as a reference point from which to measure electronic errors (noise or interference) and other phenomena inducing errors.

IV. Navigation System

A. Overview

In considering implementation of an autonomous navigation system, there are some basic questions which any autonomous system must be able to answer in order to successfully navigate from point A to point B. The first question is "where are we (the vehicle) now?" This first question is answered by the positioning system portion of the present invention, as discussed above in section II.

The next or second question is "where do we go and how do we get there?" This second question falls within the domain of the navigation system portion of the present invention, discussed in this section (III).

A further (third) question, really a refinement of the second one, is "how do we actually physically move the vehicle, for example, what actuators are involved (steering, speed, braking, and so on), to get there?" This is in the domain of the vehicle controls subsystem of the navigation system, also discussed below.

As has been discussed implicitly above, autonomous navigation, of a mining vehicle as an example, may provide certain significant advantages over conventional navigation. Among them is an increased productivity from round the clock, 24 hr. operation of the vehicles. The problems presented by dangerous work environments, or work environments where visibility is low, are particularly well suited to solution by an autonomous system.

There are, for instance, some mining sites where visibility is so poor that work is not possible 200 days of the year. There are other areas which may be hazardous to human life because of being contaminated by industrial or nuclear pollution. An area may be so remote or desolate that requiring humans to work there may pose severe hardships or be impractical. The application of the present invention could foreseeably include extraterrestrial operations, for example, mining on the Moon, provided that the necessary GPS satellites were put in Moon orbit.

In a typical application of the present invention, as shown in Figure 3, with regard to the navigation of a mining vehicle at a mining site, there are three basic work areas: the load site, the haul segment, and the dump site. At the load site, a hauling vehicle may be loaded with ore in any number of ways, by human operated shovels for instance, controlled either directly or by remote control, or by autonomous shovels. The hauling vehicle then must traverse an area called the haul segment which may be only a few hundred meters or may be several km's. At the end of the haul segment is the dump site, where the ore is dumped out of the hauling vehicle to be crushed, or otherwise refined, for instance. In the present invention, autonomous positioning and navigation may be used to control the hauling vehicle along the haul segment. Autonomously navigated refuelling and maintenance vehicles are also envisioned.

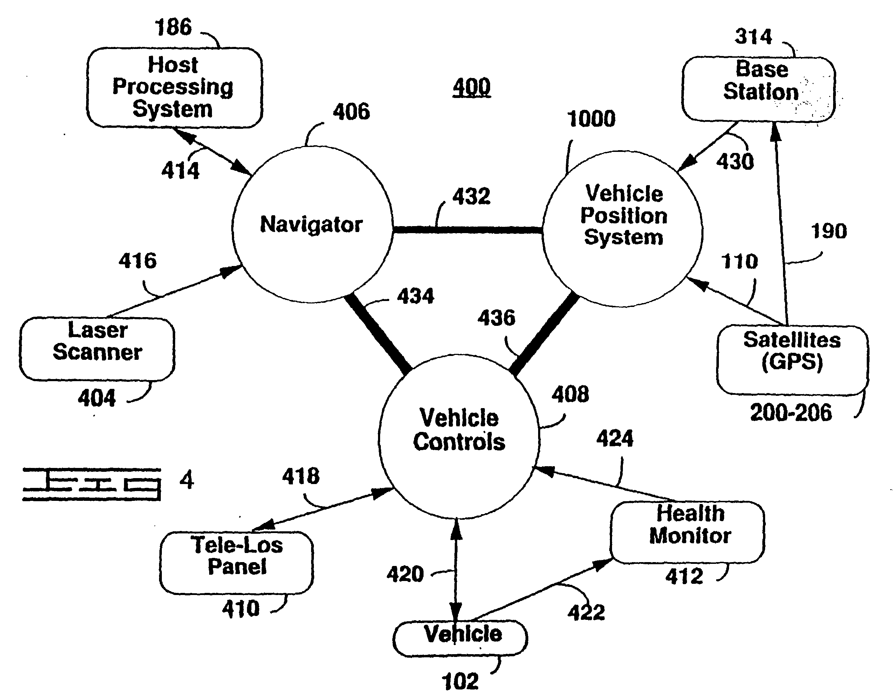

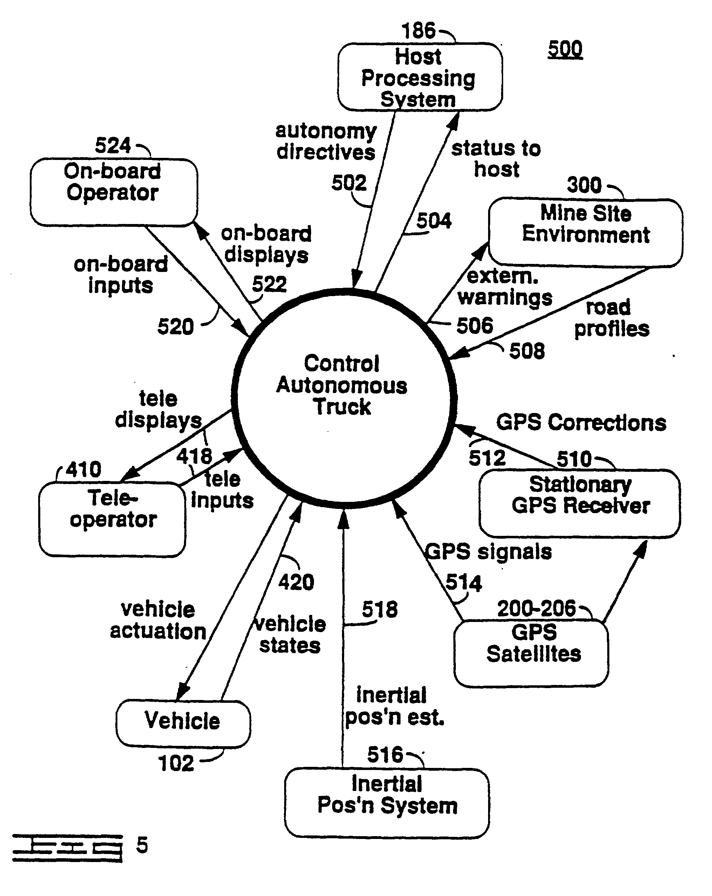

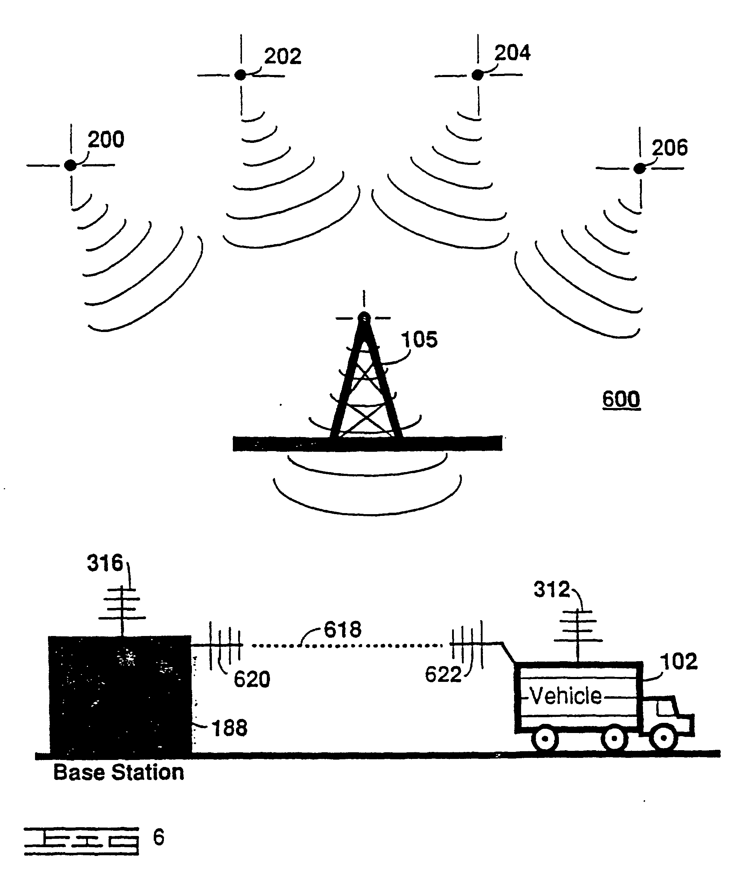

Referring now to Figures 4 and 5, navigation of the AMT (Autonomous Mining Truck) encompasses several systems, apparatus and/or functions. The VPS 1000 subsystem of the overall AMT system as described above, outputs position data that indicates where the vehicle is located, including, for example, a North and an East position.

Referring now to Figures 4 and 5, position data output from the VPS is received by a navigator 406. The navigator determines where the vehicle wants to go (from route data) and how to get there, and in turn outputs data composed of steer and speed commands to a vehicle controls functional block 408 to move the vehicle.

The vehicle controls block then outputs low level commands to the various vehicle 102 systems, such as the governor, brakes and transmission. As the vehicle is moving towards its destination, the vehicle controls block and the VPS receive feed-back information from the vehicle indicative of, for example, any fault conditions in the vehicle's systems, current speed, and so on.

Navigation also must include an obstacle handling (detection and avoidance) capability to deal with the unexpected. A scanning system 404 detects obstacles in the vehicle's projected trajectory, as well as obstacles which may be approaching from the sides and informs the navigator of these.

The navigator may be required to then decide if action is required to avoid the obstacle. If action is required, the navigator decides how to avoid the obstacle. And after avoiding the obstacle, the navigator decides how to get the vehicle back onto a path towards its destination.

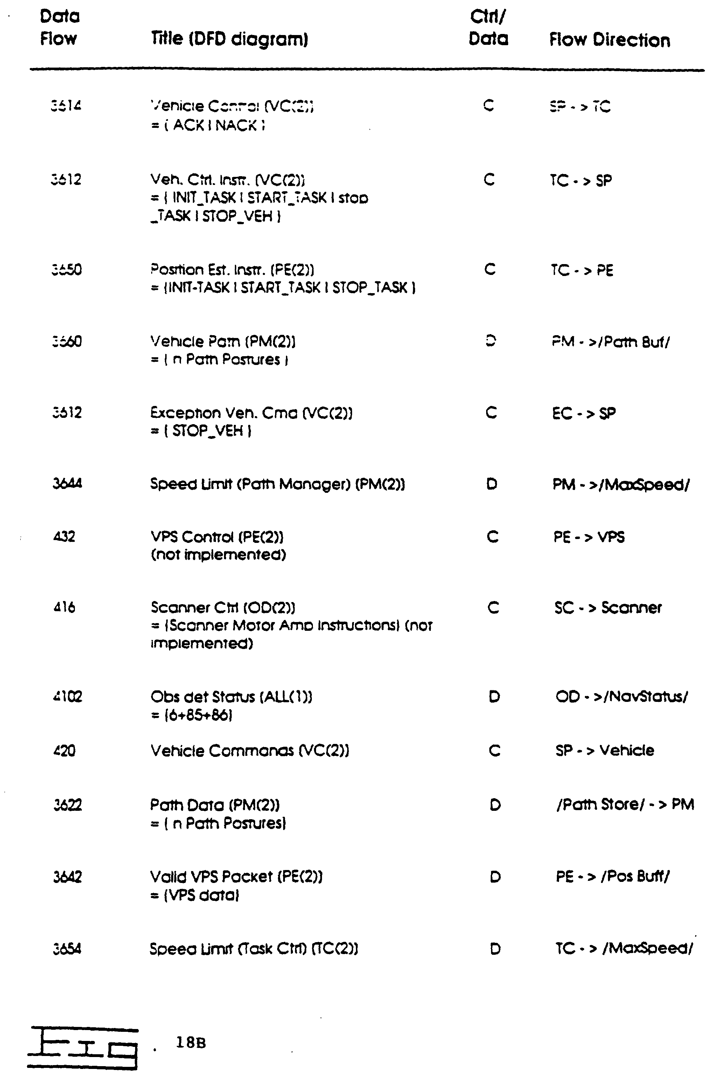

Referring now to Figure 16, titled the context diagram, and Figure [18]A- [18]D definitions of the communications, which are shown as circles with numbers in them, are provided below:

502. Host commands & queries:

Commands given by the host to the vehicle manager. These commands could be of several types:

  initiate/terminate;
  supply parameters;
  emergency actions; and
  directives.

Queries inquire about the status of various parts of the navigator.

504. replies to host:

These are responses to the queries made by the host.

432. position data:

This is streamed information provided by the VPS.

416. Range data:

This is range data from the line laser scanner.

432. VPS control:

These are commands given to the VPS to bring it up, shut it down and switch between modes.

416. scanner control:

These are commands sent to the laser scanner to initiate motion and set follow velocity profile.

420. steering & speed commands

These are commands given to the vehicle to control steering and speed. These commands are issued at the rate of 2-5 Hz.

Referring to Figure 5, in the preferred embodiment of the present invention, as described above, both the VPS and the navigator are located on the vehicle and communicate with the base station 188 to receive high level GPS position information and directives from a host processing system 186, discussed below. The system gathers GPS position information from the GPS satellites 200-206 at the base station and on-board the vehicle so that common-mode error can be removed and positioning accuracy enhanced.

In an alternate embodiment of the present invention, portions of the VPS and navigator may be located at the base station.

The host at the base station may tell the navigator to go from point A to point B, for instance, and may indicate one of a set of fixed routes to use. The host also handles other typical dispatching and scheduling activities, such as coordinating vehicles and equipment to maximize efficiency, avoid collisions, schedule maintenance, detect error conditions, and the like. The host also has an operations interface for a human manager.

It was found to be desirable to locate the host at the base station and the navigator on the vehicle to avoid a communications bottleneck, and a resultant degradation in performance and responsiveness. Since the host sends relatively high-level commands and simplified data to the navigator, it requires relatively little communication bandwidth. However, in situations where broad-band communication is available to the present invention, this may not be a factor.

Another factor in determining the particular location of elements of the system of the present invention, is the time-criticality of autonomous navigation. The navigation system must continually check its absolute and relative locations to avoid unacceptable inaccuracies in following a route. The required frequency of checking location increases with the speed of the vehicle, and communication speed may become a limiting factor even at a relatively moderate vehicle speed.

However, in applications where maximum vehicle speed is not a primary consideration and/or a high degree of route following accuracy is not critical, this communication factor may not be important. For example, in rapidly crossing large expanses of open, flat land, in a relatively straight path, it may not be necessary to check position as often in the journey as it would be in navigating a journey along a curvaceous mountain road.

Conceptually, the navigation aspects of the present invention can be arbitrarily divided into the following major functions:

> route planning/path generation;
> path tracking; and
> obstacle handling.

The function of the present invention are discussed below.

B. Route Planning/Path Generation

1. Introduction

Autonomous vehicle navigation in accordance with the present invention, conceptually consists of two sub problems, path generation and path tracking, which are solved separately.

Path generation uses intermediate goals from a high level planner to generate a detailed path for the vehicle 102 to follow. There is a distinct trade-off between simplicity of representation of such plans and the ease with which they can be executed. For example, a simple scheme is to decompose a path into straight lines and circular curves. However, such paths cannot be tracked precisely simply because of discontinuities in curvature at transition points of segments that require instantaneous accelerations.

Following path generation, path tracking takes, as input, the detailed path generated and controls the vehicle 102 to follow the path as precisely as possible. It is not enough to simply follow a pre-made list of steering commands because failure to achieve the required steering motions exactly, results in steady state offset errors. The errors accumulate in the long run. Global position feedback 432 may be used to compensate for less than ideal actuators. Methods have been developed for the present invention which deviate from traditional vehicle control schemes in which a time history of position (a trajectory) is implicit in the plan specified to the vehicle 102.

These methods are appropriately labelled "path" tracking in that the steering motion is time decoupled; that is, steering motions are directly related to the geometric nature of the specified path, making speed of the vehicle 102 an independent parameter.

Referring now to Figure 3, an autonomous vehicle 102 may be required to traverse a haul segment 320 to a dump site 322, and after dumping its load, traverse another haul segment to a service shop 324, under the direction of the host processing system 186. The host processing system 186 determines the vehicle 102's destinations, which is called "cycle planning." The determination of which routes to take to get to a desired destination must be accomplished by "route planning."

"Route planning" is the determination of which path segments to take to get to a desired destination. In general, a route can be thought of as a high-level abstraction or representation of a set of points between two defined locations. Just as one can say to a human driver "take route 95 south from Lobster, Maine to Miami, Florida," and the driver will translate the instruction into a series of operations (which may include starting the vehicle 102, releasing the brake 4406, engaging the transmission 4610, accelerating to the posted speed limit, turning the steering wheel 4910, avoiding obstacles 4002, and so on), the autonomous navigation system of the present invention performs similarly. As used in the system of the present invention, a "route" is a sequence of contiguous "segments" between the start and end of a trip.

An autonomous vehicle 102 may begin at any position in the sequence and traverse the route in either direction. A "segment" is the "path" between "nodes." A "node" is a "posture" on a path which requires a decision. Examples of nodes are load sites 3318, dump sites 322, and intersections 326.

There are various types of segments. For instance, there are linear and circular segments. Linear segments (lines) are defined by two nodes. Circular segments (arcs) are defined by three nodes.

"Postures" are used to model parts of a route, paths and nodes for instance. Postures may consist of position, heading, curvature, maximum velocity, and other information for a given point on the path.

A "path" is a sequence of contiguous postures.

A segment is, therefore, a sequence of contiguous postures between nodes. All segments have a speed associated with them, which specifies the maximum speed with which the vehicle 102 is to traverse that segment. The navigator 406 can command slower speeds, if necessary, to meet other requirements.

Determining which postures are required to define a path segment by analytical, experimental or a combination of both, is called "path planning" in accordance with the present invention. To bring the discussion full circle, a sequence of contiguous routes, as mentioned above, is referred to as a "cycle," and a vehicle 102's work goals determine its "cycle."

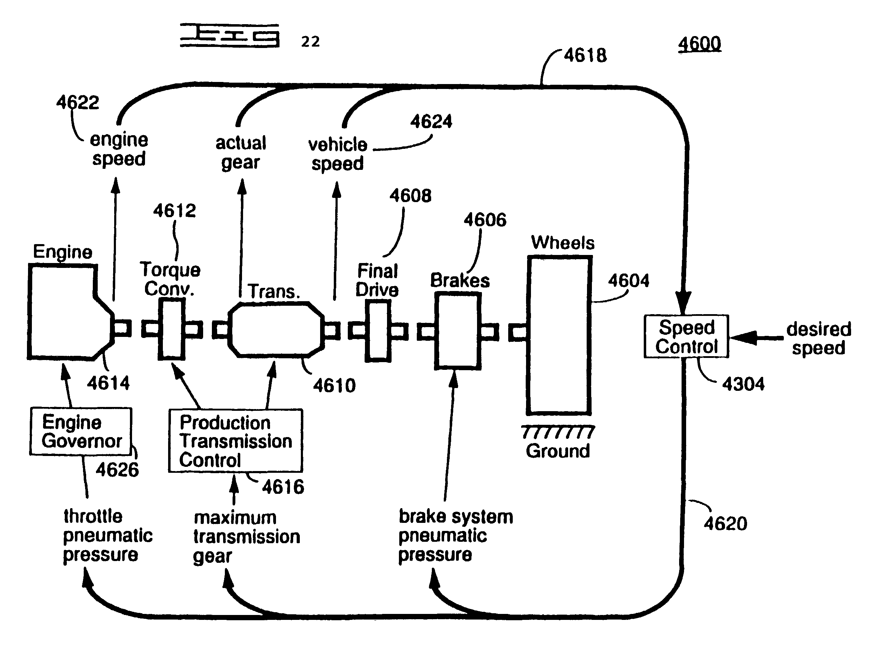

Therefore, to define a route one must first define the nodes and segments. Next, the nodes and segments must be ordered. Finally the routes must be defined by specifying where in the ordered set a route is to begin, and in which direction the ordered set is to be traversed (See Figure 22 which illustrates these concepts of the present invention).

The aforementioned method of defining routes was developed for memory efficiency in the present invention. It is also a convenient way to define many routes on a specific set of nodes and segments.

In a real world example of the present invention, picture a site where there are many intersecting roads 326. A route programmer would define nodes at the intersections, and segments to define the roads between the intersections. Routes would therefore be determined by the roads and intersections. There will however, be many ways to get from point A to point B (many routes) with a fixed set of intersections and roads.

The path-tracking method of the present invention (discussed below) uses route curvature to steer the vehicle. Methods of route definition using lines and arcs do not provide for continuous curvature. Clothoid curves are another way to define routes.

Another method of defining routes developed by the inventors, fits B-splines to the driven data. B-splines provide continuous curvature and therefore enhance tracking performances. In addition, since B- splines are free form curves, a route may be defined by a single B-spline curve. By using free form curves, a more robust method (semi-automatic) for fitting routes to data collected by driving the vehicle over the routes is produced by the present invention.

Referring to Figures 4, in operation, the host processing system 186 from the base station 188 commands an identified vehicle 102 to take route N from its present location. The navigator 406 functions to generate a path by translating "route 1" into a series of segments, each of which may have a "posted" or associated maximum speed limit, which together form a generated path for the vehicle to attempt to follow. By specifying routes and commanding the autonomous vehicle 102 with high-level commands this way, enormous data requirements and inefficiencies are in the present invention avoided in giving directions.

The navigator 406 stores the routes as a linked-list of path segments, rather than the set or series of sets of individual points. These segments are also abstractions of the set of points between defined locations or nodes.

## 2. ROUTE CREATION AND STORAGE

### a. INTRODUCTION

In one embodiment of the present invention, in order to create routes for a site 300, data is first collected from the VPS 1000 and stored while a human drives the vehicle 102 over the road system of the work site 300. Nodes and segments are then fitted to the stored driven data, and organized into routes per the aforementioned procedure.

An application on an APOLLO Computer (now HEWLETT-PACKARD of Palo Alto, California) work station (a graphics display system, not shown) was developed to graphically fit route data to the stored driven data and to further define routes (that is, speeds, sequences, starting point, traversal direction). Any graphics work stations equivalent to the APOLLO could be used.

Once the routes for a site are defined, the route data is written to a permanent storage device. In one embodiment of the present invention, the storage device used is a bubble memory cartridge 5302 with an associated reader/writer. The bubble memory device 5302 is durable and retains the data when power is disconnected. The APOLLO application is capable of writing data to a cartridge 5302 and reading data from a cartridge 5302.

As implied above, routes in the present invention may be predefined, or they may be generated dynamically.

In mining applications, generally a site 300 is surveyed and roads are pre-planned, carefully laid out and built. The routes used by the navigation system may then either be obtained from a manually created computer data base (created specifically to be used by the navigation system), or alternately, a vehicle may be physically driven over the actual routes on site to learn the routes as described above. In the learning method, several trips over a given route may be made. Then the variations in the data (due for instance to driver weaving) are averaged, and a smoothed-out best fit developed.

b. <u>ROUTE DEFINITION</u>

In one embodiment of the present invention, the following method is used for route definition.

Define the nodes and segments upon which the routes will be built. Place the node and segment data into an array called the "routeData" array. Each record in the array contains the following information:

1. Type of item (that is, node, linear segment, circular segment, end of route marker)
2. If node item, define the north and east coordinates of the node.

else if linear segment item, define the speed along the segment.
else if circular segment item, define the north and east coordinates of the center, the radius, the direction the circle is traversed (that is, clockwise, or counterclockwise), and the speed along the segment.
else if end of route marker, there is no other information.

2. Link the node and segment data together into sequences. The sequences are simply an array of indexes into the routeData array. Each sequence must begin with an end of route marker, followed by a node, then the remainder of the sequence alternate between segments and nodes until the sequence is terminated by another end of route marker. An example sequence would be,
1, 6, 3, 4, 7, 9, 10, 23, 78, 1
where the integers are indexes into the routeData array.
3. Finally define a route by specifying an index into the sequence array and whether to index through the sequence in the positive or negative direction. Place the index and index direction into an array called the "routeSpec" array. An item in the route spec array may look like the following:

6, 1     This specification defines a route which begins at node 6 and is indexed in the positive direction.
78, -1     This specification defines a route which begins at node 78 and is indexed in the negative direction.

A user simply tells the vehicle which item in the routeSpec array to use as a route.
4. The aforementioned data is stored onto the storage device in the order which it was defined in steps 1 - 3.

c. <u>NAVIGATOR ROUTE USAGE</u>

The following describes how the navigator 406 uses the defined routes from the above method of the present invention.

When the navigator 406 is powered on it reads the route information from the storage device 5302 and stores it in RAM in the syntax already presented.

Next the operator specifies a route for the vehicle 102 to follow. Again, the route is simply an index into the routeSpec array.

When the navigator 406 decides that all systems are ready for auto-operation, it sends a message to the vps_posture task 5324 telling it to engage.

The vps_posture task 5324 then determines the position, along the route which is closest to the vehicle 102's present position 2812. The search for the closest position 284 on the route proceeds as follows:

1. A pointer is set to the first segment in the route.
2. The perpendicular distance from the vehicle position to the segment is determined.

3. The pointer is moved to the next segment in the route.

4. The perpendicular distance from the vehicle position to the next segment is determined.

5. Repeat steps 3 and 4 until the end of route marker 2218 is reached.

6. Determine the distance from the vehicle position to the end points 2218 of the route.

7. Set a pointer to the route segment which had the closest distance and store the coordinates of the closest distance.

The vps_posture task 5324 then uses the description of the route (lines, arcs and speeds) to generate posture at one meter intervals. The task 5324 generates a predefined distance of postures plus a safety margin and puts the postures into a buffer 3000. To generate a posture which is one meter from a given posture the vps_posture task 5324 uses the following procedure:

1. Determine the type of segment from which the given posture was generated.

2. Use the proper formula for the type of segment to determine the change in north and east per meter of segment length.

3. Add the change in north and east per meter to the last given posture.

4. If the generated posture is beyond the end of the current segment, set a pointer to the next segment and repeat steps 2 and 3. else, return the generated posture.

The vps-posture task 5324 then informs the executive 5316 that it is ready for tracking.

As the autonomous vehicle 102 moves along the posture in the buffer 3000, the safety margin 3006 is depleted. When the safety margin is below a specified amount, the vps_posture task 5324 generates another safety margin 3006 of postures and appends them to the current buffer 3000. The vps_posture task 5324 depletes the posture buffer 3000 by monitoring the current position 2812 of the vehicle 102 and moving a pointer 3002 in the buffer 3000 to the nearest posture. The posture buffer 3000 is constructed as a ring which is traversed in the clockwise direction (see Figure 30, Posture Ring Buffer). That is, postures are placed in the ring such that the direction of vehicle travel corresponds to a clockwise traversal of the posture ring buffer 3000. Therefore, as the vehicle 102 moves the pointer 3002 to the nearest posture in the buffer 3000 will be moved in the clockwise direction. When the pointer 3002 will be moved in the clockwise direction, memory in the ring behind posture (counterclockwise of the pointer) is free to be over written.

Step 7 (in the search routine above) is registered until the end of route marker 2218 is reset at which time the vps_posture task 5324 ceases to generate posture and informs the executive 5316 that it has reached the end of the route.

As mentioned above, a path is as a series or sequence of contiguous "postures." A posture includes the speed and steering angle required to be on track. A posture may include latitude, longitude, heading, curvature (1/turning radius), maximum velocity and distance to next posture information.

3. POSTURE GENERATION

The tracking method of the present invention, requires certain information about the route it is tracking. The information is contained in a packet called a "posture" 3314. A single posture 3314 may contain position (that is, north and east coordinates), heading, and curvature data, for a specified location on the route. Therefore, a way of producing posture data from the route specification is required in accordance with the present invention.

Among the navigator tasks, (discussed below) is a task which reads the route information and produces postures at intervals (one meter for instance) along the route which are used by the tracking method. In one embodiment of the present invention, each posture requires 36 bytes of memory which translates to about 36k of memory for each kilometer of route. To reduce the memory requirements, the navigator buffers posture data.

The task which produces the postures reads the current position of the vehicle 102, finds the nearest point on the route to the current position, then generates a specified number of postures ahead of the vehicle 102. The number of postures generated is dependent on the maximum stopping distance of the vehicle 102. That is, there should always be enough postures in the buffer 3000 to guide the vehicle 102 to a stopping point.

In the B-spline approach to route definition according to the present invention however, the need for a posture buffer is eliminated, since the tracking method is able to directly produce posture information from the B-spline curve.

C. PATH TRACKING

1. INTRODUCTION

Path tracking or following is a critical aspect of vehicle navigation according to the present invention. The technique of the present invention uses position based navigation (rather than vision based navigation used in conventional navigation systems) to ensure that the correct autonomous vehicle path 3312 is followed. The present invention is also innovative in that it provides for separate control of steering angle 3116 and vehicle speed 3118. Figure 17 graphically illustrates the path tracking system 3102 of the present invention.

For an autonomous vehicle 102 according to the present invention to track specified paths, it is necessary to generate referenced inputs for the vehicle servo-controllers. Thus, path tracking can be considered as a problem of obtaining a referenced steering angle and a reference speed for the next time interval in order to get back to the referenced path ahead from the current deviated position.

In general terms, path tracking is determining the autonomous vehicle commands (speed, steer angle) required to follow a given path. Given a pre-specified steering angle, driven wheel velocity values and error components, the command steering and driving inputs are computed in the present invention.

## 2. CONSIDERATIONS

### a. GLOBAL POSITION FEEDBACK

The path to be tracked is specified in Cartesian coordinates. If the control scheme consists of only a servo-control to reference steering commands, vehicle position and heading errors accumulate. Position and heading result from integrating the whole history of steering and driving. Thus, it is necessary to feedback vehicle position 3304 and heading 3318 in Cartesian space.

Consequently, referenced inputs to the servo-controllers are generated in real time, based on positioned feedback 3114 (as shown in Figure 17).

### b. SEPARATE STEERING AND DRIVING CONTROL

Steering and driving reference inputs are computed in the present invention, from the given path and vehicle speed, respectively. This enables easy integration of path tracking with other modules of the present invention, such as collision avoidance.

## 3. EMBODIMENTS

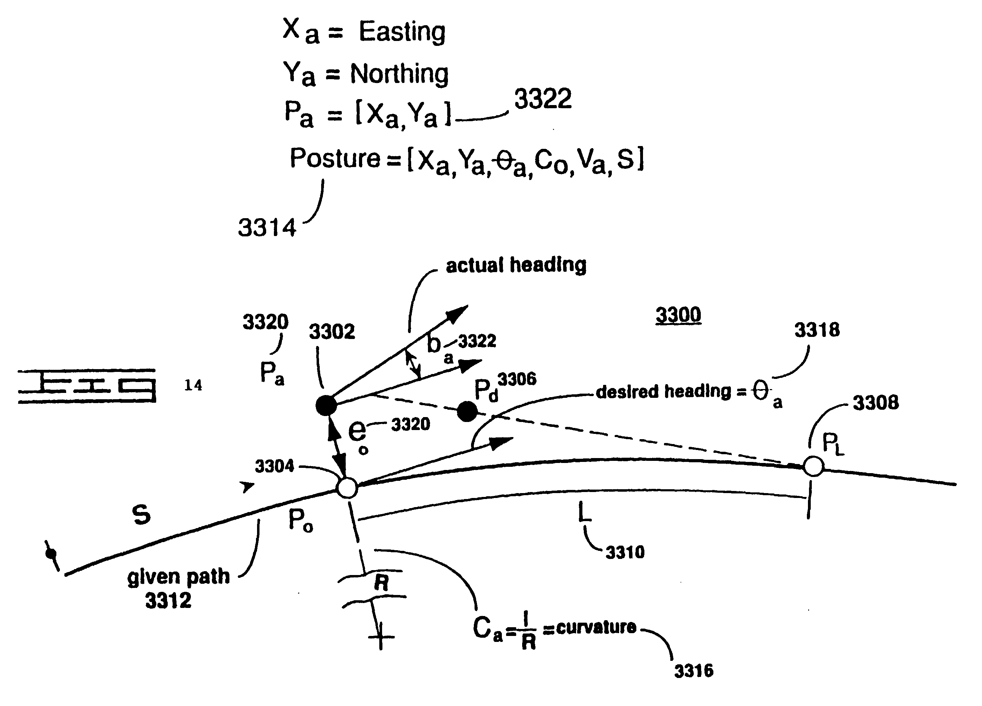

### a. TRACKING CONTROL STRUCTURE (Figure 12)

One of the challenges of vehicle autonomy is to determine the steering inputs required to track a specified path. For conventionally steered vehicles, in the present invention the desired path and the desired speed along the path can be tracked separately, reducing the problem to one of controlling the steering. (A path, for this discussion, being a geometric curve independent of time in contrast to a trajectory, which is a time history of positions.)

Steering angles are planned from the desired path 3312 and sensed vehicle positions. These angles are commanded to the vehicle via a steering controller 3104.

The functional block diagram in Figure 12, shows a tracking control structure according to the present invention.

In kinematic steering schemes, errors in position, heading and curvature are reduced based on the geometry of the errors without consideration of actuator saturation, compliance, any friction or mass terms. Tuning values, such as look-ahead distance and selection of curvature on the path, are selected through empirical trials and simulations in order to get good performance.

In a manually driven vehicle, the look-ahead distance is the distance 3310 in front of a vehicle that a driver looks during driving. The look-ahead distance in the present invention, is the distance by which the errors in position, heading and curvature are planned to be reduced to zero. It varies with the speed of the conventional or autonomous vehicle.

Varying the look-ahead distance varies the degree to which steering adjustments must be made to effect a change of course. Look-ahead distance is discussed in more detail in a following section.

However, real vehicles depart from kinematic idealization, and their control response departs accordingly. As vehicle speed, mass and path conditions change, actual vehicle response departs even further from kinematic idealization. Hence, kinematic idealization is generally valid only at low speeds with constant conditions.

An embodiment of the present invention uses a model which includes considerations of cornering stiffness, mass and slip angle. The control problem is formulated as a linear quadratic optimal tracking problem where the errors in position, heading and curvature are minimized based on the vehicle control model.

The optimal path and controls are computed from the desired path 3312 and the currently sensed vehicle position using the current errors as initial conditions to the optimal control problem. A few computed steering angles along the initial part of the optimal path are used as references to the low level steering controller for the next sensing time interval.

This preview optimal steering planning has the advantage of guaranteeing stability and optimality with respect to the given performance index. The optimal preview control method of the present invention is central to the steering planning of an autonomous vehicle.

Turning again to Figure 12 the inner loop 3116 of steering control 3104 is executed on the order of 10 milliseconds, while the outer loop 3114 is closed at the rate of 0.25-0.5 second.

The following procedure is used to close the loop on position. After sensing the current position ($Pa_{,k}$) 3210, the posture at the end of the current time interval ($\underline{P}_{a,k+1}$) 3216 is expected.

Then, the desired posture at the end of the next time interval ($P_{d,k+2}$) 3218 is computed in a referenced steering angle between ($\underline{P}_{a,k,+1}$) 3216 and ($P_{d,k+2}$) 3218 are determined.

Significantly, as mentioned above, these vehicle and path techniques of the present invention, decouple steering control from velocity control at the vehicle.

## b. QUINTIC METHOD

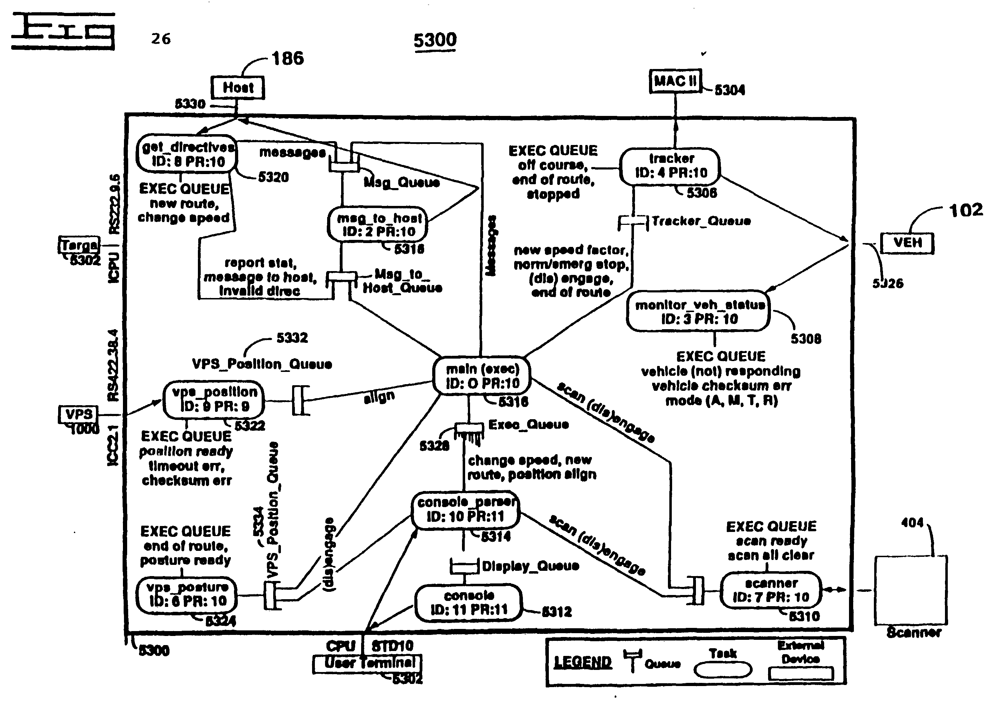

Shown in the navigator task diagram, Figure 26 , which is discussed in more detail below, is a functional block called the tracker 5306. The tracker 5306 operates to construct a smooth path back to the desired or correct path. In one embodiment of the present invention, as mentioned above, a quintic method is used. This involves a fifth order curve in error space for steering commands.

The parameter L 3310 (look-ahead distance) can be adjusted to modify response to the vehicle, and the value of L 3310 can be chosen based on trial and error. This scheme has provided good results at speeds up to approximately 28 Km per hour at the time this application disclosure was prepared.

The method used by the tracker of the present invention is:

(1) estimate the next position by either averaging or evaluating the states of position;
(2) compensate for delays using either of the estimating methods
(3) dynamic look-ahead changes at different speeds - the coefficients of the quintic: look-ahead distance.

## c. LATENCY AND SLOW SYSTEM RESPONSE

An additional path tracking embodiment of the present invention uses various compensation techniques to improve vehicle response characteristics. This is used in conjunction with the quintic polynomial method to realize improved tracking performance.

Some vehicle response characteristics include latency of vehicle control commands, slow system response, and vehicle dynamic characteristics including vehicle-ground interaction (VGI), (slip angle and under/over steer).

The latency of vehicle commands was compensated in one embodiment of the present invention, by modifying the vehicle control hardware to reduce time delays, and by utilizing a method which sets control commands far enough in advance to compensate for the existing delays.

Decreasing the time lag between when the vehicle position is sensed and when the command is issued reduces prediction errors, which reduction is required to plan steering angles, and results in better tracking performance.

A varying look-ahead distance with speed also improves the tracking performance in comparison to the constant look-ahead distance.

A tracking method outputs steering and speed commands over a serial link to a vehicle control system. The vehicle control system is a multiprocessor, multi-tasking system, relying on a mailbox queue for communication between tasks.

This mailbox queue is composed of two types of queues, a high performance queue and an overflow queue. During high data flow rates from the tracking task, the high performance queues spill into the overflow queue, degrading the performance of inter-task communication. This can result in total latency times between the tracking task and actual steering actuator commands which are on the order of seconds.

The steering dynamics may be modeled as a first order lag system. It takes a period equivalent to one time constant for a first order lag response to reach approximately 63% of the desired final value. As can be appreciated, for slow systems with large time constants, the response time can be significant.

To resolve the latency and response problems, hardware may be adjusted to be used in close conjunction with the tracking method to control vehicle steering, and a new control scheme devised to compensate for pure time delay and poor response.

The hardware may be adjusted, for example, to reside on the same back plane as the processor which executes the tracking method and controls the vehicle steering system directly. This serves to eliminate delays due to the serial link and queuing.

To compensate for the remaining delays (delays due to processing time of the tracking method and inter-task communication within the tracking system), a method which sends speed and steering commands in advance to counteract any delays is used in accordance with the present invention. The method may be executed as follows:

sense the current position $P_{actual}$ (Initialization: $P_{actual} = P[O] = P[1] = ....= P[d\_index+1]$)
compute error between predicted and sensed position:
$P_e = P_{actual} - P[O]$ for i = O, d_index
$P[i] = P[i+1] + P_e$
compute the position on the path corresponding to the position of the beginning of the time interval: get $P_{on}$ (P[d_index], $P_{on}$)
get initial condition:errors(O) = P[d_index] - $P_{on}$
compute a quintic polynomial curve in error space [1]
predict a position at the end of the planning time interval;
get despos($P_{on}$,$d_s$,P+d_index+1)
P[d+index+1] + = errors(ds)

For example, to compensate a system which has time delays on the order of two planning intervals (on the order of 250 mSec), the variable d_index is set to 2.0.

Tracking performance improves as the compensation index (d_index) is increased to match the delays inherent to the system.

Tracking performance has been improved according to the present invention, by investigating and understanding vehicle and control system dynamics and by designing compensation methods given this understanding.

A degraded performance of a tracking method is attributable to latency of vehicle control commands, slow system response, and vehicle dynamic characteristics. It is possible to counteract each of these effects.

Latency of Vehicle commands, a dominant effect, can be successfully compensated by modifying the vehicle control hardware and by utilizing a method which set control commands far enough in advance to compensate the delays. Decreasing the time lag between when the vehicle position is sensed and when the command is issued reduces prediction errors. This is required to plan steering angles, and results in better tracking performance.

Varying look-ahead distance with speed also improves tracking performance in comparison to using a constant look-ahead distance.

In general terms then, path tracking is the function of staying on course. In path tracking in the present invention, as discussed, some of the considerations are errors in distance, heading and curvature, delays in the system including processing delays and delays in vehicle response to actuators, and so on, dynamic look ahead distance, weighted path history, and extrapolation.

### D. OBSTACLE HANDLING

### 1. INTRODUCTION

Obstacle handling involves at least three major functions: detection of obstacles 4002, avoidance of obstacles 4002, and returning to path 3312. The returning to path function is similar to path generation and tracking, as described above.

In addition to path tracking (following), successful navigation of vehicle 102 requires that vehicle 102 be able to detect obstacles 4002 in its path, thus allowing the vehicle to stop or otherwise avoid such an obstacle before a collision occurs.

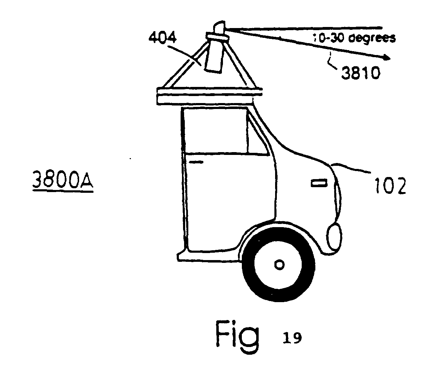

In one embodiment of the present invention, a single line infra-red laser scanner 404 (See Figure 19) is used in a configuration where the scan is horizontal (not shown). The scan line 3810 does not contact the ground, so any discontinuities in the range data can be attributed to objects 4002 in the environment.

Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

E. VEHICLE CONTROLLING SYSTEMS

1. INTRODUCTION

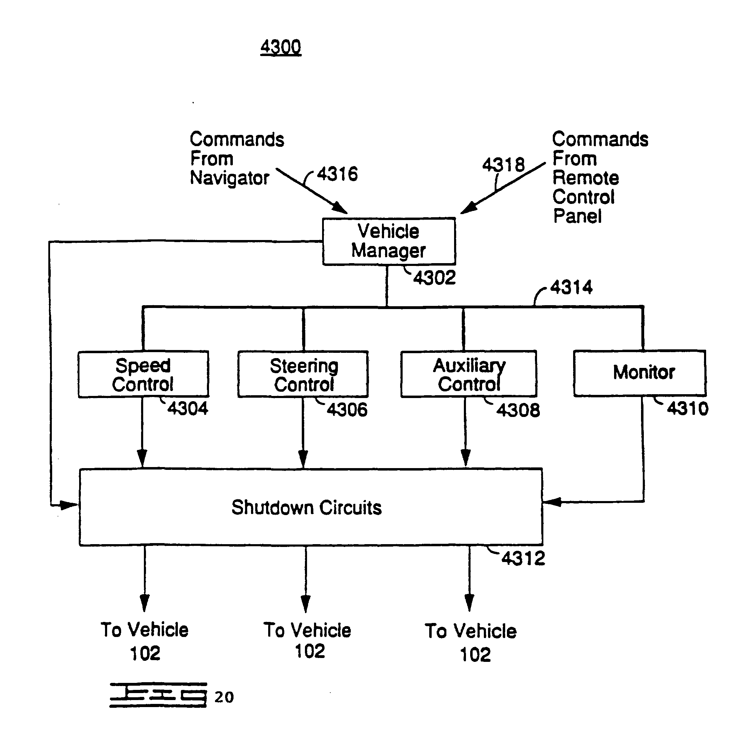

Referring now to Figure 20, the vehicle controls are comprised of four, low-level functional blocks.

One is called a "vehicle manager" (4302). A second is called a "speed control" (4304). The third is called a "steering control" (4306). The fourth is called a "monitor/auxiliary control" (depicted as two separate blocks 4310 and 4308. These are described in turn below.

They are all tied together with a high-speed serial data bus 4314. The bus 4314 is a data collision detection, packet passing system.

Each of these functional blocks have separate microprocessors, for instance of the Motorola 68000 16 bit series. Each of these microprocessors talks to and listens to the others over the bus 4314.

While each functional block has a more or less specific function, the vehicle manager 4302 functions as a communications hub. It sends to and receives messages from the navigator 406 via an RS-422, 9600 Baud serial link 4316. It is also listening to and sending to the remote control or "tele" panel 410 via an FM radio communications link 4318.

2. VEHICLE MANAGER (modes)

As mentioned above, the vehicle manager 4302 receives commands from a remote control panel 410 and the navigator 406. It then decides which mode "A, M, T, or R" (for Autonomous, Manual, Tele, or Ready) the vehicle 102 should be in.

a. READY MODE

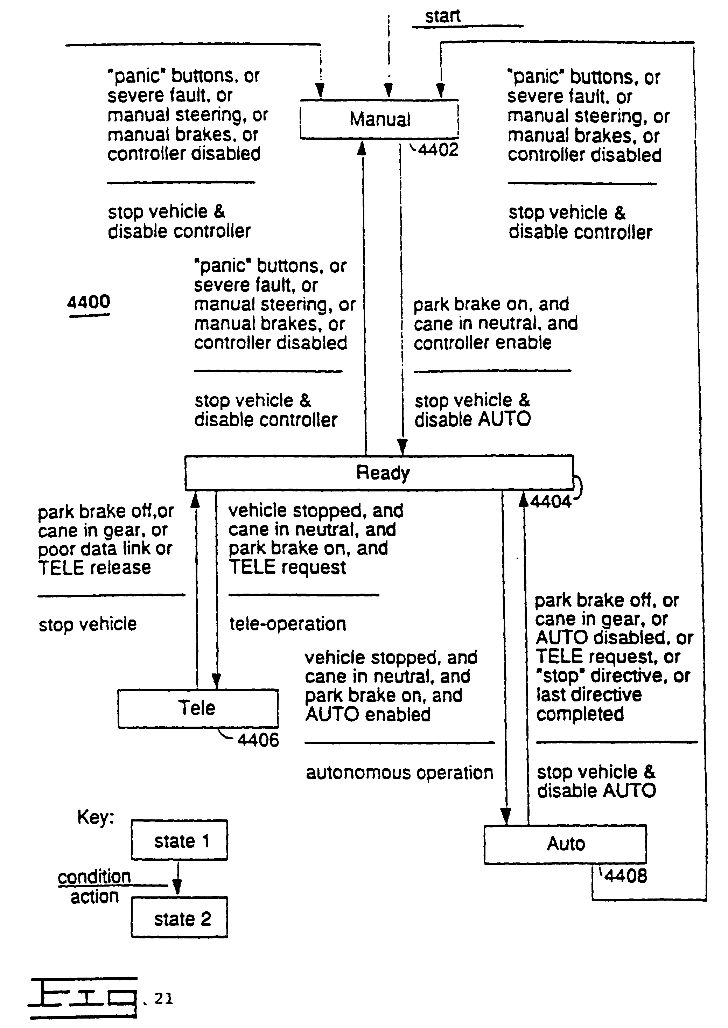

Reference is now made to Figure 21, which shows the states (modes) and how the vehicle 102 changes between states. The navigator 406 cannot set the mode itself. Notice that the vehicle 102 cannot change from tele to auto, for instance, directly. It must pass through the ready mode 4404 first in that case.

The ready mode 4404 brings the vehicle 102 to a stop in a known state. This is because it would be difficult to make a smooth transition, from, for instance, auto mode 4408 to tele mode 4406 while the vehicle 102 was moving. The tele control panel joystick 4502, 4504 would have to be in just the right position when control was switched.

Going from tele 4406 to auto 4408 mode, there is the consideration that the navigator 406 must initialize. For example, it must determine where it is with respect to a route before taking control, which takes some finite time, during which the vehicle 102 might otherwise drive off uncontrolled.

b. TELE MODE

Tele control mode 4406, also referred to as tele-operation, remote control or radio control mode, provides a way of controlling the vehicle 102 from a remote location while the vehicle 102 is kept in view.

Shop personnel would use the tele-operation mode 4406 to move the vehicle 102 in the yard, for example. Advantageously, this mode would also be used by a shovel or loader operator to maneuver the vehicle into position for loading or unloading, and moving the vehicle into a location where autonomous mode 4408 would resume control.

In tele-operation mode 4406, each vehicle 102 at an autonomous work site 300 would have its own unique identification code that would be selected on a radio control panel 410 to ensure communication with and control of the correct vehicle only. The vehicle 102 would only respond to tele-operation commands 4318 when its unique identification code is transmitted. Any conflict between modes, such as between manual 4402 and tele 4406, would be resolved in favor of manual mode 4402, for obvious safety reasons.

The navigator 406 keeps track of where the vehicle 102 is while being operated in the tele mode 4406, even though, in tele mode, the vehicle can be maneuvered far off of a known route.

c. MANUAL MODE

Manual control mode 4402 may be required when the vehicle 102 is being maneuvered in very close quarters, for example, at a repair shop, equipment yard, and so on, or when a control subsystem needs to be removed for repair or maintenance.

This control mode may be implemented to be invoked whenever a human operator activates any of the manual controls. The simple action of stepping on the brakes 4708, moving the shift lever from some predetermined, autonomous mode position, or grasping the steering wheel 4910, for example, would immediately signal the control system that manual control mode 4402 is desired and the system would immediately go to the manual mode.

While in manual mode, the autonomous system would continuously monitor vehicle motion and maintain an updated record of the vehicle position so that when and if autonomous mode 4408 was desired, a quicker and more efficient transition could be made.

When autonomous mode 4408 is again desired, the human operator would then affirmatively act to engage autonomous mode 4408, by physically moving a switch or lever, for instance, to the autonomous control mode. A time delay would preferably be built in so that the human operator would have the opportunity to leave the vehicle 102 if desired. At the end of the time delay, the system would then give several levels of warning, such as lights, horn, or the like, indicating autonomous takeover of the vehicle 102 was imminent.

d. UNDERLINE AUTONOMOUS MODE

The autonomous mode 4408 is entered into from ready mode 4404. In the autonomous mode 4408, the vehicle 102 is under the control of the autonomous navigation system.

In this mode, the vehicle control system receives messages from the navigator 406 as discussed above, through the vehicle manager 4302. The vehicle manager 4302 is, as discussed, basically the communications and command hub for the rest of the controllers.

The vehicle manager 4302, and the other functional control blocks, all communicate with the shutdown circuits 4312 as well. The shutdown circuits 4312 are discussed in more detail below.

3. SPEED CONTROL

The speed control subsystem 4302 may be organized to contain a speed command analyzer, closed loop controls 4800 for the engine 4614, transmission and brakes 4700, 5000, a real time simulation model of the speed control system, and a monitor 4310 that is tied to an independent vehicle shutdown system 4312. It is designed to be placed in parallel to the production system on the vehicle 102.

The speed control functional block 4304 takes care of three basic functions. It controls the governor on the engine 4614. It controls the brake system 4606. And it controls the transmission 4610 via the production transmission control block 4616.

The production transmission control block 4616 is interfaced with the speed control block 4304 in a parallel retro-fit of the autonomous system onto the production system as shown in Figure 24. The production transmission control block 4616 is a microprocessor based system which primarily monitors speed and shifts gears accordingly.

The autonomous system speed control block 4304 feeds the transmission control block 4616 the maximum gear desired. For instance, if the vehicle 102 is to go 15 mph, the maximum gear might be third gear. The production transmission control block 4616 will control all the shifting necessary to get to that gear appropriately.

The governor 4626 (Figure 22 controls the amount of fuel delivered to the engine 4616. Thus, it controls engine speed. The autonomous system is capable of being retro-fitted in parallel with the production governor control system, in a similar fashion as described with respect to the transmission system.

The brake system is shown in Figure 23.

The autonomous system here is also capable of being retro-fitted to the production brake system.

The following discusses vehicle systems shown in Figures 22,23,24 and 25. These systems relate to the vehicle drive train 4600 and steering 4900 systems.

Referring to Figure 22 a governor 4626 controls engine speed 4222, which in turn controls vehicle speed 4624. The engine power is transferred to the drive wheels through the drive train 4600 which is comprised of:

> torque converter 4612
> transmission 4610
> final drive 4608
> brake system 4606
> wheels 4604

The function of these systems is well known in the art.

Several key systems were modified in accordance with the present invention to effect autonomous control. The primary systems were the speed control (engine speed, transmission, vehicle speed, and brakes) and steering systems. Each key system is design with manual override capability as a safety measure. In all cases, manual control has priority so that if the vehicle is operating autonomously, and an operator takes control of any one of the vehicle functions, control automatically is returned to the operator.

The system also provides an emergency override button (not shown; also referred to as a 'panic' button) which, when activated, disables all electronically controlled systems and returns the vehicle 102 to manual control 4402.

The system also provides for sensing the pneumatic pressure which is a key part for actuating some of the key systems. If this pressure falls below some preset threshold, it is assumed that there is a problem and the vehicle control system reverts to manual control 4402 and the vehicle 102 is stopped.

Figure 24 depicts the system used to control engine speed. This system uses electronically controlled valves 4808 and 4812 to regulate pneumatic pressure in parallel to a pedal 4806 which can be manually operated to override electronic control of the engine speed 4622. The pressure sensor 4802 and the engine speed sensor 4622 provide the necessary feedback for the electronic speed control system 4304.

Also required to control the vehicle speed is a transmission control 4616. The basic control system is readily available on the particular vehicle used for this purpose.

In addition to controlling the engine speed 4622 as a means of regulating vehicle speed, it is also necessary to control the vehicle service brakes 4606. This system is shown in Figure 23 and is necessary to effect normal stoppage or slowing of the vehicle 102. This system uses electronically controlled pneumatic valves 4712 and 4716 in parallel with a manually operated brake pedal 4708 and/or retarder lever 4710 to regulate the braking force. These two manual inputs can override the electronic control system when actuated. The pressure sensor 4702 and the vehicle speed sensor 4624 provide the necessary feedback to regulate the braking force.

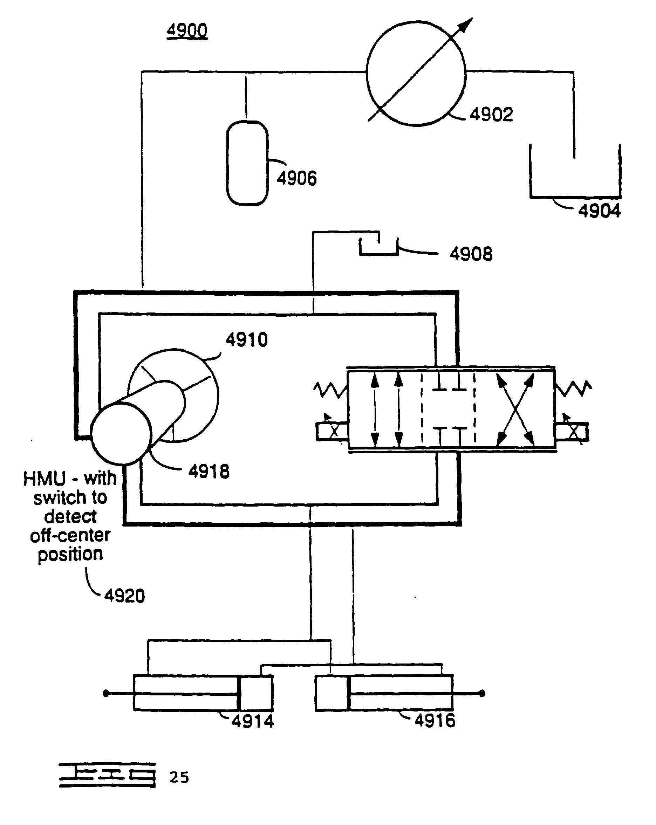

Control of vehicle steering is also required for the vehicle to operate autonomously. The system which performs this function is shown in Figure 25 The system consists of a Rexroth proportional hydraulic valve 4912 which can be actuated electronically to provide flow to hydraulic cylinders 4914 and 4916 attached to the vehicle steering linkage. The system also comprises a manually operable hand-metering unit, or HMU, 4918, which is in parallel to the electronically controlled system. The manual system can override the electronic system, if required, as a safety measure. Also, the system provides a switch 4920 on the HMU to detect when the manual steering wheel 4910 is different from the centered position. When not centered, the autonomous system assumes that the system is being operated manually 4402 and disables autonomous control of the vehicle 102.

Electronic control of the vehicle parking brake is also included as an added safety feature.

4. <u>STEERING CONTROL</u>

Referring again to Figure 20, the steering control functional block 4306 is responsible for controlling the steer angle of the vehicle's wheels. It sends out commands to a valve 4912 to control the steer angle and receives information from a resolver (not shown) mounted on the tie rod system, so that it knows what the actual wheel angle is.

The steering angle can be controlled with an accuracy on the order of a half a degree, and the resolver is accurate to something less than that, on the order of an eighth of a degree.

At some point in the useful life of the vehicle 102 the resolver may go out of adjustment. If this happens, the vehicle will not be able to track the path 3312 properly.

However, the navigator 406 constantly monitors the vehicle 102 to determine how far the vehicle 102 is from the desired path 3312. (The vehicle 102 is always off the desired path 3812 to some extent, and the system is constantly correcting.) If the vehicle 102 is more than a certain distance, for example several meters, from the desired path 3312, the navigator 406 stops the vehicle as a safety precaution.

The steering control system 4306 itself is also always checking to make sure the resolver is accurate, and that steering commands 420 received have not been corrupted (not shown) by noise or other error sources. A steering simulation model may also be implemented as an additional check of the system.

The autonomous steering system 4900 may be designed to be implemented in parallel with a manual steering system, and can be retro-fitted on to the vehicle 102 in a similar manner as the speed control system.

As shown in Figure 25, the existing or production manual steering system has a manual steering wheel 4910 which turns a hand metering unit, or HMU 4918. The HMU 4918 controls a valve 4912 which controls flow of hydraulic fluid to steering cylinders 4914, 4916, which turn the wheels (not shown).

A switch 4920 on the HMU 4918 detects off-center position of the steering wheel 4910 as an indication to change to manual control of steering. An operator riding in the cab can merely turn the steering wheel 4910 to disable autonomous steering control 4408.

Under autonomous steering control 4408, the manual steering wheel 4910 in the cab remains centered no matter what position the autonomous steering control has turned the wheels to. There is no mechanical linkage between the steering wheel 4910 and the wheels themselves.

Of course a vehicle 102 may be manufactured without any manual steering system at all on the vehicle if desired. To drive the vehicle manually, the tele-panel 410 could be used, or some sort of tele-panel might be plugged into the side of the vehicle 102 to control it without a radio link 4506 in close quarters, for instance. A jump seat might be provided for an operator in such situations.

Some discussion of the steering model developed may facilitate a better understanding of the present inven-

tion.

a. <u>STEERING MODEL</u>

The basis for the steering planner is a tricycle steering model shown in Figure 5.1. This model permits the calculation of the required steer angle independent of the velocity of the vehicle.

$$\Phi = \tan^{-1} LC \text{ path}$$

To use this model, the desired path 3312 must contain the curvature of the path to be followed. The curvature is the inverse of the instantaneous radius of curvature at the point of the curve.

**f(s)**          **P**          **C = 1/r**

**f(s)|p:position curve**
**f'(s)|p:tangent to curve or heads**
**f''(s)|p:curvature at the point**

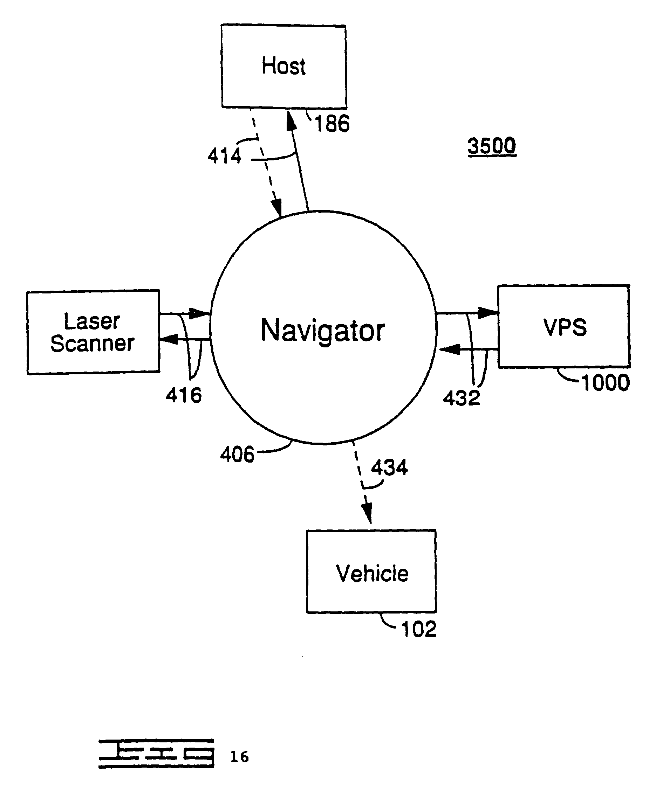

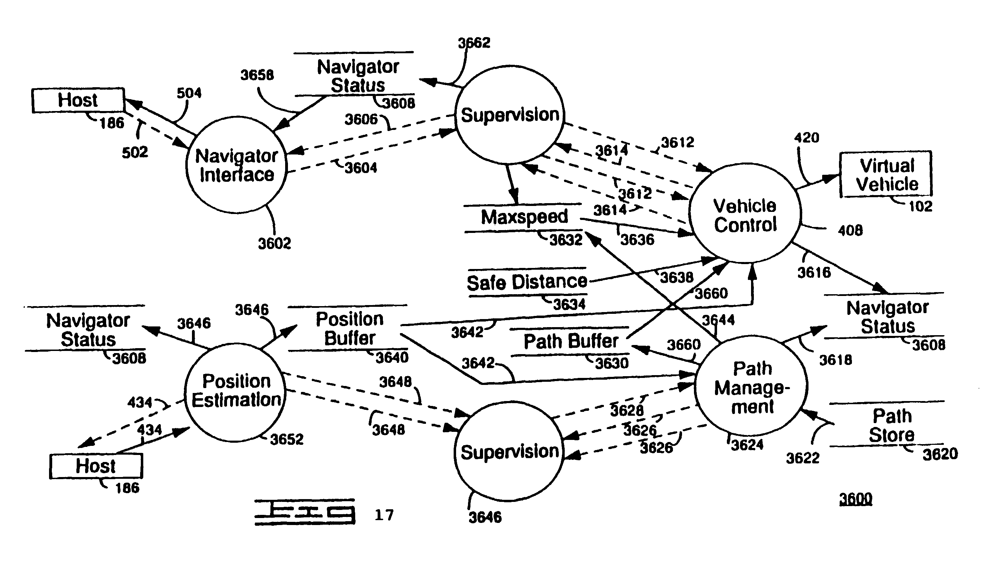

This is also equal to the second path derivative at the point.
In general, and as shown in Figure 14, if a posture 3314 is desired as the quadruple of parameters--position 3320, heading 3318, and curvature 3316 (x, y, 0, c), then it is required that the path 3812 be posture-continuous. In addition, the extent to which steering motions are likely to keep the vehicle 102 on the desired path 3312 correlates with the linearity of sharpness of the path, since linear curvature along a path means linear steering velocity while moving along the path.
Certain spline curves guarantee posture continuity. However, these spline curves do not guarantee linear gradients of curvature along curves. Clothoid curves 2602 have the "good" property that their curvature varies linearly with distance along the curve. Paths composed of (a) arcs and straight lines or (b) clothoid segments have been developed.
A path that has discontinuities in curvature results in larger steady state tracking errors. This is particularly the case when the actuators are slow.
The path representation must contain sufficient information to calculate the steer angle 3112 (See Figure 12) needed to drive the desired path 3312, that is, it must consist of at least the position, heading, curvature and speed. A position on the desired path 3312 has been defined as a posture 3314, and the structure of a posture in the present invention is given by:

c. <u>POSTURE DEFINITION</u>

| | |
|---|---|
| North: | desired north coordinate |
| East: | desired east coordinate |
| Heading: | desired heading |
| Curvature: | desired curvature |
| Speed: | desired ground speed |
| Distance: | distance between current posture and the previous posture. |

d. POSITION INFORMATION

The position information 3322 is obtained from the VPS 1000 and is, for example, 71 bytes of data. The structure of the information used to track the desired path 3312 is a subset of the 71 byte VPS output and is given by the VPS short definition shown below.

e. VPS SHORT DEFINITION

| | |
|---|---|
| Time: | gps time |
| North: | wgs 84_northing |
| East: | wgs 84_easting |
| Heading: | compass direction vehicle is moving |
| Curvature: | calculated from other variable |
| N_velocity: | north velocity |
| E_velocity: | east velocity |
| Yaw rate: | rate of change of the heading |
| G_speed: | ground speed |
| | distance travelled |

f. STEERING METHOD

The steering planner calculates the steer angle needed to follow the desired path. If the vehicle 102 was on the desired path 3312, the steer angle is:

$$\text{ON PATH } \Phi\text{steer} = f(C\text{desired}) = \tan^{-1} LC$$

If the vehicle 102 is off the desired path 3312, then the steer angle is:

$$\text{OFF PATH } \Phi\text{steer} = f(C\text{desired} + C\text{error}).$$

The method of the present invention used to calculate Cerror is a quintic method. The quintic is a fifth degree polynomial in an error space that defines a smooth path back to the desired path 3312. The degree of the polynomial is defined by the needed data, that is, Cerror and the known end constraints.
Polynomial in error space:

error

$$error(s) = a_o + a, s + a_2 s^2 + a^3 + a_4 s^4 + a_5 s^5 \Big|_o^L$$

$$error'(s) = a, + 2a_2 s + 3a_3 s^2 + 4a_4 s^3 + 5a_5 s^4 \Big|_o^L$$

$$error''(s) = 2a_2 + 6a_3 s + 12a_4 s^2 + 20a_5 s^3 \Big|_o^L$$

O        s=speed*dt_plan        L        s

at s=O:

error (O) position = current desired position -

current actual position

error' (O) heading = current desired heading -

current actual heading

error''(O) curvature = current desired curvature

- current actual curvature

at s=L (L = lookahead distance):

error (L) position = O
error (L) heading = O
error (L) curvature = O

The coefficients of the polynomial error(s) are functions of L, the distance at which the errors go to zero:

$$error\ (O) = a_o$$

$$error'(O) = a_1$$

$$error''(O) = 2a_2$$

$$error\ (L) = a_o + a_1L + a_2L^2 + a_3L^3 + a_4L^4 + a_5L^5$$

$$error'(L) = a_1 + 2a_2L + 3a_3L^2 + 4a_4L^3 + 5a_5L^4$$

$$error''(L) = 2a_2 + 6a_3L + 12a_4L^2 + 20a_5L^3$$

These five equations are solved symbolically for the coefficients $a_0$, $a_1...a_5$. Then, each coefficient can be easily determined for any reasonable set of boundary conditions.

Once the coefficients of the polynomial are obtained, the error"(s) can be evaluated for some picked_s, which corresponds to a distance along desired path from s=O and is presently defined as:

$$s_{picked} = \text{ground speed * planning interval}$$

to obtain the correction term:

$$Cerror = error''(s_{picked})_{curvature}$$

to calculate the new steer angle:

$$\Phi steer = \tan^{-1} [\ (Cdesired + Cerror_{@spicked})\ L]$$

This calculation is done at each planning interval which is presently .25 sec. (dt_ plan).

5. <u>MONITOR/AUXILIARY</u>

Referring now to Figure 20, the monitor/auxiliary functional block(s) 4308 and 4310 take care of some miscellaneous functions not performed by the other blocks of the vehicle control system. For instance, start or kill the engine 4616, honk the horn, raise or lower the bed, setting the parking brake on or off, turning the lights on or off, are some of its functions.

The monitor block 4310 also checks the commands that are being sent by or to the other functional blocks on the bus 4314 to see if they are valid. If error is detected, it will signal the shutdown circuits block 4312 and the system will shutdown as discussed below.

6. <u>SAFETY SYSTEM (SHUTDOWN)</u>

a. <u>INTRODUCTION</u>

The safety system, including shutdown circuits 4312, (see Figure 20) operates to stop the vehicle 102 on detection of a variety of error conditions by setting the parking brake on. This results in the vehicle 102 coming to a safe stop in the shortest distance possible.

Since the parking brake is designed to be normally "set" or "on," and the electronic circuits operate to release it, upon a failure of the electronic controlling system(s) the power 5216 is turned off to the actuators 5006, so that there is no power to actuate valves, and the parking brake returns to its normal position, called "set."

Whenever several erroneous commands are received, or whenever the speed and/or steering simulation models disagree beyond an acceptable tolerance with vehicle sensor outputs 4622 and 4624, are examples of conditions which could result in shutdown of the system. The shutdown system 4312 is an independent and separate subsystem from the other autonomous control subsystems (see Figure 20).

b. <u>SHUTDOWN CONTROL</u>

A feature of the vehicle control system 4312 design is that all functional blocks are capable of detecting errors in the output of the others on the serial bus 4314. So if one of them senses that another is not functioning correctly, it can send a signal to the shutdown circuits 4312 to shut the system down.

For example, the speed and steering blocks each look at their received commands (received via the vehicle manager 4302) to make sure they are valid. They also make sure that what they are told to execute, that is, what they are requested to command, is within predetermined bounds. If not, they will act to shut the system down.

The safety system may also be monitoring oil, hydraulic and pneumatic pressures, and temperatures, for instance, making sure they are sufficient to safely operate and control the vehicle.

The safety system includes switches for manual override, including a panic stop 5208, switches on the brake pedal 5202 and steering wheel 5206.

## 7. BUS ARCHITECTURE

The bus 4314 that inter-connects the vehicle control system functional units 4302, 4304, 4306, 4308, and 4310 is a serial data type common bus implemented in a ring structure using a data packet collision detection scheme.

## F. FUNCTIONAL DESCRIPTIONS/METHODS

### 1. NAVIGATOR

The following is a description of the navigator 406, shown in Figure 26, titled TASK DIAGRAM. Each of the tasks diagrammed is discussed below.

### a. MAIN (executive)

In the center of Figure 26 is a task labelled "main (exec)" 5316. This task 5316 coordinates inter-task communications and performs high level decision making for the navigator 406. One of the primary decisions the task 5316 makes is when to (dis)engage the tracker 5306, based on messages received from the other tasks in the system.

### b. MONITOR_VEH STATUS

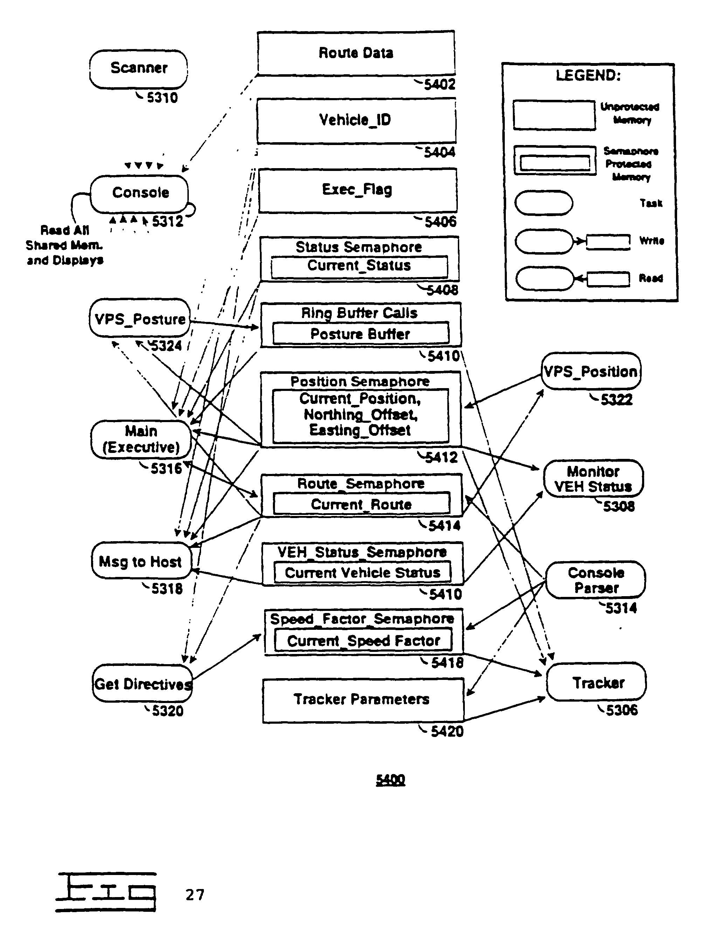

This task 5308 is shown above and to the right of the "main" task 5316. It functions to read the vehicle port 5326, and report vehicle mode changes and navigator-to-vehicle communication state to the "main" 5316 via the EXEC QUEUE 5328. Additionally, the status of the vehicle 102 is written to a global memory structure 5400 (see Figure 27).

### c. SCANNER

Shown in the lower right-hand corner of the task diagram Figure 26 is the scanner task 53n10, which provides for communication to the "main" 5316 of data from the obstacle detection system 404.

### d. CONSOLE AND CONSOLE_PARSER

The console 5312 and the console-parser 5314 are shown just below the "main" task 5316 in the task diagram Figure 26· These tasks were developed as a debugging tool during the development of the system. They display and manipulate navigator 406 states according to user input from a terminal 5302. The console_parser task 5314 also is used to set tracker parameters.

### e. GET_DIRECTIVES

This task 5320 is shown in the upper left-hand corner of the task diagram Figure 26. It is part of the host-navigator interface 5330. Messages from the host processing system 186 are received and decoded by this task 5320. Then, depending on the message, the message is either communicated to the "main" task 5316, or to another task. This other task would then formulate an appropriate response from the navigator 406 to the host processing system 186.

### f. MSG_TO_HOST

This task 5318, shown just above and to the left of the "main" task 5316, formulates messages from the navigator 406 to the host processing system 186 and communicates them to the host processing system 186.

g. VPS_POSITION

This task 5322 is shown at the left side of the task diagram Figure 26. The vps_position task 5322 reads the (20 Hz) output from the VPS 1000. The data is checked for correctness (for example, "checksum") and if correct, it is put into a global memory structure 5400, the position buffer (VPS_POSITION_QUEUE) 5332. The task sends a message to the "main" 5316 whenever a position fault occurs.

h. VPS_POSTURE

This task 5324 is shown at the lower left-hand corner of the task diagram. When the vehicle is tracking, this task maintains the posture buffer (VPS_POSTURE_QUEUE) 5334. The task (5324) monitors the vehicle's position and maintains approximately 50 postures, from the current vehicle position in the direction of travel, in the posture buffer (3000).

i. TRACKER

Shown in the upper right-hand corner of the task diagram Figure 26, the task 5306 reads the current position 5332 and posture buffers 5334. Based on the information read, task 5306 calculates steer and speed corrections 420. It sends them to the vehicle 102, thereby controlling the vehicle's course.

j. NAVIGATOR SHARED (GLOBAL) MEMORY

As mentioned above with regard to the navigator tasks 5300, the navigator 406 has a global memory structure 5400 which the various tasks read/write. This memory structure 5400 is illustrated in Figure 27.

Referring now to Figure 27, the tasks are depicted as ellipsoids, with the particular task written inside. The memory 5400 is depicted in the center section of Figure 27 as a stack of boxes. Unprotected memory is depicted as a single box in the stack of boxes. Semaphore protected memory is depicted as a box within a box in the stack.

An arrow points in the direction of data transfer between tasks and memory. Therefore, a write to memory from a task is shown as a line with an arrow pointing towards the memory in question from the task. Likewise, a read from memory by a task is depicted by a line with an arrow pointing towards the task in question from the memory. Where two-way data transfer between task and memory exists, a line with an arrow at both ends is shown.

k. MAIN (EXEC) FLOW CHARTS

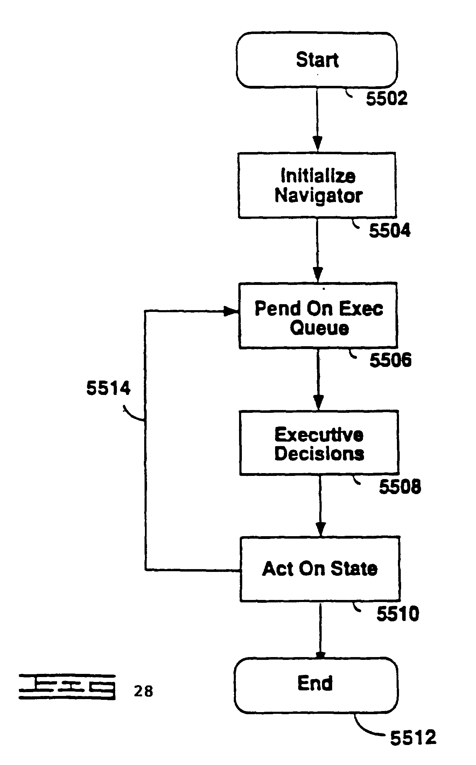

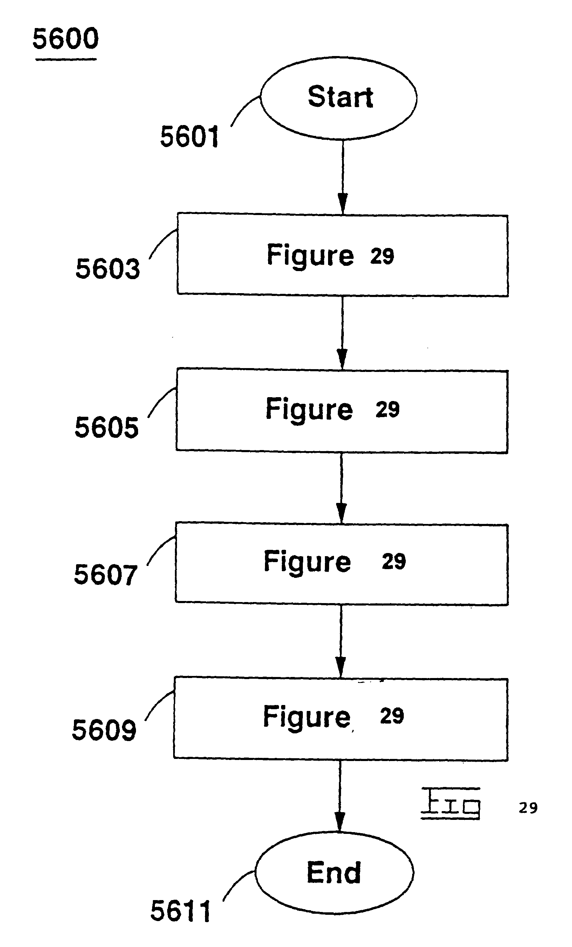

Figures 28 and 29A-29D are flow charts of the navigator main or executive task 5316.

Referring first to Figure 28, it is a diagram of the general structure of the main or executive task flow. The following describes several flowcharts associated with the navigator executive task 5316.

Referring to Figure 28, which is the executive flowchart, it shows of five blocks: block 5502 which is the Start block; block 5504 which is the initialize navigator; block 5506, which is the Pend on Exec Queue; block 5506, which is the executive decisions; and block 5510, which is the act on state.

Flowchart Figure 28 describes how the executive task 5316 executes its functions beginning at power up (switching on electrical power) of the navigator 406. Upon power up, the executive task 5316 (or Executive) begins at the start block 5502 and proceeds immediately to initialize navigator 5504, where the executive 5316 puts the navigator 406 in a known initial state. The executive then proceeds to the Pend on exec queue 5506 and waits for a message from a number of sources to arrive in its message queue 5328. For example, a typical message could be a query for information from the host processing system 186.

Upon receipt of a message in the Exec Queue 5328, the executive 5316 proceeds to the executive decisions block 5508. In this block, the executive 5316 sets a series of status flags in a known manner. These flags put the navigator 406 in a known state, particular to the message received.

Once the status flags have been properly set, the executive 5316 then proceeds to the Act on State 5510, where the necessary action is carried out according to the type of instruction received.

Referring now to Figures 29A-29D they show the flow of the "executive decisions" block 5508 of the general structure diagram Figure 28.

The various responses which the executive task 5316 can initiate are now described in more detail. There are a known set of messages which are expected within the Exec Queue 5328. These messages are shown in detail in Figures 29A-29D.

Figure 29A diagrams the organization of Figures 29A-29D. Figures 29A-29D describe in detail the procedure which the executive 5316 uses to respond to various messages.

Referring to Figure 29A, the action of the executive 5316 to particular messages is described. Upon receipt of a message to the Exec Queue 5328, the program flow leaves block 5506 and proceeds to block 5602, where the executive 5316 determines if the message is 'NEW_ROUTE_DIRECTIVE'. If the message is 'NEW_ROUTE_DIRECTIVE', then the executive 5316 proceeds to the Act On "NEW_ROUTE_DIRECTIVE' block 5604. Once the action particular to the 'NEW_ROUTE_DIRECTIVE' message has been completed successfully, the executive 5316 then proceeds to the Act on State block 5510. Once the action has been completed, the executive 5316 returns to the Pend on Exec Queue block 5506 to await another message. If the initial message in block 5602 is not 'NEW_ROUTE_DIRECTIVE', then the executive 5316 proceeds to block 5606 to determine if the message is 'CHANGE_SPEED_DIRECTIVE'.

The response to messages such as 'CHANGE_SPEED_ DIRECTIVE', 'VEH_RESPONDING', NO_VEH_RESPONSE', and VEH_CHECKSUM_ERR', follow a procedure similar to that described for the message 'NEW_ROUTE_DIRECTIVE'. However, the actions performed in the Act On '....' blocks 5604 through 5620 are different for the different possible messages. The various types of valid messages and a brief description of each are:

NEW_ROUTE_DIRECTIVE: set the route number for the vehicle to follow.

CHANGE_SPEED DIRECTIVE: command a maximum possible speed for which the vehicle can traverse a particular part of the route.

VEH_RESPONDING: the vehicle is responding to commands properly, set Navigator status flags to Healthy.

NO_VEH_RESPONSE: the vehicle is not responding to commands, stop the vehicle.

VEH_CHECKSUM_ERR: the vehicle is not receiving/sensing data correctly, stop the vehicle.

TELE, MANUAL, READY, or AUTO: set the mode of the vehicle IN THE PROPER ORDER.

VPS_TIMOUT: VPS is not sending data, stop the vehicle.

VPS_CHECKSUM_ERROR: the VPS is sending garbled data, stop the vehicle.

VPS_POSTURE_READY: ready to generate path postures.

VPS_POSITION_READY: VPS data is available.

VPS_POSITION_ALIGN: the VPS is initializing, do not move the vehicle.

END_OF_ROUTE: the vehicle is approaching the end of the current route, has been reached inform the host processing system.

SCAN_READY: the scanning system is ready look for objects in the path.

SCAN_ALL CLEAR: no objects have been detected in the vehicle path, continue normally.

SCAN_OBSTACLE: an object has been detected on the vehicle path, stop the vehicle.

TRACKER_OFF_COURSE: the vehicle is not following the desired path within tolerance, stop the vehicle.

TRACKER_END_OF_ROUTE: tracker has reached the end of the path, stop the vehicle.

TRACKER_STOPPED: notify the Navigator that the tracking task has stopped the vehicle.

The responses to the messages 'TELE', 'MANUAL', 'AUTO', and 'READY' are somewhat different because these messages are related and must be acted upon in a specific order. This has been described above. The program flow for these messages is shown in Figures 29A and 29B with respect to block 5622-5630.

The response to subsequent message possibilities are depicted by blocks 5632 through 5678 in Figures 29B through 29D. These responses are similar to those described for the message 'NEW_ROUTE_DIRECTIVE'.

If the received message is not one of the expected messages, or if the message is garbled, then the executive 5316 is directed to block 5680, where the host processing system 186 is informed of the problem. The executive 5316 then returns to the Exec Queue 5506 to respond to the next message in the queue.

Figures 30A through $_{30}$R show the specific procedures which the executive 5316 uses to respond to a particular message. For example, Figure$^{30}$ A details how the executive 5316 responds to a 'NEW_ROUTE_DIRECTIVE' message. Once this message arrives in the Exec Queue 5328, the executive 5316 then proceeds to a flowchart block 5702 to determine what the message is: in this case, 'NEW_ROUTE_DIRECTIVE'. If the message is 'NEW_ROUTE_DIRECTIVE', the executive 5316 then proceeds to a flowchart block 5705 to respond to the message. Otherwise, it proceeds on to a flowchart block 5704 to determine if it is valid (one of the other possible messages) or invalid.

Given that the message is a 'NEW_ROUTE_DIRECTIVE', then the executive 5316 follows the process described in Figure 30A to respond to the message. This process is depicted by blocks 5706 through 5714. In this procedure (and in responses to other directives), the executive 5316 checks the states of different tasks within the navigator 406 and reacts to these states in a known, predetermined manner.

The effect of this response is to set a series of status flags, which effect subsequent responses by other tasks in the navigator 406 when the executive 5316 reaches the Act On State 5510. The actual procedures implemented in block 5510 is shown in Figure 31.

The responses of the executive 5316 to other valid messages are similar to that described for the 'NEW_ROUTE_DIRECTIVE'. The effect of each response to directives first changes a set of flags, which in turn affect the state of the navigator 406. The particular flags set depend on the particular directive. The navigator 406 responds to the changes in these flags when the executive 5316 moves to the Act On State block 5510.

Figures 31A-31C illustrate the flow of the "act on state" block 5510.

The act on state block 5510 is shown in Figures 31A-31C. Figure 31 shows the interrelationship of Figures 31A-31C, where each of these three figures depict a portion of the Act On State block 5510.

Once the executive task 5316 has set the appropriate flags in response to a particular Exec message, the executive 5316 then proceeds to send messages to the appropriate tasks or entities which must be informed of changes to the navigator 406 system as a result of the Exec message.

For example, when the executive task 5316 leaves the executive decisions 5508, and first enters the act on state block 5510, it checks to see that the status is set such that the vehicle is ready for autonomous mode (for example - VPS is ready, vehicle is communicating properly, a proper route has been commanded, and the vehicle is ready for auto mode). See block 5802. If one or more of these conditions is not met, then the Exec returns to wait for another valid message. If all of these conditions are met, then the executive 5316 checks to see that the path generator 5804 is operating. If so, then the executive 5316 proceeds to start the other systems required for autonomous operation.

If the path generation system is not operating, then the executive 5316 task sends the message 'VPS_POSTURE_ENGAGE' to the Vps Posture Queue 5334, in order to start the path generator. The executive task will then return to the Pend on Exec Queue 5506, to wait for another directive so that proper operation of the vehicle 102 is ensured.

**Claims**

1. A multi-tasked navigation system (406) for an autonomous land based vehicle (102) comprising:

(1) a main task means (5316) for coordinating inter-task communications including means for performing high-level decision making;

(2) a monitor vehicle status task means (5308) for reading a communications port (5326) to the vehicle (102) including means for reporting vehicle mode changes and means for reporting system to vehicle communication state, to the main task means (5316) and further including means for writing a vehicle status message to a global memory structure (5400);

(3) a scanner task means (5310) for providing data from an obstacle detection system (40) to the main task means (5316);

(4) a get directives task means (5320) for interfacing the system (406) to a host (4020, including means for receiving and means for decoding messages from the host (402), and means for communicating a received and decoded message to another task means;

(5) a message to host task means (5318) for interfacing the system (406) to the host (402), including means for forming and means for communicating messages from the system to the host;

(6) a V.S. position task means (5322) for interfacing a vehicle positioning system (1000) to the system (406), including means for reading output from the vehicle positioning system (1000), checksum means for checking the output for correctness, writing means for putting checked output into the global memory structure (5400), and fault indicating means for sending a message to the main task means (5316) whenever a position fault occurs;

(7) a V.S. posture task means (5324) for monitoring the vehicle's position while the vehicle (102) is tracking, including means for maintaining a plurality of postures in a posture buffer (5410) of the global memory structure (5400); and

(8) a tracker task means (5306) for calculating steer and speed corrections for the vehicle (102), including means for reading position information from the position buffer (5412) of the global memory structure (5400), means for reading posture information from the posture buffer (5410) of the global memory structure (5400), and means for sending the steer and speed corrections to the vehicle (102) to control the vehicle's course.

2. A method of operating a multi-tasked navigation system (406) for an autonomous land based vehicle (102), comprising the steps of:

(1) coordinating (5316) inter-task communications;

(2) performing (5316) high-level decision making;

(3) reading (5308) a communications port (5326) to the vehicle (102);

(4) reporting (5308) vehicle mode changes to a main task (5316);

(5) reporting (5308) system-to-vehicle communication state to a main task (5316);

(6) writing (5308) a vehicle status message to a global memory structure (5400);

(7) providing (5310) data from an obstacle detection system (40) to the main task (5316);

(8) interfacing (5320) the system (406) to a host (402) by receiving and decoding messages from the host (402), and communicating a received and decoded message to another task;

(9) interfacing (5318) the system (406) to the host (402) by forming and communicating messages from the system (406) to the host (402);

(10) interfacing (5322) a vehicle positioning system (1000) to the system (406) by reading output from the vehicle positioning system (1000), checksum checking the output for correctness, writing checked output into a position buffer (5412) in a global memory structure (5400), and fault indicating by sending a message to the main task (5316) whenever a position fault occurs;

(11) monitoring (5324) the vehicle's position while the vehicle is tracking by maintaining a plurality of postures in a posture buffer (5410) of the global memory structure (5400); and

(12) calculating (5306) steer and speed corrections for the vehicle (102) by reading position information from the position buffer (5412) of the global memory structure (5400), reading posture information from the posture buffer (5410) of the global memory structure (5400), and calculating and sending the steer and speed corrections to the vehicle (102) to control the vehicle's course.

**Patentansprüche**

1. Ein Multi-Task-Navigationssystem (406) für ein autonomes Landfahrzeug bzw. Land stationiertes Fahrzeug (102), das Folgendes aufweist:

(1) Haupt-Taskmittel bzw. Hauptaufgabenmittel (5316) für die Koordination von Zwischen-Taskkommunikationen, und zwar einschließlich von Mitteln zur Durchführung von Entscheidungsfällung auf einer Hochebene;

(2) Taskmittel zur Überwachung des Fahrzeugstatus (5308) für das Auslesen eines Kommunikationsanschlusses (5326) zum Fahrzeug (102), und zwar einschließlich von Mitteln für das Berichten von Veränderungen des Fahrzeugmodus und Mitteln für das Berichten des Kommunikationsstatus vom System zum Fahrzeug (5316) an die Haupt-Taskmittel und weiter einschließlich von Mitteln für das Schreiben einer Fahrzeugstatusnachricht an eine Globalspeicherstruktur (5400);

(3) Abtast-Taskmittel (5310) für das Liefern von Daten von einem Hindernisdetektionssystem (40) an die Haupt-Taskmittel (5316);

(4) Taskmittel zum Holen von Weisungen (5320) für das schnittstellenverbinden des Systems (406) mit einem Host (4020), und zwar einschließlich von Mitteln für den Empfang und Mitteln für das Decodieren von Nachrichten vom Host (402), und Mitteln für das Übertragen bzw. Kommunizieren einer empfangenen und decodierten Nachricht an andere Taskmittel;

(5) Taskmittel für Nachrichten an den Host (5318) für das schnittstellenverbinden des Systems (406) mit dem Host (402), und zwar einschließlich von Mitteln für das Bilden und Mitteln für das Übertragen von Nachrichten vom System zum Host;

(6) V.S. Positionsanweisungsmittel (5322) für das schnittstellenverbinden eines Fahrzeugpositioniersystems (1000) mit dem System (406), und zwar einschließlich von Mitteln für das Lesen einer Ausgabe aus dem Fahrzeugpositioniersystem (1000), von Quer- bzw. Überprüfungssummenmitteln für das Überprüfen der Ausgabe hinsichtlich ihrer Richtigkeit, von Schreibmitteln für das Eingeben der überprüften Ausgabe in die Globalspeicherstruktur (5400) und von Fehleranzeigemitteln für das Senden einer Nachricht an die Haupt-Taskmittel (5316) wann immer ein Positionsfehler auftritt;

(7) V.S.-Stellungsanweisungsmittel (5324) für das Überwachen der Fahrzeugposition während das Fahrzeug (102) der Spur folgt, und zwar einschließlich von Mitteln für das Beibehalten einer Vielzahl von Stellungen in einem Stellungspuffer (5410) der Globalspeicherstruktur (5400); und

(8) Spur-Taskmittel (5306) für das Berechnen von Lenkungs- und Geschwindigkeitskorrekturen für das Fahrzeug (102), und zwar einschließlich von Mitteln für das Lesen einer Positionsinformation aus dem Positionspuffer (5412) der Globalspeicherstruktur (5400), Mitteln für das Lesen der Stellungsinformation aus dem Stellungspuffer (5410) der Globalspeicherstruktur (5400) und Mitteln für das Senden der Lenkungs- und Geschwindigkeitskorrekturen an das Fahrzeug (102) zur Steuerung des Fahrzeugkurses.

**2.** Verfahren für den Betrieb eines Mehrfachanweisungssystems (406) für ein autonomes landstationiertes Fahrzeug bzw. Landfahrzeug (102), wobei die folgenden Schritte vorgesehen sind:

(1) Koordinieren (5316) von Zwischen-Taskkommunikationen;
(2) Durchführen (5316) einer Entscheidungsfällung auf einer Hochebene;
(3) Lesen (5308) eines Kommunikationsanschlusses (5326) zum Fahrzeug (102);
(4) Berichten (5308) von Fahrzeugmodusveränderungen an eine Hauptanweisung (5316);
(5) Berichten (5308) eines System-zu-Fahrzeug-Kommunikationsstatus an die Haupt-Task (5316);
(6) Schreiben (5308) einer Fahrzeugstatusnachricht in eine Globalspeicherstruktur (5400);
(7) Liefern (5310) von Daten aus einem Hindernisdetektionssystem (40) an die Haupt-Task (5316);
(8) Verbinden bzw. Schnittstellenverbinden (5320) des Systems (406) mit einem Host (402) durch Empfangen und decodieren von Nachrichten vom Host (402) und Übertragen bzw. Kommunizieren einer empfangenen und decodierten Nachricht an eine andere Task;
(9) Schnittstellenverbinden (5318) des Systems (406) mit dem Host (402) durch Bilden und Übertragen von Nachrichten vom System (406) zum Host (402);
(10) Schnittstellenverbinden (5322) eines Fahrzeugpositioniersystems (1000) mit dem System (406) durch Auslesen aus dem Fahrzeugpositioniersystem (1000), Überprüfen durch Quersummen- bzw. Überprüfungssummenbildung der Ausgabe hinsichtlich ihrer Richtigkeit, Schreiben der überprüften Ausgabe in einen Positionspuffer (5412) in einer Globalspeicherstruktur (5400) und Fehleranzeige durch Senden einer Nachricht an die Hauptanweisung (5316) wann immer ein Positionsfehler auftritt;
(11) Überwachen (5324) der Fahrzeugposition während das Fahrzeug einer Spur folgt, und zwar durch Halten einer Vielzahl von Stellungen in einem Stellungspuffer (5410) der Globalspeicherstruktur (5400); und
(12) Berechnen (5306) von Lenkungs- und Geschwindigkeitskorrekturen für das Fahrzeug (102) durch Lesen einer Positionsinformation aus dem Positionspuffer (5412) der Globalspeicherstruktur (5400), Lesen einer Stellungsinformation aus dem Stellungspuffer (5410) der Globalspeicherstruktur (5400), und Berechnen und Senden der Lenkungs- und Geschwindigkeitskorrekturen an das Fahrzeug (102) zur Steuerung des Fahrzeugkurses.

**Revendications**

**1.** Système de navigation multi-tâches (406) pour un véhicule terrestre autonome (102) comprenant :

(1) un moyen de tâche principale (5316) pour coordonner des communications inter-tâches comprenant des moyens de prise de décision de haut niveau ;
(2) un moyen de tâche d'état de surveillance de véhicule (5308) pour lire un accès de communication (5326) vers le véhicule (102) comprenant un moyen pour indiquer des changements de modes du véhicule et un moyen pour indiquer un état de communication système-véhicule au moyen de tâche principale (5316), et comprenant en outre un moyen pour écrire un message d'état de véhicule vers une structure de mémoire globale (5400) ;
(3) un moyen d'analyseur de tâche (5310) pour fournir des données à partir d'un système de détection d'obstacles (40) vers le moyen de tâche principale (5316) ;
(4) un moyen de tâche d'obtention de directives (5320) pour faire interface entre le système (406) et un hôte (402), comprenant un moyen pour recevoir et un moyen pour décoder des messages en provenance de l'hôte (402) et un moyen pour communiquer un message reçu et décodé à un autre moyen de tâche ;

(5) un moyen de tâche de message vers l'hôte (5318) pour faire interface entre le système (406) et l'hôte (402), comprenant un moyen pour former des messages et un moyen pour communiquer des messages du système à l'hôte ;

(6) un moyen de tâche de position de système de positionnement de véhicule (VPS) (5322) pour faire interface entre un système de positionnement de véhicule (1000) et le système (406), comprenant un moyen pour lire la sortie du système de positionnement de véhicule (1000), un moyen de somme de vérification pour vérifier l'exactitude de la sortie, un moyen d'écriture pour mettre une sortie vérifiée dans la structure de mémoire globale (5400), et un moyen d'indication de défaut pour envoyer un message au moyen de tâche principale (5316) chaque fois qu'un défaut de position survient ;

(7) un moyen de tâche de posture de VPS (5324) pour surveiller la position du véhicule quand le véhicule (102) se déplace, comprenant un moyen pour maintenir plusieurs postures sur une mémoire tampon de posture (5410) de la structure de mémoire globale (5400) ; et

(8) un moyen de tâche de repérage (5306) pour calculer les corrections de direction et de vitesse pour le véhicule (102), comprenant un moyen pour lire les informations de position en provenance du tampon de position (5412) de la structure de mémoire globale (5400), un moyen pour lire des informations de posture à partir du tampon de posture (5410) de la structure de mémoire globale (5400) et un moyen pour envoyer les corrections de braquage et de vitesse au véhicule (102) pour commander le déplacement du véhicule.

**2.** Procédé d'actionnement d'un système de navigation multi-tâches (406) pour un véhicule terrestre autonome (102), comprenant les étapes suivantes :

(1) coordonner (5316) les communications inter-tâches ;

(2) réaliser (5316) une prise de décision de haut niveau ;

(3) lire (5308) un accès de communication (5326) vers le véhicule (102) ;

(4) indiquer (5308) des changements de mode de véhicule à une tâche principale (5316) ;

(5) indiquer (5308) l'état des communications système-véhicule à une tâche principale (5316) ;

(6) écrire (5308) un message d'état du véhicule vers une structure de mémoire globale (5400) ;

(7) fournir des données (5310) à partir d'un système de détection d'obstacles (40) à la tâche principale (5316) ;

(8) faire interface (5320) entre le système (406) et un hôte (402) en recevant et décodant des messages de l'hôte (402) et en transmettant un message reçu et décodé à une autre tâche ;

(9) faire interface (5318) entre le système (406) et l'hôte (402) en formant et en communiquant des messages en provenance du système (406) vers l'hôte (402) ;

(10) faire interface (5322) entre un système de positionnement du véhicule (1000) et le système (406) en lisant la sortie du système de positionnement du véhicule (1000), en vérifiant l'exactitude d'une somme de vérification de la sortie, en écrivant la sortie vérifiée dans un tampon de position (5412) dans la structure de mémoire globale (5400) et en indiquant un défaut en envoyant un message à la tâche principale (5316) chaque fois qu'un défaut de position prend place ;

(11) surveiller (5324) la position du véhicule quand le véhicule est en déplacement en maintenant plusieurs postures dans un tampon de posture (5410) de la structure de mémoire globale (5400) ; et

(12) calculer (5306) des corrections de braquage et de vitesse pour le véhicule (102) en lisant des informations de position en provenance du tampon de position (5412) de la structure de mémoire globale (5400), en lisant des informations de posture à partir du tampon de posture (5410) de la structure de mémoire globale (5400), et en calculant et en envoyant des corrections de braquage et de vitesse au véhicule (102) pour commander le déplacement du véhicule.

EP 0 936 516 B1

100

F19 1

43

**100A**

FIG 1A

FIG 2

$$(X_0 - U_x)^2 + (Y_0 - U_y)^2 + (Z_0 - U_z)^2 = (R_0 - C_b)^2$$

$$(X_2 - U_x)^2 + (Y_2 - U_y)^2 + (Z_2 - U_z)^2 = (R_2 - C_b)^2$$

$$(X_4 - U_x)^2 + (Y_4 - U_y)^2 + (Z_4 - U_z)^2 = (R_4 - C_b)^2$$

$$(X_6 - U_x)^2 + (Y_6 - U_y)^2 + (Z_6 - U_z)^2 = (R_6 - C_b)^2$$

Vehicle 102 Latitude $= \theta = \cos^{-1} \sqrt{\dfrac{(U_x^2 + U_y^2)}{|\bar{u}|}}$

Vehicle 102 Longitude $= \beta = \tan^{-1} U_x/U_y$

212

# FIG 3

## Autonomous Work Site

EP 0 936 516 B1

FIG. 4

EP 0 936 516 B1

186 ~
Host
Processing
System

500

524 ~
On-board
Operator

autonomy
directives

status to
host

502

300 ~
Mine Site
Environment

504

on-board
displays

on-board
inputs

522

extern.
warnings

506

road
profiles

508

520

Control
Autonomous
Truck

GPS Corrections

tele
displays

512

510 ~

418

tele
inputs

Stationary
GPS Receiver

410

Tele-
operator

GPS signals

420

514

vehicle
actuation

vehicle
states

518

200-206 ~
GPS
Satellites

Vehicle

102 ~

inertial
pos'n est.

516 ~

Inertial
Pos'n System

___ FIG 5

200 202 204 206

105

600

316 618

620 622

188 312

102

Vehicle

Base Station

FIG 6

GPS Antenna

702

Pre Amp 704

700

GPS Receiver 706

GPS Inter Communications Processor 708

GPS Console 1 712

GPS Processor 710

GPS Console 2 722

716

GPS Communications Interface Processor 720

Data Radio 714

GPS Data Collection Device 718

FIG 7

EP 0 936 516 B1

714 — Data Radio

GPS Receiver

800

706

GPS Data
Collection Device

718

GPS Communications
720 — Interface Processor

IPROTO Function

804

ICC Function

812

Communications
Manager
Function

808

Raw GPS
Data Output
Function

814

Request &
Decode GPS
Data

806

Decode Radio
Link Data

810

Control
File
(Priori)

820

708

710

GPS Kalman
Filter

802

Console
Function

816

VPS
Communications
Function

818

FIG 8

GPS Console 2

722

716

VPS System

1000

51

900

Odometer  902    IRU  904

MPS Inter
Communications
Processor
906

908    910

Odometer
Signal

IRU
Signal

To Vps
Main Processor
1002

Fig 9

```
         ┌──────────────┐              ┌──────────────┐
         │     GPS      │              │     MPS      │
         │  Processing  │              │  Processing  │
         │    System    │              │    System    │
         └──────────────┘              └──────────────┘
                          └700                          └900

    1018    │716                   │908    │910
         │                      ┌──────────────────────────┐
         │      │               │        VPS Main          │
         │      ▼               │        Processor         │
  Velocity     └──────────────────────────────────────────┘
  Data and                                        └1002
  Position
    Data          │1008

                  ▼
              ┌──────────────────┐
              │   VPS I/O        │
              │   Processor      │
              └──────────────────┘
                          └1004
                  │1016

                  ▼
              ┌──────────────────┐
              │      VPS         │
              │ Communications   │
              │ Interface Processor │
              └──────────────────┘
                          └1020
```

To Navigation
Sytem 1022

┌──────────────┐          ┌──────────────┐
│   VPS Data   │          │     VPS      │
│  Collector   │          │   Console    │
└──────────────┘          └──────────────┘
          └1014                     └1012

FIG 10

Current Posture Pointer
3002

Direction of
Pointer
Movement
(Vehicle Movement)

Specified Postures
(Used Postures)
3004

Open Buffer Space
(Used Postures)
3008.

Where Newly
Generated
Postures are
Placed
3010

Safety Margin Postures
3006

3000

3000

FIG 11

<u>3100</u>

path

speed

$(x, y, \theta)$

Steering Planner — 3102

3112

$\phi_{desired}$

3114

Speed Setter — 3106

$\omega_{desired}$

Steering Servo Controller — 3104

3116

$\phi$

Driving Servo Controller — 3108

$\omega$

3118

| Steering Dynamics | Driving Dynamics |
| --- | --- |

INS GPS — 3110

$\boxed{\text{FIG}}$.12

**Fig 13**

3200

$\phi_{k+1}$ 3206

$\phi_{k+2}$ 3208

3204 $P_{d,k}$

3202 $P_{g,l-1}$

$P_{a,k+1}$ 3212

$P_{g,l}$ 3214

$P_{a,k+2}$ 3218

$P_{g,l+1}$ 3220

$P_{a,k}$ 3210

$\tilde{P}_{a,k+1}$ 3216

$P_{g,l}$ : reference postures at every unit distance

$P_{d,k}$ : desired postures at the end of every planning time interval

$P_{a,k}$ : sensed vehicle posture

$\tilde{P}_{a,k+1}$ : expected vehicle postures

$\phi_{k+1}$ : planned steering angle between $\tilde{P}_{a,k}$ and $P_{a,k+1}$

$X_a$ = Easting

$Y_a$ = Northing

$P_a = [X_a, Y_a]$ —— 3322

Posture $= [X_a, Y_a, \theta_a, C_o, V_a, S]$

3314

**FIG 14**

actual heading

3320

3302

$b_a$ 3322

3300

3318

$P_a$

$P_d$ 3306

desired heading = $\theta_a$

3308

$e_o$ 3320

$P_L$

3304

3312

$P_o$

L

3310

S

given path
3312

R

$C_a = \frac{1}{R}$ = curvature

3316

57

**3400**

$$\bar{U} = \frac{1}{r_p} - \frac{1}{r_a}$$

$\bar{U}$ = Curvature Error

3404

**FIG. 15**

Host
186

3500

Laser
Scanner
416

Navigator
406

VPS
432
1000

Vehicle
102

414

434

FIG 16

Fig 17

EP 0 936 516 B1

## Navigator Data Flow Summary

The purpose of this summary is to list all of the data flows defined in the Navigator Architecture. Where the flow is defined, whether it is control or data, how it is used and what it is made up of is listed in this summary. A list of abreviations used in this list is included at the end of the list.

| Data Flow | Title (DFD diagram) | Ctrl/ Data | Flow Direction |
|---|---|---|---|
| 502 | Host Cmds and Queries (NI(2)) = (follow path n I set scan speed I set speed limit I start tracking I restart tracking I shutdown) | C | Host - > NI |
| 504 | Replies to Host (NI(2)) = (navigator status summary I VPS Packet I Exception Condition n I ACK I Nack I Invalid command/query ) | D | NI - > Host |
| 3604 | Supervisor Instr. (NI(2)) = (FOLLOW_PATH n I SPEED_LIMIT I START_TRACKING I RESTART_TRACKING ISHUTDOWN) | C | NI - >TC |
| 3658 | Navigator Status (NI(2)) = (21 + 37 + 69 + 71 + 84) | D | /Nav Status/ - > NI |
| 432 | Position Data (Context (0)) = (VPS packet) | D | VPS - > PE |
| 3702 | CK Status (OD(2)) = (RUNNING I WAINTING I SLOW I STOP) | C | CC - >/NavStatus/ |
| 3704 | Obs. det. Instr. (ALL(1)) = (38 + 39 + 42) | C | SUPER - > OD |
| 416 | Scanner Data (CONTEXT(0)) | D | Scanner - > SIO |
| 3638 | Safe_Dis (OD(2)) | D | CC - > /Safe_Dis/ - > SP |
| 3636 | Min (MaxSpeeds) (VC (2)) = min ( 18 & 25 & 29 ) (not implemented) | D | /MaxSpeed/ - > SP |
| 3628 | Path Man Inst. (PM (2)) I INIT_TASK I START_TASK I STOP -TASK I | C | TC - > PM |

FIG 18A

| Data Flow | Title (DFD diagram) | Ctrl/ Data | Flow Direction |
|---|---|---|---|
| 3614 | Vehicle Control (VC(2)) <br> = ( ACK I NACK ) | C | SP - > TC |
| 3612 | Veh. Ctrl. Instr. (VC(2)) <br> = ( INIT_TASK I START_TASK I stop _TASK I STOP_VEH ) | C | TC - > SP |
| 3650 | Position Est. Instr. (PE(2)) <br> = (INIT-TASK I START_TASK I STOP_TASK ) | C | TC - > PE |
| 3660 | Vehicle Path (PM(2)) <br> = ( n Path Postures ) | D | PM - >/Path Buf/ |
| 3612 | Exception Veh. Cmd (VC(2)) <br> = ( STOP_VEH ) | C | EC - > SP |
| 3644 | Speed Limit (Path Manager) (PM(2)) | D | PM - >/MaxSpeed/ |
| 432 | VPS Control (PE(2)) <br> (not implemented) | C | PE - > VPS |
| 416 | Scanner Ctrl (OD(2)) <br> = (Scanner Motor Amp Instructions) (not implemented) | C | SC - > Scanner |
| 4102 | Obs det Status (ALL(1)) <br> = (6+85+86) | D | OD - >/NavStatus/ |
| 420 | Vehicle Commands (VC(2)) | C | SP - > Vehicle |
| 3622 | Path Data (PM(2)) <br> = ( n Path Postures) | D | /Path Store/ - > PM |
| 3642 | Valid VPS Packet (PE(2)) <br> = (VPS data) | D | PE - > /Pos Buff/ |
| 3654 | Speed Limit (Task Ctrl) (TC(2)) | D | TC - > /MaxSpeed/ |

FIG. 18B

| Data Flow | Title (DFD diagram) | Ctrl/ Data | Flow Direction |
|---|---|---|---|
| 3612 | Supervisor Resp. (ALL(1)) = {87 + 61} | C | SUPER -> NI |
| 3626 | Path Manager Resp. (PM(2)) = { ACK I NACK } | C | PM -> TC |
| 4104 | Speed Limit (Obs. Det.) (OD(2)) | D | CC - >/MaxSpeed/ |
| 3648 | PE Response (PE(2)) = { ACK I NACK } | C | PE - > TC |
| 3606 | Obs. Det. Resp. (ALL(1)) = { 40 + 41 + 43 } | C | OD - > SUPER |
| 3706 | Scan Done (OD(2)) = { SDAT_AVAILABLE } | C | SIO-> CC |
| 3616 | Veh. Ctrl. Status (VC(2)) = { WAITING I RUNNING } | D | SP->/NavStatus/ |
| 3616 | Veh. Ctrl. Status (VC(2)) = { WAITING I RUNNING } | D | SP->/NavStatus/ |
| 3708 | Clear Chk Instr. (OD(2)) = { START_TASK I INIT_TASK I STOP_TASK } | C | TC-> CC |
| 3710 | Scan Ctrl Instr. (OD(2)) = { START_TASK I INIT_TASK I STOP_TASK } | C | TC -> SC |
| 3712 | Scan Ctrl Resp. (OD(2)) = { ACK I NACK } (not implemented) | C | SC -> TC |
| 3714 | Clearance Chk. Resp. (OD(2)) | C | CC -> TC |
| 2716 | Scan I/O Instr. (OD(2)) (not implemented yet) | C | TC -> SIO |
| 3718 | Scan I/O Resp. (OD(2)) = { ACK I NACK } | | |
| 3720 | Tagged Scans (OD(2)) = { 8 + Scan Number } | D | SIO -> /Scan Buf/ |

FIG 18C

| Data Flow | Title (DFD diagram) | Ctrl/ Data | Flow Direction |
|---|---|---|---|
| 3614 | Tracking Exception (VC(2)) = (VEH_OFF_PATH I PARAM_OO_BOUNDS i PDAT_NEXIST I SDAT_NEXIST I PBUF_EMPTY I PBUFF_INSUFFICIENT I VEH_TOO_FAST I TRACK_HEAD_ERR I VEH_NOT_CONN I VPS_NOT_READY I VPS_NOT_REC I SKIPPED_SCAN I PBUF_EMPTY) | C | SP - > EC |
| 3722 | Collision Avoid. Except. (OD(2)) = (BAD_ANGLE I PDAT_NEXIST I SDAT_NEXIST I PBUFF_INSUFFICIENT I VEH_OFF_PATH I VEH_TOO_FAST I TRACK_HEAD_ERR) | C | CC - > EC |
| 3724 | Obstacle Det Except (ALL(1)) = {52+56+57} | C | OD - > SUPER |
| 3726 | Scan Ctrl Except (OD(2)) = (LASER_FAULT) (not implemented) | C | SC - > EC |
| 3728 | Scan I/O Exception (OD(2)) = (LASER_FAULT) | C | SIO - > EC |
| 3730 | Exceptions (EC(2)) = {51+52+53+57+127+130} | C | EC - > NI |
| 3732 | PE Status (PE(2)) = (WAITING I RUNNING) | D | PE - >/NavStatus/ |
| 3618 | PM Status (PM(2)) = (WAITING I RUNNING) | D | PM - >/NavStatus/ |
| 3662 | Supervisor Status (TC(2)) = (WAITING I RUNNING) | D | TC - >/NavStatus/ |
| 3734 | Scan I/O Status (OD(2)) = (WAITING I RUNNING) | D | SIO - >/NavStatus/ |
| 3736 | Scan Ctrl Status (OD(2)) = (WAITING I RUNNING) | D | SC - >/NavStatus/ |
| 3732 | Supervisor Status (TC(2)) = (ACK I NACK) | C | TC - >NI |
| 3636 | PM Exception (PM(2)) | C | PM - >EC |

FIG 18D

Fig 19

4300

Commands
From
Navigator —4316

4318— Commands
From
Remote
Control
Panel

Vehicle
Manager
4302

4314

| Speed Control 4304 | Steering Control 4306 | Auxiliary Control 4308 | Monitor 4310 |

Shutdown Circuits
4312

To Vehicle
102

To Vehicle
102

To Vehicle
102

FIG 20

start

"panic" buttons, or
severe fault, or
manual steering, or
manual brakes, or
controller disabled

"panic" buttons, or
severe fault, or
manual steering, or
manual brakes, or
controller disabled

Manual

⌐4402

stop vehicle &
disable controller

stop vehicle &
disable controller

4400

"panic" buttons, or
severe fault, or
manual steering, or
manual brakes, or
controller disabled

park brake on, and
cane in neutral, and
controller enable

stop vehicle &
disable controller

stop vehicle &
disable AUTO

Ready

4404

park brake off,or
cane in gear, or
poor data link or
TELE release

vehicle stopped, and
cane in neutral, and
park brake on, and
TELE request

park brake off, or
cane in gear, or
AUTO disabled, or
TELE request, or
"stop" directive, or
last directive
completed

stop vehicle

tele-operation

vehicle stopped, and
cane in neutral, and
park brake on, and
AUTO enabled

Tele

⌐4406

autonomous operation

stop vehicle &
disable AUTO

Key:

state 1

condition
action

state 2

Auto

⌐4408

**FIG. 21**

FIG 22

EP 0 936 516 B1

SUPPLY

from
Control

VENT

from
Control

4712  4714

4716  4728

4700

4708

4710

4220

4706

to
Control

4702

to
Shutdown
Circuits

4704

to Brake
System

FIG 23

SUPPLY

from Control

VENT

from Control

4808

4810

4812

4814

4800

4816

4806

to Control

4802

4804

FIG 24

to Engine Governor

4900

4902

4906

4904

4908

4910

4918

HMU - with
switch to
detect
off-center
position

4920

4914    4916

FIG. 25

Fig. 26

EP 0 936 516 B1

5400

FIG 27

```
                    ┌─────────────┐
                    │    Start    │
                    └──────┬──────┘
                           │   ⟍ 5502
                           ▼
                    ┌─────────────┐
                    │  Initialize │
                    │  Navigator  │
                    └──────┬──────┘
                           │   ⟍ 5504
                           ▼
          ┌───────→ ┌─────────────┐
          │         │ Pend On Exec│
          │         │    Queue    │
          │         └──────┬──────┘
          │                │   ⟍ 5506
   5514   │                ▼
          │         ┌─────────────┐
          │         │  Executive  │
          │         │  Decisions  │
          │         └──────┬──────┘
          │                │   ⟍ 5508
          │                ▼
          │         ┌─────────────┐
          └─────────│ Act On State│
                    └──────┬──────┘
                           │   ⟍ 5510
                           ▼
                    ┌─────────────┐
                    │     End     │
                    └─────────────┘
                            ⟍ 5512
```

FIG. 28

5600

Start

5601

Figure 29

5603

Figure 29

5605

Figure 29

5607

Figure 29

5609

Fig 29

End

5611

**5600A**

Start
5601

Pend On Exec Queue
5506

(message in exec queue)

New_Route_Directive 5602 — True → Act On New_Route_Directive 5604

False

Change_Speed_Directive 5606 — True → Act On Change_Speed_Directive 5608

False

VEH_Responding 5610 — True → Act On VEH_Responding 5612

False

No_VEH_Responding 5614 — True → Act On No_VEH_Response 5616

False

VEH_Checksum_ERR 5618 — True → Act On VEH_Checksum_ERR 5620

False

Tele 5622 — True → Act On Mode Change 5624

False

(A) (B) (C) (D) (E)

FIG 29A

5600B

Act On VPS_Timeout
5634

Act On VPS_Checksum_Error
5638

Act On VPS_Posture_Ready
5642

Act On VPS_Posture_Ready
5646

Manual 5626
False

Auto 5628
False

Ready 5630
False

VPS_Timeout 5632
True → Act On VPS_Timeout
False

VPS_Checksum_Error 5636
True
False

VPS_Posture_Ready 5640
True
False

VPS_Position_Ready 5644
True
False

A  B  C  D  E  F  G

FIG 29B

5600C

F

G

Act On VPS_Position_Align — True — VPS_Position_Align
5650                                                    5648

False

Act On End_Of_Route — True — End_of_Route
5654                                       5652

False

Act On Scan_Ready — True — Scan_Ready
5658                                    5656

False

Act On Scan_All_Clear — True — Scan_All_Clear
5662                                        5660

False

Act On Scan_Obstacle — True — Scan_Obstacle
5666                                       5664

False

Act On Tracker_Off_Course — True — Tracker_Off_Course
5670                                              5668

False

H

FIG 29C

I

5600D

(H)

(I)

Act On
Tracker_End_Of_Route ◄──── True ──── Tracker_End_Of_Route
5666                                                    5672

False

Act On
Tracker_Stopped ◄──── True ──── Tracker_Off_Course
5678                                                5676

False

Inform Host Of
Invalid Message
5680

Act On State
5510

5611

FIG 29D

End

5700A

Start — 5701

Pend On Exec Queue — 5506

New_Route_Directive — 5602
False → Executive Decisions After New_Route_Directive — 5704
True ↓

Tracker_Engaged — 5606
True → Normal_Stop -> Tracker_Queue — 5708
False ↓

Current_Route < O or Route_Data_Store is Unhealthy — 5710
False → Valid_Route = TRUE — 5714
True ↓ Valid_Route = FALSE — 5712

Act On State — 5510

End — 5717

FIG 30A

5701 — Start

5700B

Pend On Exec Queue
5506

Executive Decisions Before
Change_Speed_Directive
5702

Executive Decisions After
Change_Speed_Directive
5706

False ← Change_Speed_Directive
5704

True

New_Speed_Factor - >
Tracker_Queue
5708

Act On State
5510

5717 — End

Note: Speed factor was set before
Change_Speed_Factor message was
Sent to Executive.

⎓⊐⊏⊑ 30B

**5700C**

5701 — Start

Pend On Exec Queue — 5506

Executive Decisions Before VEH_Responding — 5702

Executive Decisions After VEH_Responding — 5706

VEH_Responding — 5704

False / True

Vehicle_Responding = True,
Veh_Cont_Aux = Healthy,
Veh_Cont_Speed = Healthy,
Veh_Cont_Steer = Healthy,
Veh_Cont_Mgr = Healthy — 5708

Act On State — 5510

5717 — End

FIG 30C

5701 — **Start**

**Pend On Exec Queue** — 5506

**Executive Decisions Before No_UEH_Responding** — 5702

**No_VEH_Responding** — 5704

False → **Executive Decisions After No_VEH_Responding** — 5706

True

**Tracker_Engaged** — 5708

False

True

**Tracker_Disengage Tracker_Queue, Tracker_Engaged = TRUE** — 5710

**Auto_Permission = FALSE, Vehicle_Responding = FALSE** — 5712

**Scan_Disengage - > Scan_Queue, Scanner_Engaged = FALSE, Scanner_Ready = FALSE, Scanner_All_Clear = FALSE** — 5714

**Veh_Cont_Aux = Unhealthy, Veh_Cont_Speed = Unhealthy, Veh_Cont_Steer = Unhealthy, Veh_Cont_Mgr = Unhealthy** — 5716

**VPS_Posture_Disengage - > VPS_Posture_Queue, Generator_Engaged = FALSE, VPS_Posture_Ready = FALSE** — 5718

**Inform Host of Situation** — 5720

**Act On State** — 5510

5717 — **End**

5700D

FIG 30D

83

**Start** — 5701

**Pend On Exec Queue** — 5506

5700E

**Executive Decisions Before VEH_Checksum_Error** — 5702

**UEH_Checksum_Error** — 5704

False → **Executive Decisions After VEH_Checksum_Error** — 5706

True

**Tracker_Engaged** — 5708

False

True

**Tracker_Disengage Tracker_Queue, Tracker_Engaged = TRUE** — 5710

**Auto_Permission = FALSE, Vehicle_Responding = FALSE** — 5712

**Scan_Disengage - > Scan_Queue, Scanner_Engaged = FALSE, Scanner_Ready = FALSE, Scanner_All_Clear = FALSE** — 5714

**Veh_Cont_Aux = Unhealthy, Veh_Cont_Speed = Unhealthy, Veh_Cont_Steer = Unhealthy, Veh_Cont_Mgr = Unhealthy** — 5716

**UPS_Posture_Disengage - > UPS_Posture_Queue, Generator_Engaged = FALSE, UPS_Posture_Ready = FALSE** — 5718

**Inform Host of Situation** — 5720

**Act On State** — 5510

5717 **End**

**FIG 30E**

5701 — Start

Pend On Exec Queue — 5506

Executive Decisions Before Mode Change. — 5702

5700F

Executive Decisions After Mode Change. — 5706 ← False ← Tele or Manual or Ready or Auto — 5704

True

Auto_Permission = True ← True ← Vehicle_Stat. Permission == Auto — 5708

5710

True

Auto_Permission = FALSE — 5712

False ← Tracker_Engaged — 5714

True

Tracker_Disengage -> Tracker_Queue, Tracker_Engaged = FALSE — 5716

Scan_Disengage -> Scan_Queue, Scanner_Engaged = FALSE, Scanner_Ready = FALSE, Scanner_All_Clear = FALSE — 5718

VPS_Posture_Disengage -> VPS_Posture_Queue, Generator_Engaged = FALSE, VPS_Posture_Ready = FALSE — 5720

Act On State — 5510

5717 — End

FIG 30F

EP 0 936 516 B1

**5700G**

5701 — Start

Pend On Exec Queue — 5506

Executive Decisions Before VPS_Timout — 5702

VPS_Timout — 5704

False → Executive Decisions After VPS_Timout — 5706

True

Emerg_Stop -> Tracker_Queue, Tracker_Engaged = FALSE — 5708

True

Scan_Disengage -> Scan_Queue, Scanner_Engaged = FALSE, Scanner_Ready = FALSE, Scanner_All_Clear = FALSE — 5710

UPS_Posture_Disengage -> UPS_Posture_Queue, Generator_Engaged = FALSE, UPS_Posture_Ready = FALSE — 5712

Inform the Host of Situation — 5714

UPS_Position_Ready = FALSE, UPS Status = Unhealthy — 5716

Action State — 5510

5717 — End

FIG 30G

86

5700H

```
5701 ──╮
        ( Start )
           │
           ▼
   ┌───────────────────┐
   │ Pend On Exec Queue │◄──────────┐
   └───────────────────┘            │
           │     └─ 5506            │
           ▼                        │
   ┌───────────────────┐            │
   │ Executive Decisions Before │   │
   │   VPS_Checksum_Error      │    │
   └───────────────────┘            │
           │     └─ 5702            │
           ▼                        │
```

┌─────────────────────────────┐
│ Executive Decisions After   │◄── False ── ◇ VPS_Checksum_Error ◇
│   VPS_Checksum_Error        │                    └─ 5704
└─────────────────────────────┘
      └─ 5706

True
│
▼
┌───────────────────────────┐
│ Emerg_Stop - >            │
│ Tracker_Queue,            │
│ Tracker_Engaged = FALSE   │
└───────────────────────────┘
      └─ 5708
│
▼
┌─────────────────────────────┐
│ Scan_Disengage - >          │
│ Scan_Queue,                 │
│ Scanner_Engaged = FALSE,    │
│ Scanner_Ready = FALSE,      │
│ Scanner_All_Clear = FALSE   │
└─────────────────────────────┘
      └─ 5710
│
▼
┌─────────────────────────────┐
│ VPS_Posture_Disengage - >   │
│ VPS_Posture_Queue,          │
│ Generator_Engaged = FALSE,  │
│ VPS_Posture_Ready = FALSE   │
└─────────────────────────────┘
      └─ 5712
│
▼
┌───────────────────────────┐
│ Inform the Host of Situation │
└───────────────────────────┘
      └─ 5714
│
▼
┌───────────────────────────┐
│ VPS_Position_Ready =      │
│ FALSE,                    │
│ VPS Status = Unhealthy    │
└───────────────────────────┘
      └─ 5716
│
▼
┌───────────────────────────┐
│ Act On State              │
└───────────────────────────┘
      └─ 5510
│
▼
5717 ──╮
      ( End )

**FIG 30H**

FIG 30I

5700J

5701 — Start

Pend On Exec Queue
⌐5506

Executive Decisions Before
VPS_Position_Ready
⌐5702

Executive Decisions After
VPS_Position_Ready
⌐5706

False ← VPS_Position_Ready
⌐5704

True

VPS_Posture_Ready = TRUE
VPS Status = Healthy
⌐5708

Act On State
⌐5510

5717 — End

FIG. 30J

5700K

**Start** — 5701

Pend On Exec Queue — 5506

Executive Decisions Before VPS_Position_Align — 5702

Executive Decisions After VPS_Position_Align — 5706

VPS_Position_Align — 5704 ←False / True

Not Tracker_Engaged and Valid_Route and VPS_Position_Ready — 5708 ←False / True

VPS_Position_Ready = FALSE
VPS Status = Unhealthy — 5710

VPS_Position_Align -> VPS_Position_Queue — 5712

Act On State — 5510

**End** — 5717

FIG 30K

5700L

```
          ┌──────────────┐
          │    Start     │
          └──────────────┘
5701            │
                ▼
         ┌────────────────┐
         │ Pend On Exec   │◄───────────┐
         │     Queue      │            │
         └────────────────┘            │
                │      └─5506          │
                ▼                      │
         ┌────────────────┐            │
         │ Executive      │            │
         │ Decisions      │            │
         │ Before         │            │
         │ End_Of_Route   │            │
         └────────────────┘            │
                │      └─5702          │
                ▼                      │
┌──────────────┐   False  ◇            │
│ Executive    │◄─────────  End_Of_Route           │
│ Decisions    │           ◇  └─5704   │
│ After        │            │          │
│ End_Of_Route │            │ True     │
└──────────────┘            ▼          │
      └─5706        ┌────────────────┐ │
                    │ End_Of_Route ->│ │
                    │ Tracker_Queue  │ │
                    └────────────────┘ │
                           │  └─5708   │
                           ▼           │
                    ┌────────────────┐ │
                    │ Inform the Host│─┘
                    └────────────────┘
                           │  └─5710
                           ▼
                    ┌────────────────┐
                    │  Act On State  │
                    └────────────────┘
                           │  └─5510
5717            ┌──────────────┐
                │     End      │
                └──────────────┘
```

FIG 30L

5700M

5701 — Start

Pend On Exec Queue
5506

Executive Decisions Before
Scan_Ready
5702

Executive Decisions After
Scan_Ready
5706

False

Scan_Ready
5704

True

Scanner_Ready = TRUE,
Scanner Status = Healthy
5708

Act On State
5510

5717 — End

FIG. 30M

5700N

5701 — Start

Pend On Exec Queue
5506

Executive Decisions Before
Scan_All_Clear
5702

Executive Decisions After
Scan_All_Clear
5706

False ← Scan_All_Clear
5704

True

Scanner_All_Clear = TRUE
5708

Act On State
5510

5717 — End

FIG 30N

5700Q

```
                           ┌─────────────┐
                           │    Start    │
                    5701   └─────────────┘
                                  │
                                  ▼
                    ┌──────────────────────────┐
                    │    Pend On Exec Queue     │◄──────┐
                    └──────────────────────────┘       │
                           5506   │                     │
                                  ▼                     │
                    ┌──────────────────────────┐        │
                    │  Executive Decisions Before │      │
                    │     Scan_Obstacle         │       │
                    └──────────────────────────┘        │
                           5702   │                     │
                                  ▼                     │
┌──────────────────────┐   False      ╱╲               │
│ Executive Decisions   │◄────────────  Scan_Obstacle  │
│  After Scan_Obstacle  │             ╲╱  5704          │
└──────────────────────┘      │                        │
              5706            True                      │
                              ▼                         │
                ┌──────────────────────────────┐        │
                │ Emerg_Stop -> Tracker_Queue,  │        │
                │  Tracker_Engaged = FALSE      │        │
                └──────────────────────────────┘        │
                       5708   │                         │
                              ▼                         │
                ┌──────────────────────────────┐        │
                │  Scanner_All_Clear = FALSE    │        │
                └──────────────────────────────┘        │
                       5710   │                         │
                              ▼                         │
                ┌──────────────────────────────┐        │
                │       Inform the Host         │        │
                └──────────────────────────────┘        │
                       5712   │                         │
                              ▼                         │
                ┌──────────────────────────────┐        │
                │        Act On State           │────────┘
                └──────────────────────────────┘
                       5510   │
                              ▼
                       ┌─────────────┐
                 5717  │     End     │
                       └─────────────┘
```

FIG. 300

5701 — Start

Pend On Exec Queue — 5506

Executive Decisions Before Tracker_Off_Course — 5702

Tracker_Off_Course — 5704

False → Executive Decisions After Tracker_Off_Course — 5706

True

Tracker_Engaged = FALSE — 5708

True

VPS_Posture_Disengage -> VPS_Posture_Queue, Generator_Engaged = FALSE, VPS_Posture_Ready = FALSE — 5710

Scan_Disengage -> Scan_Queue, Scanner_Engaged = FALSE, Scanner_Ready = FALSE, Scanner_All_Clear = FALSE — 5712

Auto_Permission = FALSE — 5714

Inform Host of Situation — 5716

Act On State — 5510

5717 — End

FIG. 30P

5701 — **Start**

**Pend On Exec Queue**
5506

<u>5700Q</u>

**Executive Decisions Before Tracker_End_Of_Route**
5702

**Executive Decisions After Tracker_End_Of_Route**
5706

False ← **Tracker_End_Of_Route**
5704

True

**Current_Route = -1, Valid_Route = FALSE**
5708

**Tracker_Engaged = FALSE**
5710

**VPS_Posture_Disengage - > VPS_Posture_Queue, Generator_Engaged = FALSE, VPS_Posture_Ready = FALSE**
5712

**Scan_Disengage - > Scan_Queue, Scanner_Engaged = FALSE, Scanner_Ready = FALSE, Scanner_All_Clear = FALSE**
5714

**Inform the Host of Situation**
5716

**Act On State**
5510

5717 — **End**

**FIG** 30Q

5701 — **Start**

5700R

**Pend On Exec Queue** — 5506

**Executive Decisions Before Tracker_Stopped** — 5702

**Tracker_Stopped** — 5704

False → **Executive Decisions After Tracker_Stopped** — 5706

True

**Tracker_Engaged = FALSE** — 5708

**VPS_Posture_Disengage - > VPS_Posture_Queue, Generator_Engaged = FALSE, VPS_Posture_Ready = FALSE** — 5710

**Scan_Disengage - > Scan_Queue, Scanner_Engaged = FALSE, Scanner_Ready = FALSE, Scanner_All_Clear = FALSE** — 5712

**Auto-Permission = FALSE** — 5714

**Inform Host of Situation.** — 5716

**Act On State** — 5510

5717 — **End**

FIG 30R

5800

5801

Start

5800A

Fig
_31

5800B

Fig
_31

5800C

Fig
_31

5821

End

FIG 31

5800A

```
                                    ┌─────────┐
                                    │  Start  │
                                    └─────────┘
                                         │
                    5801                 ▼
        ┌──────────────────────►┌──────────────────┐◄──────────────┐
        │                       │ Pend On Exec Queue│               │
        │                       └──────────────────┘               │
        │                              5506│                         │
        │                                  ▼                         │
        │                       ┌──────────────────┐               │
        │                       │    Executive     │               │
        │                       │    Decisions     │               │
        │                       └──────────────────┘               │
        │                            5508 │                         │
        │                                 ▼                         │
        │                               ╱───╲                       │
        │                             ╱       ╲                     │
        │                           ╱ VPS_Position_ ╲   False        │
        │                          ╱ Ready and        ╲──────────►   │
        │                          ╲ Vehicle_Responding╱             │
        │                           ╲ and Valid_Route ╱              │
        │                             ╲ and Auto-    ╱               │
        │                               ╲Permission╱ 5802            │
        │                                 ╲──────╱                   │
        │                                 True│                      │
        │                                     ▼                      │
        │  ┌──────────────────────┐        ╱───╲                     │
        │  │ VPS_Posture_Engage -> │  True ╱     ╲                    │
        │  │ VPS_Posture_Queue     │◄─────╱  Not   ╲                  │
        │  └──────────────────────┘      ╲Generator_╱                │
        │           5806│                 ╲Engaged ╱  5804            │
        │               ▼                  ╲─────╱                    │
        │  ┌──────────────────────┐       False│                     │
        │  │ Generator_Engaged = TRUE│          ▼                     │
        │  └──────────────────────┘        ╱───╲                     │
        │◄──────────5808                  ╱     ╲                    │
        │                                ╱  Not   ╲   True            │
        │  ┌──────────────────────┐  True╱Generator_╲◄───────────    │
        │  │ Scan_Engage ->       │◄────╲Engaged and ╱                │
        │  │ Scan_Queue           │      ╲VPS_Posture_╱               │
        │  └──────────────────────┘       ╲Ready   ╱ 5810            │
        │           5812│                  ╲─────╱                    │
        │               ▼                  False│                     │
        │  ┌──────────────────────┐            ▼                     │
        │  │ Scanner_Engaged = TRUE│          (A)                    (B)
        │  └──────────────────────┘
        │◄──────────5814
       (C)
```

FIG 31A

Ⓒ         Ⓐ         Ⓑ

**5800B**

Scanner_Ready and
VPS_Posture_Ready and
Scanner_All_Clear    **False**

5802

**True**

Calculate the Distance
From Vehicle to Route.

5804

Tracker_Engage - >
Tracker_Queue    **True**    Distance to Route <
On_Course_Distance

5808                 5806

Tracker_Engaged = TRUE

5810         **False**

Inform the Host that Vehicle is to far
from the Course to Begin Tracking

5812

VPS_Posture_Disengage - >
VPS_Posture_Queue

5814

Generator_Engaged = FALSE

5816

VPS_Posture_Ready = FALSE

5818

Scan_Disengage    Scan_Queue

5820

**FIG 31B**

Ⓒ                     Ⓓ

5800C

C

D

Scanner_Engaged = FALSE
— 5802

Scanner_Ready = FALSE
— 5804

Scanner_All_Clear = FALSE
— 5808

Auto-Permission = FALSE
(to force vehicle to be moved before AUTO)
— 5810

FIG 31C

5821 — End